(19) Europäisches Patentamt / European Patent Office / Office européen des brevets

(11) **EP 2 022 570 A1**

(12) **EUROPEAN PATENT APPLICATION**
published in accordance with Art. 153(4) EPC

(43) Date of publication:
**11.02.2009 Bulletin 2009/07**

(51) Int Cl.:
**B05C 5/00** (2006.01)  **G02B 5/20** (2006.01)

(21) Application number: **07743004.9**

(22) Date of filing: **09.05.2007**

(86) International application number:
**PCT/JP2007/059569**

(87) International publication number:
**WO 2007/132705 (22.11.2007 Gazette 2007/47)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.05.2006 JP 2006134428**

(71) Applicant: **Sharp Kabushiki Kaisha**
**Osaka-shi, Osaka 545-8522 (JP)**

(72) Inventors:
• **YOSHIOKA, Chiyoshi**
 **Nara-shi, Nara 631-0806 (JP)**
• **NAKAJIMA, Yoshinori**
 **Nara 631-0831 (JP)**
• **TAMURA, Toshihiro**
 **Nara 636-0302 (JP)**

(74) Representative: **Brown, Kenneth Richard et al**
**R.G.C. Jenkins & Co.**
**26 Caxton Street**
**London SW1H 0RJ (GB)**

(54) **LIQUID-DROP DISCHARGING AND DRAWING DEVICE**

(57)   A defect repairing apparatus (1), based on an ink-jet method, which can efficiently discharge droplets to desired parts scattered about on a large-area substrate, includes: droplet discharge units (3) for discharging droplets to the target substrate; a head gantry unit (4) for holding the droplet discharging units (3); a gantry sliding mechanism (5) for relatively moving the head gantry unit (4) and the target substrate; and a movement direction inversion section (6) for inverting a movement direction of the gantry sliding mechanism (5).

FIG.1

EP 2 022 570 A1

**Description**

TECHNICAL FIELD

The present invention relates to a droplet discharging and drawing apparatus arranged so that droplet discharge units held by a holding member which moves relative to a recording target discharge droplets to the recording target.

BACKGROUND ART

In recent years, an ink-jet technology is expected to be applied not only to a printer apparatus for forming an image on a paper medium, but also to a manufacturing apparatus. For example, Patent Document 1 discloses, as an apparatus for manufacturing a liquid crystal display, an organic EL display, a plasma display, an electron-releasing element, an electrophoretic display device, or the like, a manufacturing apparatus equipped with an ink-jet droplet discharge element. In order to improve the accuracy of position with which droplets land on a substrate, Patent Document 1 uses a substratum of the apparatus as a stone stationary platen having a stage for conveying the substrate in one direction and a carriage mechanism for moving an ink-jet head in a direction orthogonal to the direction of movement of the stage, the stage and the carriage mechanism being provided directly on the stone stationary platen.

Usually, a general-purpose ink-jet printer forms an image with use of a single ink-jet head unit having several ink-jet head elements mounted for each color to serve as elements for discharging droplets. Each of the ink-jet head elements has a width of 1/2 to 2 inches, and has nozzle holes placed at regular intervals of 150 to 300 nozzles per inch. As for a method for forming an image, an image has been formed on a recording paper sheet by passing the ink-head unit more than once in a direction orthogonal to the direction of conveyance of the recording paper sheet while feeding the recording paper sheet by a paper feeding roller.

Even in case where this ink-jet method is applied to a manufacturing apparatus, the manufacturing apparatus is identical in ink-jet head element to the general-purpose printer. Therefore, it is still the case that the column-wise size of a nozzle is not more than approximately 1 to 2 inches.

Meanwhile, a process for manufacturing a liquid crystal display, an organic EL display, a plasma display, an electron-releasing element, or an electrophoretic display device tends to bring down costs and shorten takt time by increasing yields with use of a large-area substrate. In order to manufacture a liquid crystal display, an organic EL display, a plasma display, an electron-releasing element, or an electrophoretic display device according to the ink-jet method, a manufacturing apparatus has been required which can process a large-area substrate whose side extends several meters.

An example of an ink-jet manufacturing apparatus capable of processing a large-area substrate at a high speed is a line-head manufacturing apparatus in which a plurality of ink-jet head elements are arrayed so as to form a line longer than the size of the substrate. In this line-head manufacturing apparatus, ink-jet elements each having a width of not more than 1 to 2 inches are arrayed so as to form a zigzag line as long as the size of the substrate. Assuming that the size of the substrate is several meters, it is necessary to array at least 100 to 200 heads. This line-head manufacturing apparatus can be said to be very effective in manufacturing a substrate, such as a color filter substrate, which requires droplets to be discharged across the substrate and which is regular in discharging place.

Further, as a part of a method for manufacturing a color filter substrate, an arrangement is known which, in case where a color filter substrate has defects in coloring, discharges color filter material only to the defects (Patent Document 2).

Patent Document 1: Japanese Unexamined Patent Application Publication No. 191462/2003 (Tokukai 2003-191462; published on July 8, 2003)

Patent Document 2: Japanese Unexamined Patent Application Publication No. 66218/2003 (Tokukai 2003-66218; published on March 5, 2003)

DISCLOSURE OF INVENTION

However, an attempt to repair the color filter substrate of Patent Document 2 by using the line-head system of Patent Document 1 is met with the following problems.

Using the line-head system as means for repairing defects (defective parts) scattered about on the color filter substrate not only requires the same amount of processing time as discharging droplets across the substrate, but also is likely to clog nozzles by causing most of the nozzles to be non-operating nozzles that do not discharge droplets. Further, all the nozzles require maintenance, which causes an increase in unnecessary waste liquid. Furthermore, the line-head system is very inefficient in equalizing the amount of discharge among the nozzles, because the line-head system makes it necessary to correct the amount of discharge from each of a total of several thousand nozzles only to discharge droplets onto the desired parts scattered about.

Further, the system, applied often to general-purpose printers, in which an array of ink-jet head units on the same gantry moves back and forth not only causes an increase in scanning distance for the ink-jet head units, but also is limited in scanning speed in terms of operational stability, thus making it impossible to shorten processing time.

In various fields of manufacturing as well as repair of color filters, there will be a demand for efficiently discharging droplets onto desired parts as well as across large-area substrates.

As described above, there has been desired to develop a device whose method is applicable to large-area substrates and which can efficiently discharge droplets onto plural desired parts scattered about. Further, though it is not essential, the device has been desired also to be capable of discharging droplets onto the entire surface of the substrate.

The present invention has been made in view of the foregoing problems, and it is an object of the present invention to provide a droplet discharging and drawing apparatus based on an ink-jet method which makes it possible to efficiently discharge droplets onto desired parts scattered about on a large-area substrate. Moreover, the droplet discharging and drawing apparatus is desirably applicable also to discharge of droplets onto a large-area substrate.

In order to solve the foregoing problems, a droplet discharging and drawing apparatus according to the present invention comprising: one or more droplet discharge units for discharging droplets to a recording target; a holding means for holding the droplet discharge units; a moving means for relatively moving the holding means and the recording target; and a movement direction inversion means for inverting a movement direction of the moving means.

According to the foregoing feature, the movement direction inversion means for inverting a movement direction of the moving means is provided, so that two discharge targets which are positioned close to each other and cannot be repaired by a single scanning operation of the moving means can be repaired by inverting the movement direction of the moving means.

The droplet discharging and drawing apparatus according to the present invention is arranged so that: the droplet discharge unit discharges droplets to a plurality of discharge targets scattered about on the recording target, and the moving means relatively moves the holding means in a main scanning direction with respect to the recording target at a constant velocity, and the droplet discharge unit is movable in a sub scanning direction intersecting with the main scanning direction, and the droplet discharge unit discharges droplets to the discharge targets in an order determined in accordance with (i) a time taken for the holding means to move in the main scanning direction and (ii) a time taken for the droplet discharge unit to move in the sub scanning direction while the droplet discharge unit moves from a first discharge target to a second discharge target out of the plurality of discharge targets.

According to the foregoing arrangement, the droplet discharging and drawing apparatus repairs defects based on a circular repairing algorithm for discharging droplets to the discharge targets in an order determined in accordance with (i) a time taken for the holding means to move in the main scanning direction and (ii) a time taken for the droplet discharge unit to move in the sub scanning direction while the droplet discharge unit moves from a first discharge target to a second discharge target out of the plurality of discharge targets. In this droplet discharging and drawing apparatus, it takes longer time to move in the sub scanning direction than to move in the main scanning direction, so that it is possible to repair two discharge targets which cannot be repaired by a single scanning operation.

It is preferable to arrange the droplet discharging and drawing apparatus according to the present invention so as to further comprise an inversion number determination means for determining an inversion number of the movement direction inversion means in accordance with positional data of the discharge targets.

According to the foregoing arrangement, positional data of the discharge targets is obtained in advance, so that it is possible to determine the inversion number of the movement direction inversion means in accordance with the thus obtained positional data.

It is preferable to arrange the droplet discharging and drawing apparatus according to the present invention so that the droplet discharge units are provided in plurality on the holding means so as to be in the sub scanning direction, said droplet discharging and drawing apparatus further comprising an assignment determination means for assigning the plurality of discharge targets to the droplet discharge units, wherein the inversion number determination means includes: an individual calculation means for calculating the inversion number for each droplet discharge unit in accordance with positional data of the discharge targets; and a final determination means for determining, as the inversion number, a value equal to or larger than a maximum value out of inversion numbers calculated for the droplet discharge units respectively.

According to the foregoing arrangement, the droplet discharge units are provided in plurality on the holding means, and the droplet discharge units are different from each other in a necessary inversion number, but these droplet discharge units integrally move in the main scanning direction, so that droplets can be discharged to all the discharge targets by determining, as the inversion number, a value equal to or larger than a maximum value out of inversion numbers calculated for the droplet discharge units respectively.

It is preferable to arrange the droplet discharging and drawing apparatus according to the present invention so that a movement amount of the moving means partially varies every time the inversion operation is performed.

According to the foregoing arrangement, the moving means is moved in accordance with a state in which discharge targets are scattered about on the recording target so as to efficiently discharge droplets, thereby shortening the takt time.

It is preferable to arrange the droplet discharging and drawing apparatus according to the present invention so that the movement amount of the moving means decreases every time the inversion operation is performed.

According to the foregoing arrangement, the number of unrepaired defects decreases as the holding means repeatedly scans in the main scanning direction. Thus, it is not necessary to cause the holding means to scan from one end to the other end of the recording target. As a result, the takt time can be shortened 40% by scanning only a necessary scanning region recognized by mapping carried out in advance.

Another droplet discharging and drawing apparatus according to the present invention comprising: N (N is an integer) number of droplet discharge units which are respectively movable; and a moving means for relatively moving the N number of droplet discharge units and a substrate, wherein a movement direction of the moving means is inverted so that the N number of droplet discharge units discharge droplets to (N+1) or larger number of defects on the substrate.

According to the foregoing feature, it is possible to repair defects exceeding the number of the droplet discharge units by inverting the movement direction of the moving means.

A still another droplet discharging and drawing apparatus according to the present invention comprising: a droplet discharge unit for discharging droplets to a plurality of discharge targets on a medium; a holding means for holding the droplet discharge units; and a moving means for relatively moving the holding means in a main scanning direction with respect to the medium, wherein the droplet discharge unit is movable in a sub scanning direction intersecting with the main scanning direction, and the droplet discharge unit discharges droplets to the discharge targets while the movement in the sub scanning direction stops.

According to the foregoing feature, each droplet discharge unit of the droplet discharging and drawing apparatus for repairing defects on the medium discharges droplets while the movement in the sub scanning direction stops, so that droplets can be stably discharged.

As described above, a droplet discharging and drawing apparatus according to the present invention comprises the movement direction inversion means for inverting a movement direction of the moving means, so that two discharge targets which are positioned close to each other and cannot be repaired by a single scanning operation of the moving means can be repaired by inverting the movement direction of the moving means. This makes it possible to exhibit such effect that droplets can be efficiently discharged to desired parts scattered about on a large-area substrate.

As described above, another droplet discharging and drawing apparatus according to the present invention is arranged as follows. The movement direction of the moving means is inverted so that the N number of droplet discharge units discharge droplets to (N+1) or larger number of defects. As a result, it is possible to repair defects exceeding the number of the droplet discharge units. This makes it possible to exhibit such effect that droplets can be efficiently discharged to desired parts scattered about on a large-area substrate.

As described above, still another droplet discharging and drawing apparatus according to the present invention is arranged so that the droplet discharge unit discharges droplets to the discharge targets while the movement in the sub scanning direction stops. As a result, droplets can be stably discharged. This makes it possible to exhibit such effect that droplets can be efficiently discharged to desired parts scattered about on a large-area substrate.

BRIEF DESCRIPTION OF DRAWINGS

Fig. 1 is a perspective view of the appearance of a defect repairing apparatus according to Embodiment 1.

Fig. 2 is a schematic cross-sectional view of the defect repairing apparatus.

Fig. 3 is a schematic cross-sectional view for explaining the operation of a head gantry unit and a substrate-mounting plate of the defect repairing apparatus.

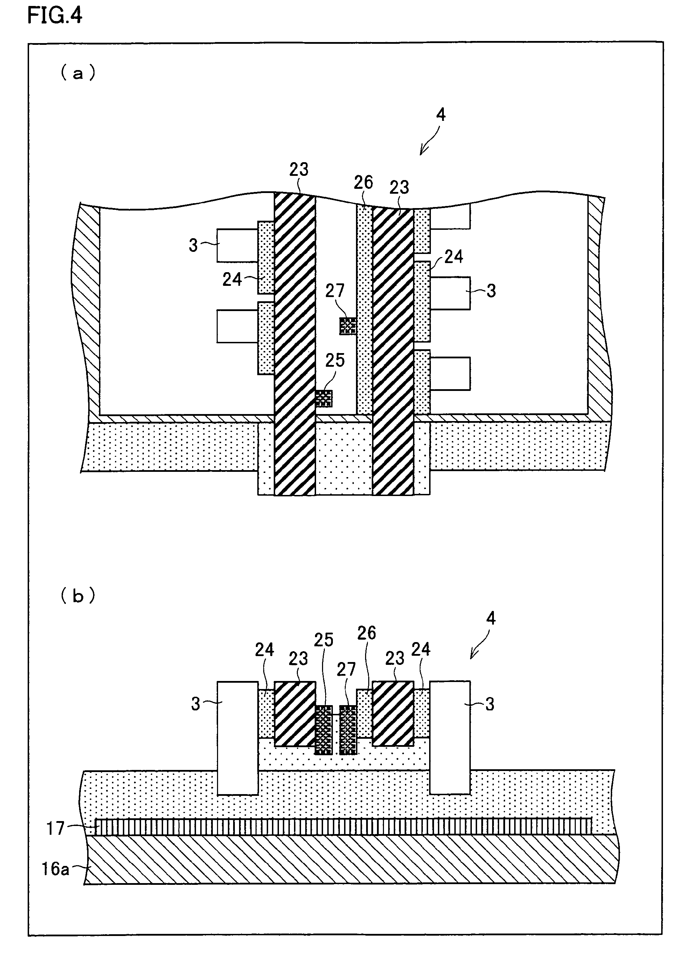

(a) and (b) of Fig. 4 are a plan view and a front view, respectively, of an arrangement of a main part of the head gantry unit of the defect repairing apparatus.

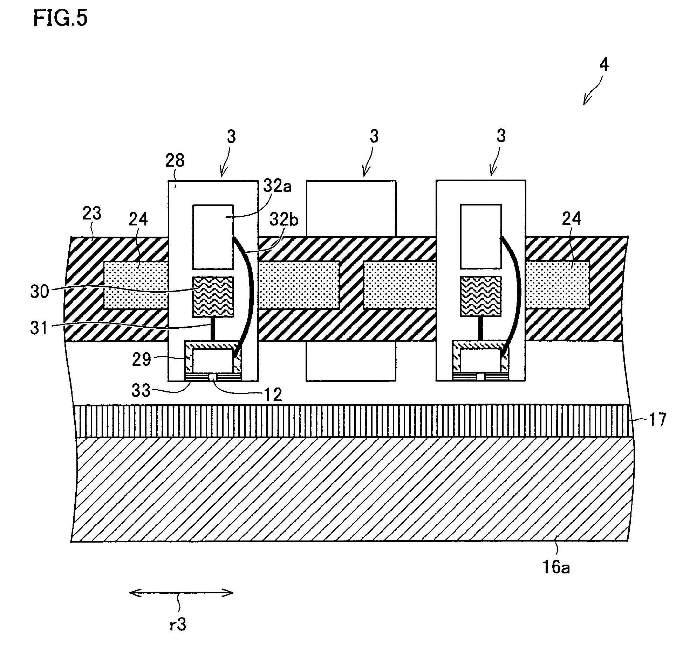

Fig. 5 is a side view of an arrangement of a main part of droplet discharge units of the head gantry unit.

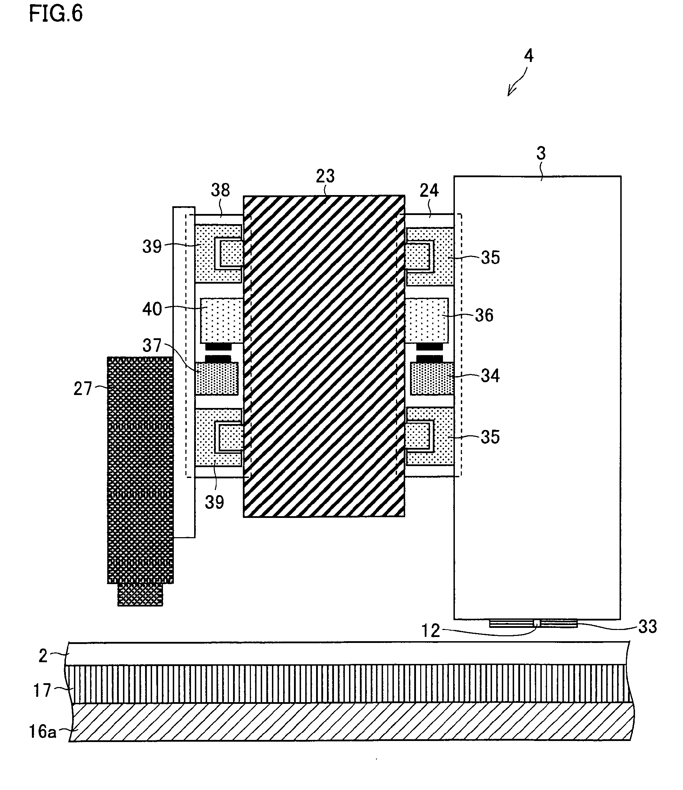

Fig. 6 is a front view of an arrangement of a main part of a discharge-unit sliding mechanism of the head gantry unit.

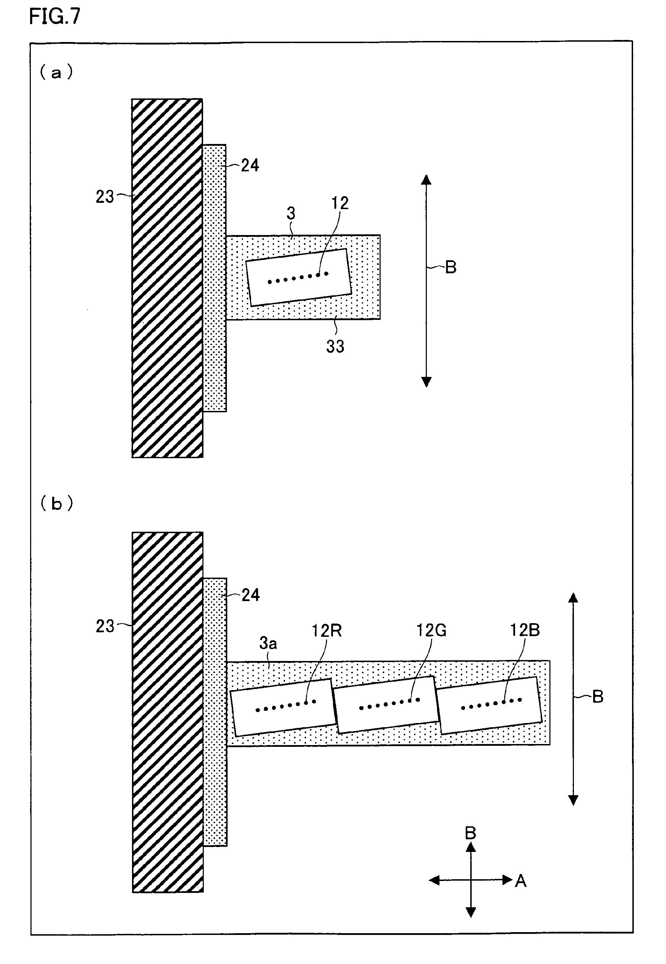

(a) of Fig. 7 is a bottom view of an arrangement of a main part of a droplet discharge unit, and (b) of Fig. 7 is a bottom view of an arrangement of a main part of another droplet discharge unit.

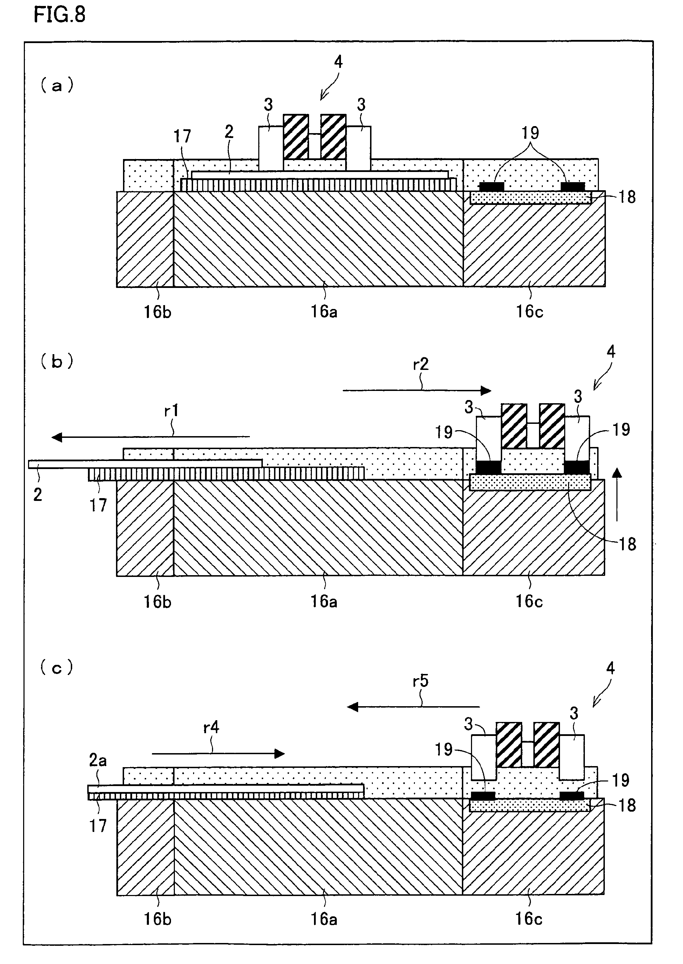

(a) through (c) of Fig. 8 are schematic cross-sectional views for explaining the operation of the head gantry unit and the substrate-mounting plate. (a) of Fig. 8 illustrates a state in which a target substrate has been processed. (b) of Fig. 8 illustrates a state in which the target substrate is being passed. (c) of Fig. 8 illustrates a state in which a next target substrate is being received.

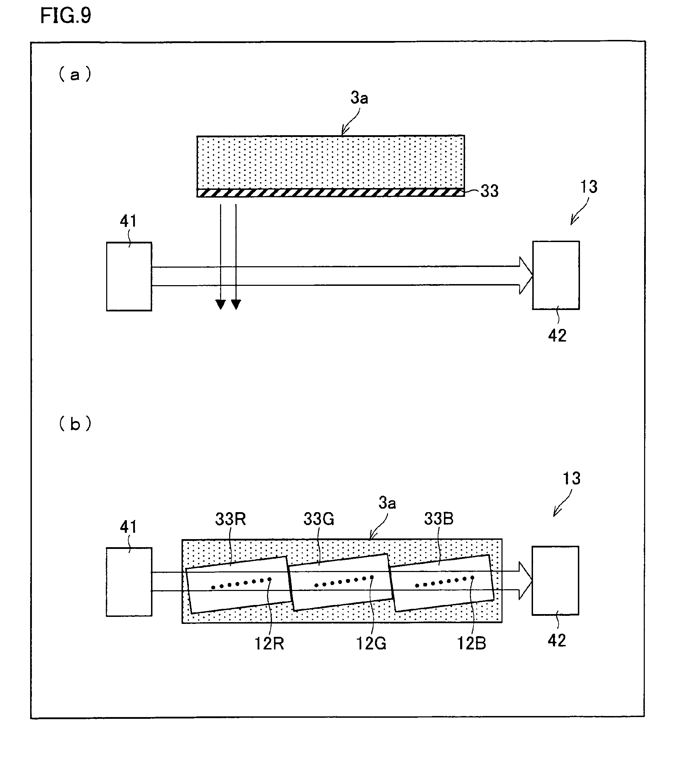

(a) and (b) of Fig. 9 are a front view and a bottom view, respectively, of an arrangement of a non-discharge detector of a maintenance mechanism of the defect repairing apparatus.

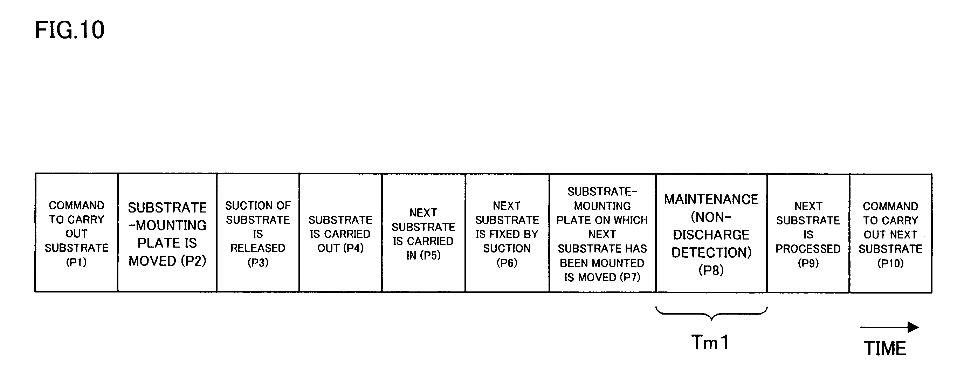

Fig. 10 is a diagram for explaining non-discharge detection of a conventional defect repairing apparatus and carrying in/out of substrates in terms of timings thereof.

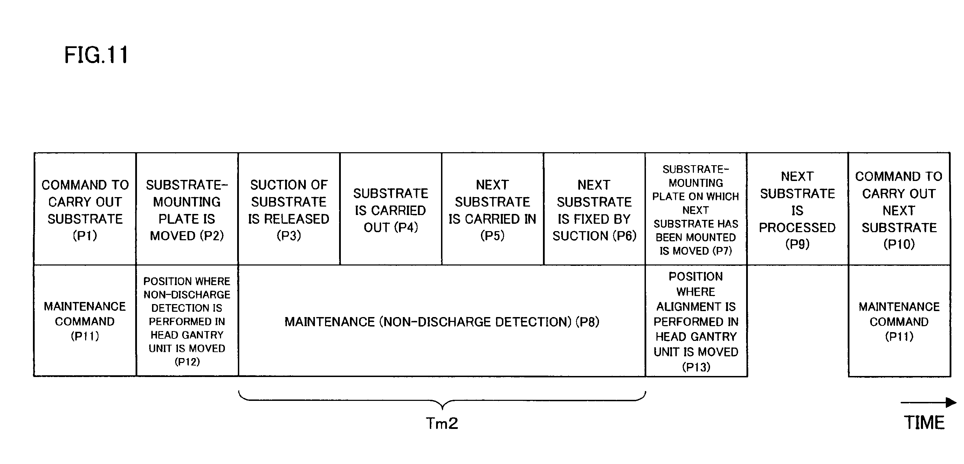

Fig. 11 is a diagram for explaining non-discharge detection of the foregoing defect repairing apparatus and carrying in/out of substrates in terms of timings thereof.

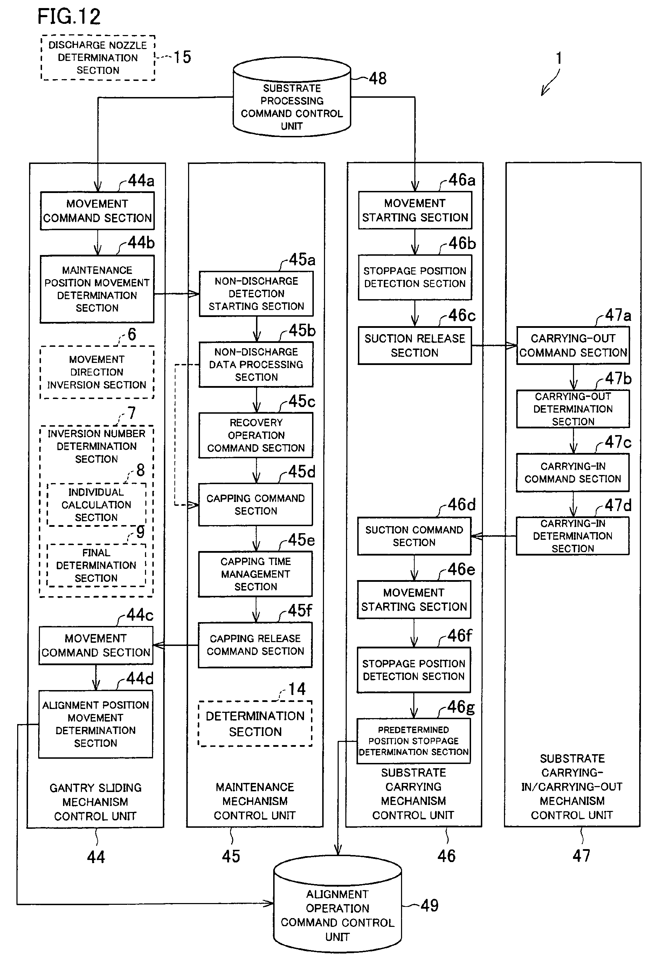

Fig. 12 is a block diagram for explaining a system arrangement of the defect repairing apparatus.

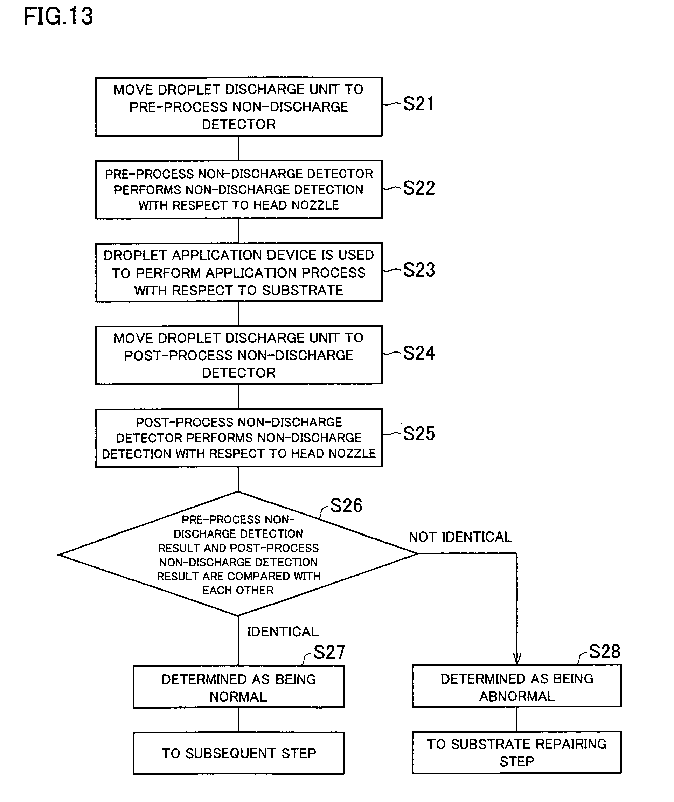

Fig. 13 is a flowchart schematically illustrating a procedure of non-discharge detection of the droplet discharge unit of the head gantry unit.

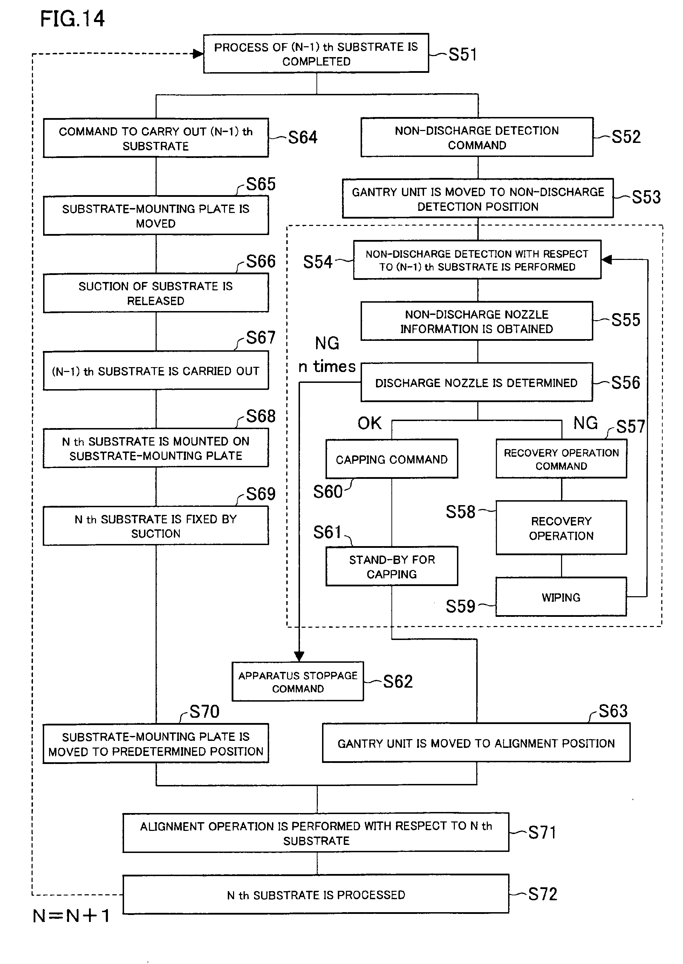

Fig. 14 is a flowchart illustrating a detail procedure of non-discharge detection of the droplet discharge unit of the head gantry unit.

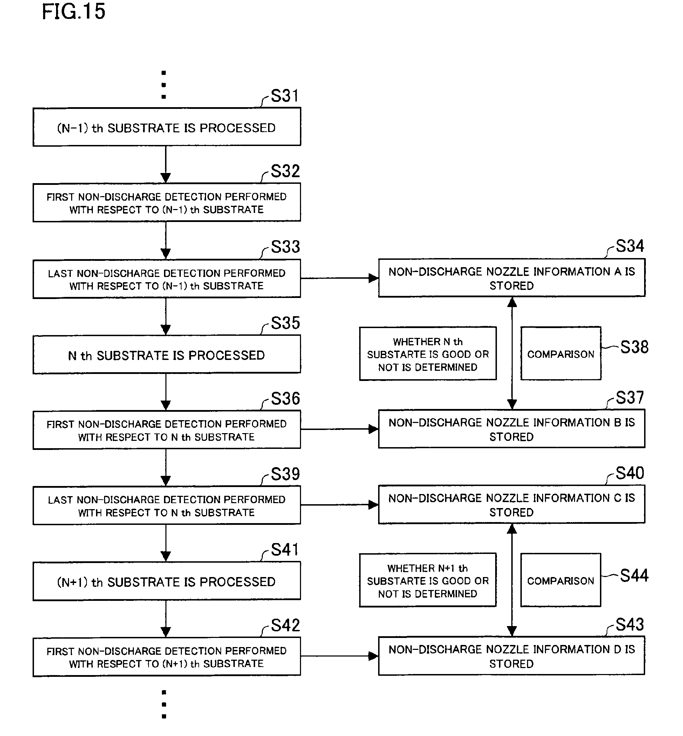

Fig. 15 is a flowchart illustrating a detail procedure of the maintenance operation for the droplet discharge unit of the head gantry unit and a detail procedure of carrying in/out of the substrates.

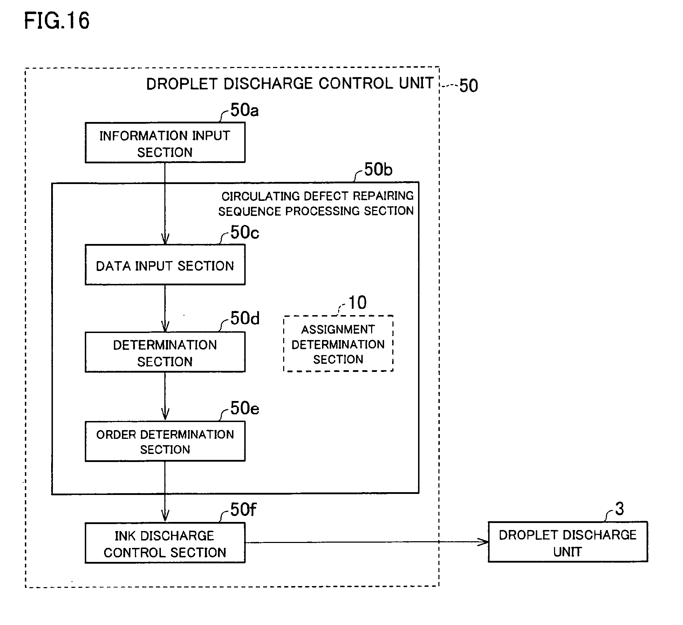

Fig. 16 is a block diagram for explaining a droplet discharge control unit of the defect repairing apparatus.

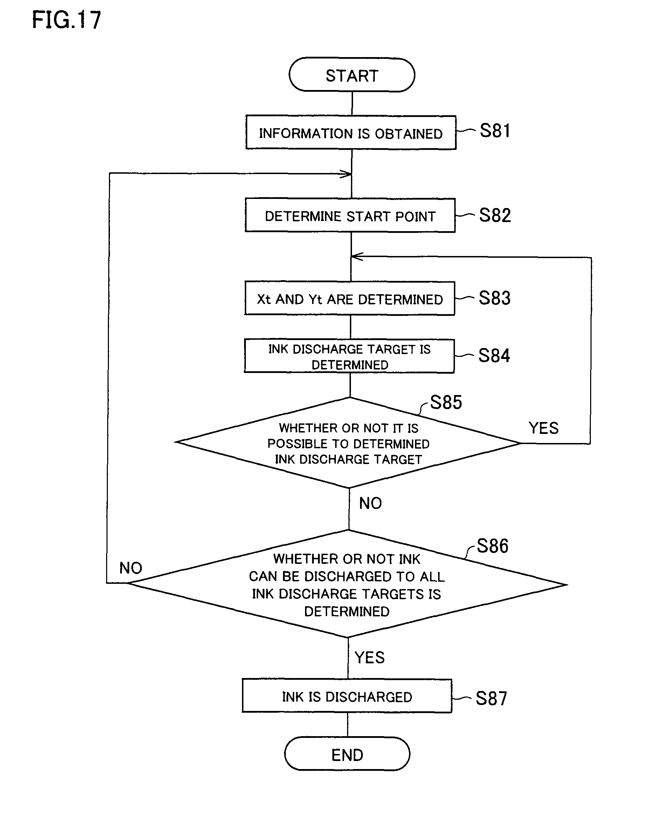

Fig. 17 is a flowchart for explaining operation of the droplet discharge control unit.

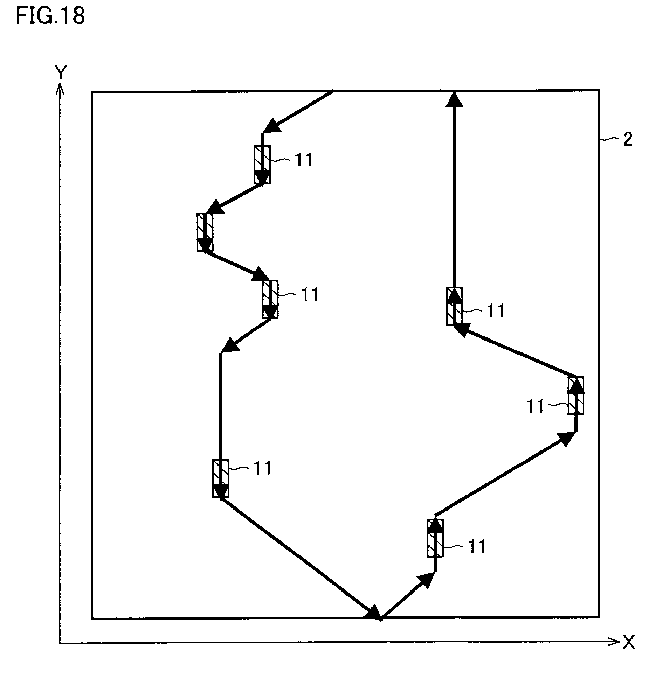

Fig. 18 is a schematic illustrating a route in which ink is discharged by a droplet discharge unit and an ink discharge control method of the present embodiment.

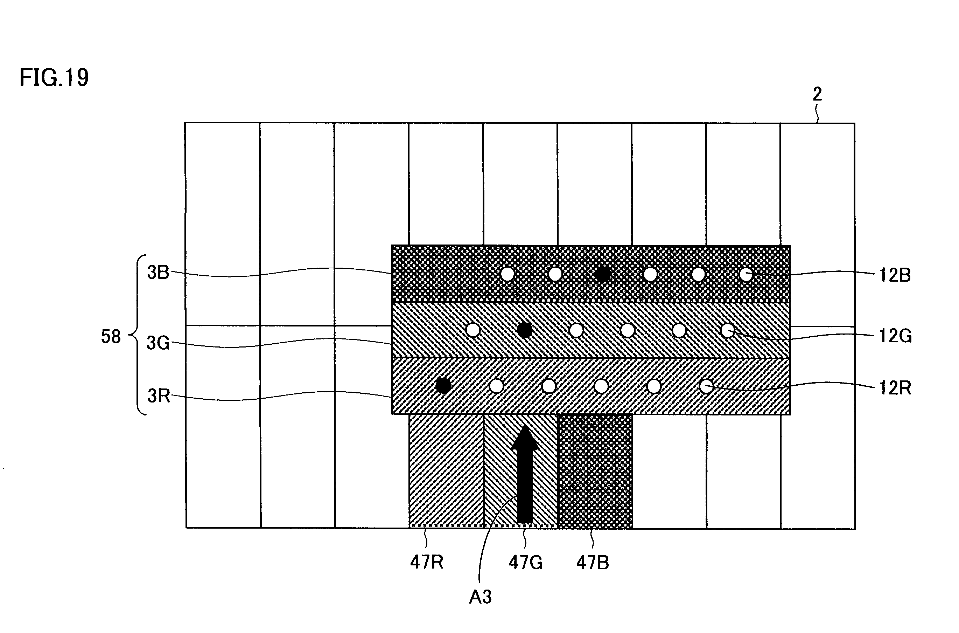

Fig. 19 is a diagram illustrating a state in which the droplet discharge units of the present embodiment apply droplets onto defective parts.

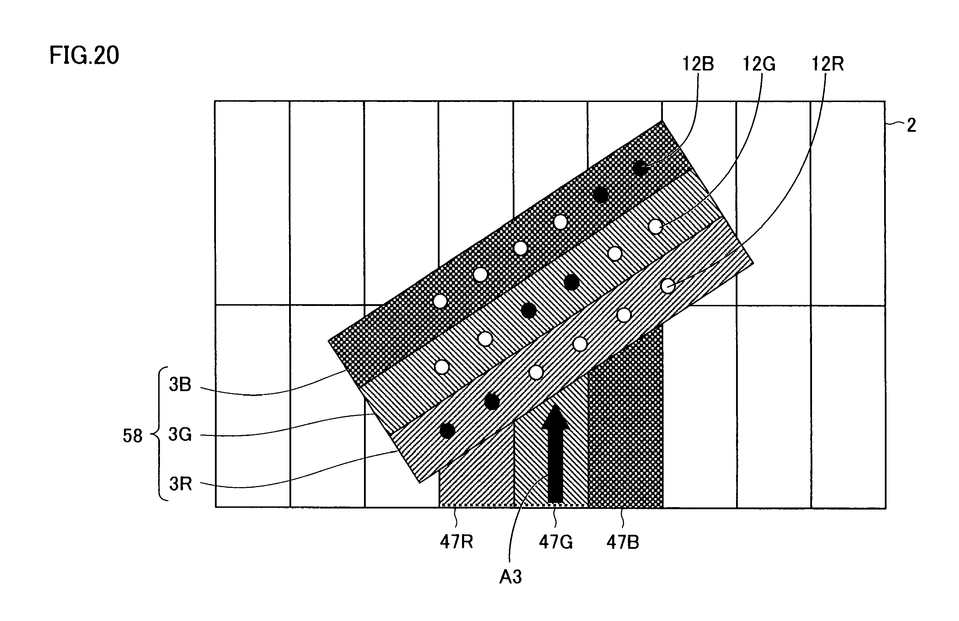

Fig. 20 is a diagram illustrating another state in which the droplet discharge units of the present embodiment apply droplets onto defective parts.

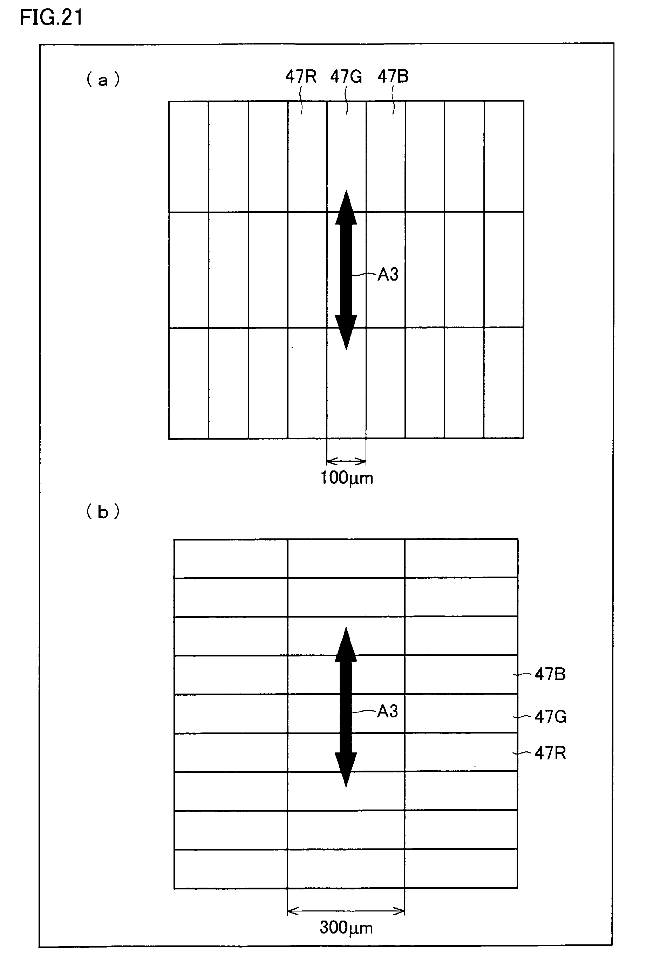

(a) and (b) of Fig. 21 are diagrams each illustrating directions of movement of the droplet discharge unit of the present embodiment with respect to pixels. (a) of Fig. 21 illustrates directions of the movement as seen from above. (b) of Fig. 21 illustrates other directions of the movement as seen from above.

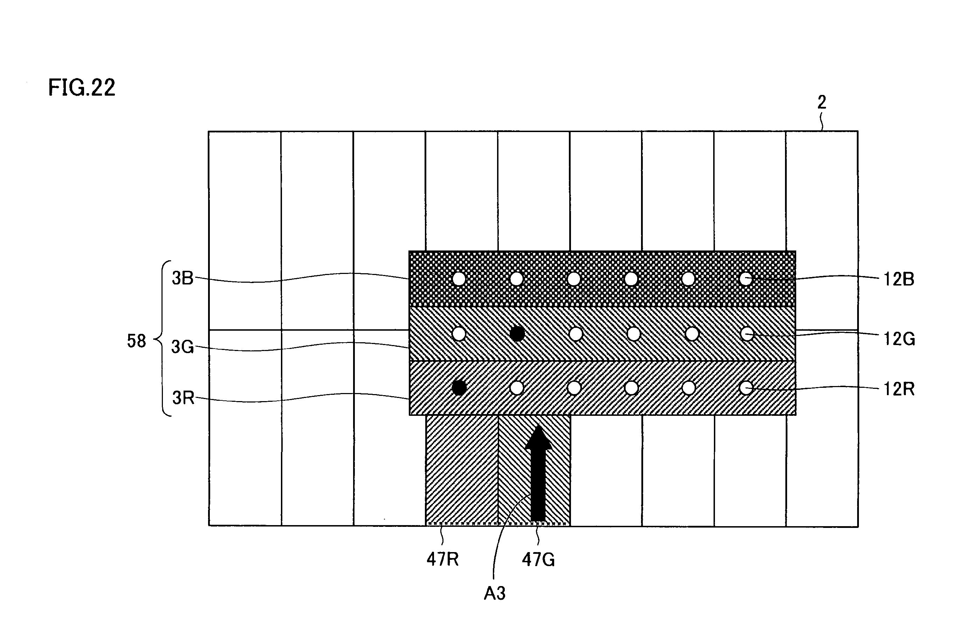

Fig. 22 is a plan view illustrating an ink discharge section for repairing two defective pixels adjacent to each other.

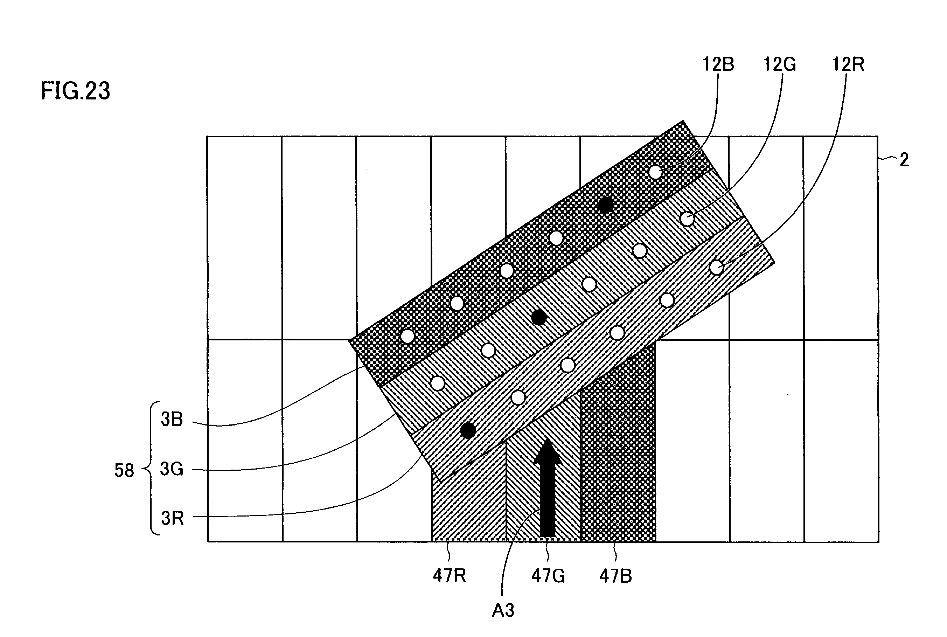

Fig. 23 is a plan view illustrating an ink discharge section for repairing three defective pixels adjacent to one another.

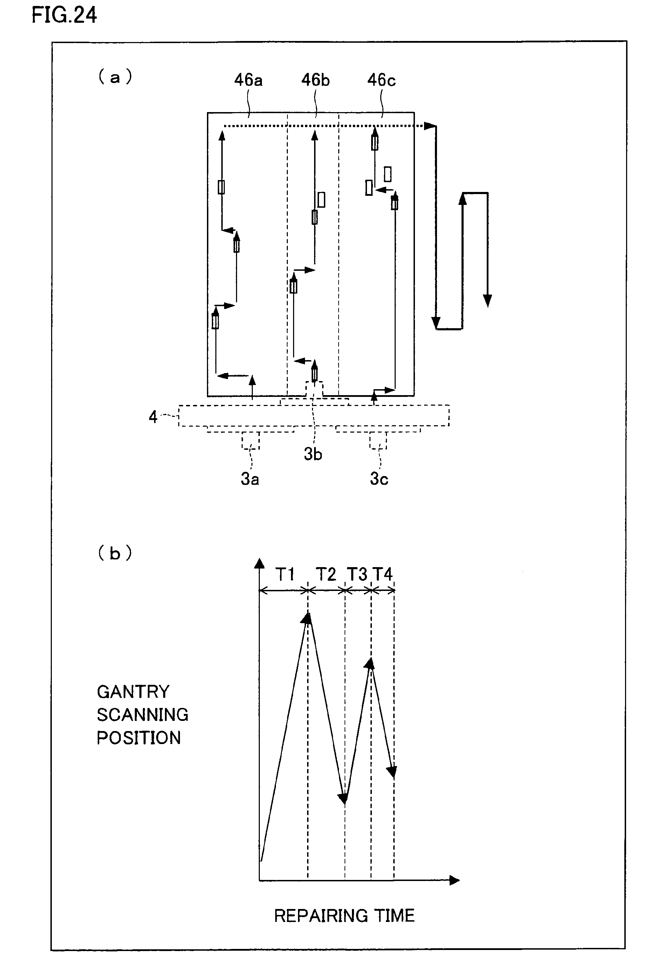

(a) and (b) of Fig. 24 explain an inversion operation of the droplet discharge units of the head gantry unit. (a) of Fig. 24 illustrates the inversion operation as seen from above. (b) of Fig. 24 is a graph for explaining the inversion operation.

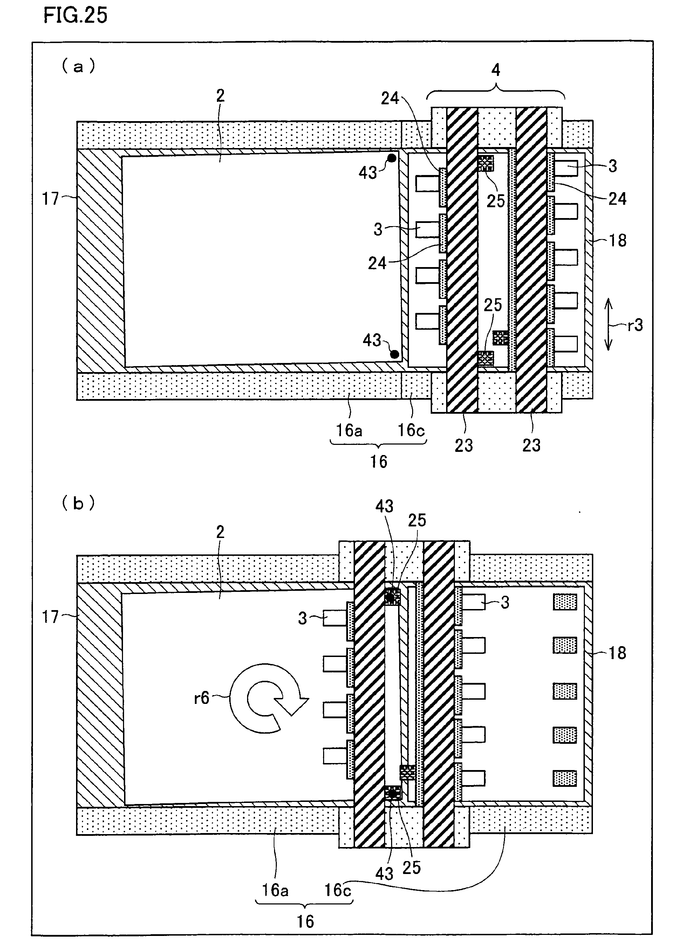

(a) and (b) of Fig. 25 are diagrams for explaining an alignment operation of the defect repairing apparatus. (a) and (b) of Fig. 25 illustrate the alignment operation as seen from above.

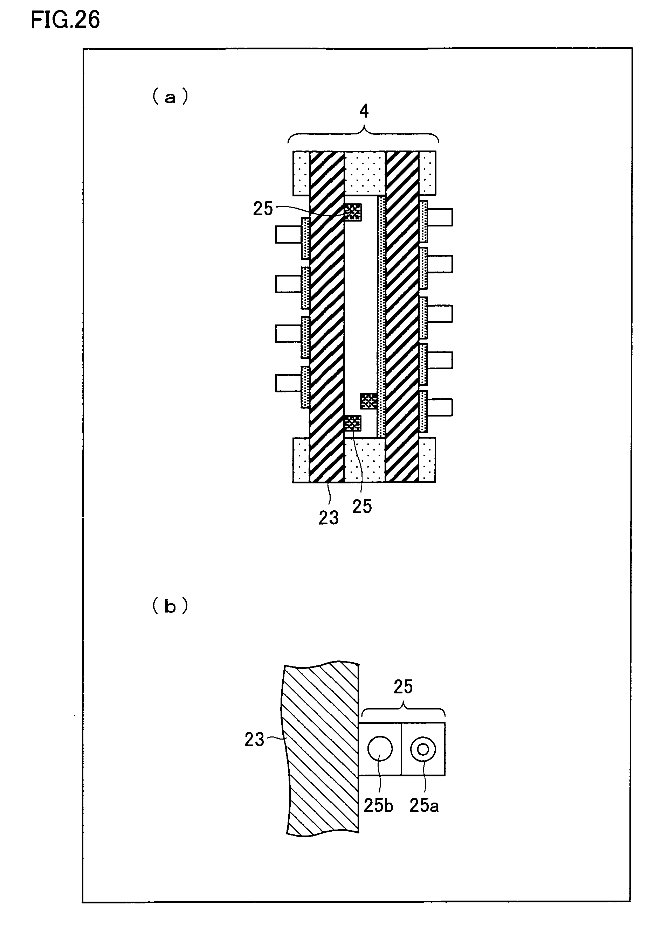

(a) and (b) of Fig. 26 are plan views of an arrangement of alignment cameras of the head gantry unit. (a) of Fig. 26 illustrates a main part thereof as seen from above. (b) of Fig. 26 is an enlarged view of the main part as seen from above.

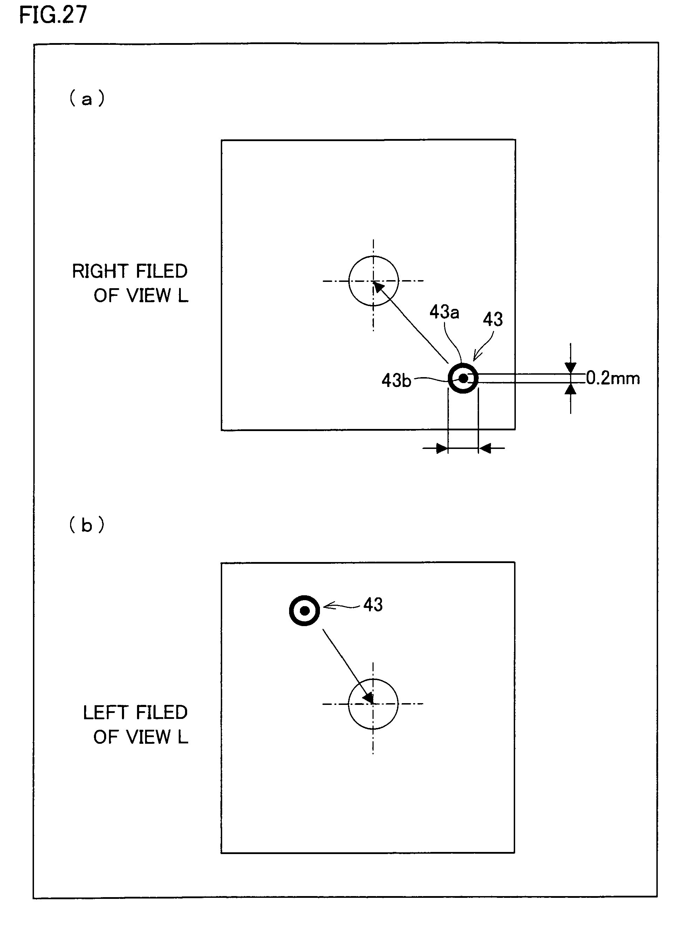

(a) and (b) of Fig. 27 are diagrams for explaining the alignment operation of the defect repairing apparatus. (a) and (b) of Fig. 27 illustrate the alignment operation as seen from above.

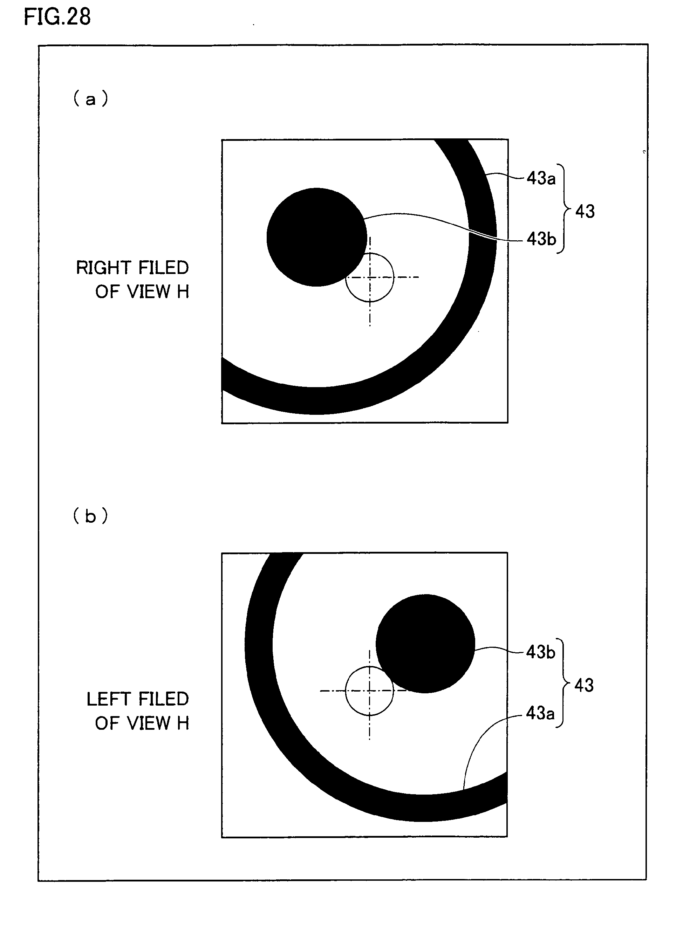

(a) and (b) of Fig. 28 are diagrams for explaining the alignment operation of the defect repairing apparatus. (a) and (b) of Figs. 28 illustrate the alignment operation as seen from above.

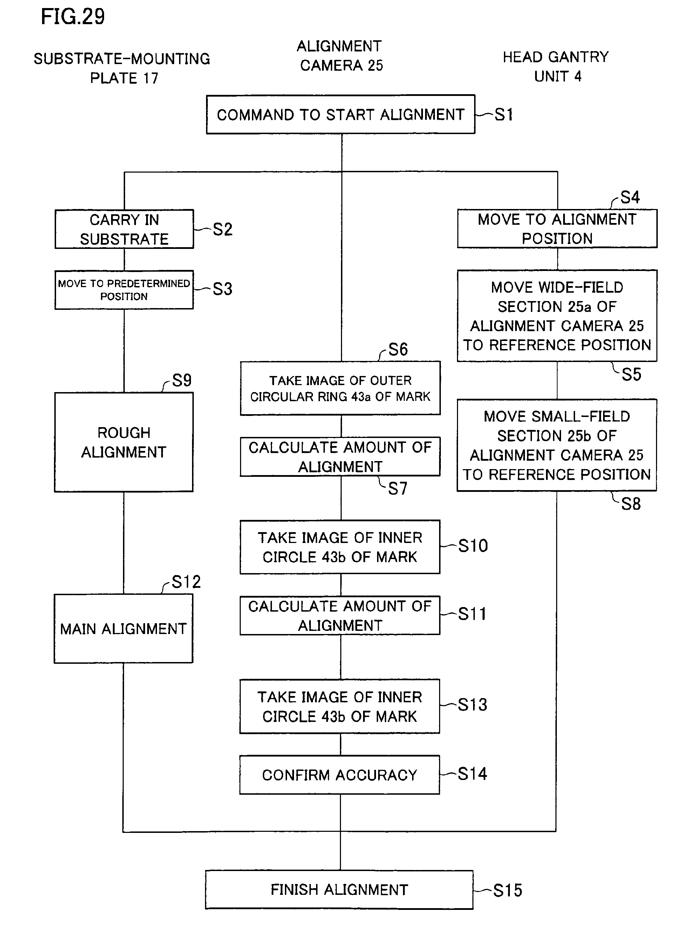

Fig. 29 is a flowchart for explaining the alignment operation of the defect repairing apparatus.

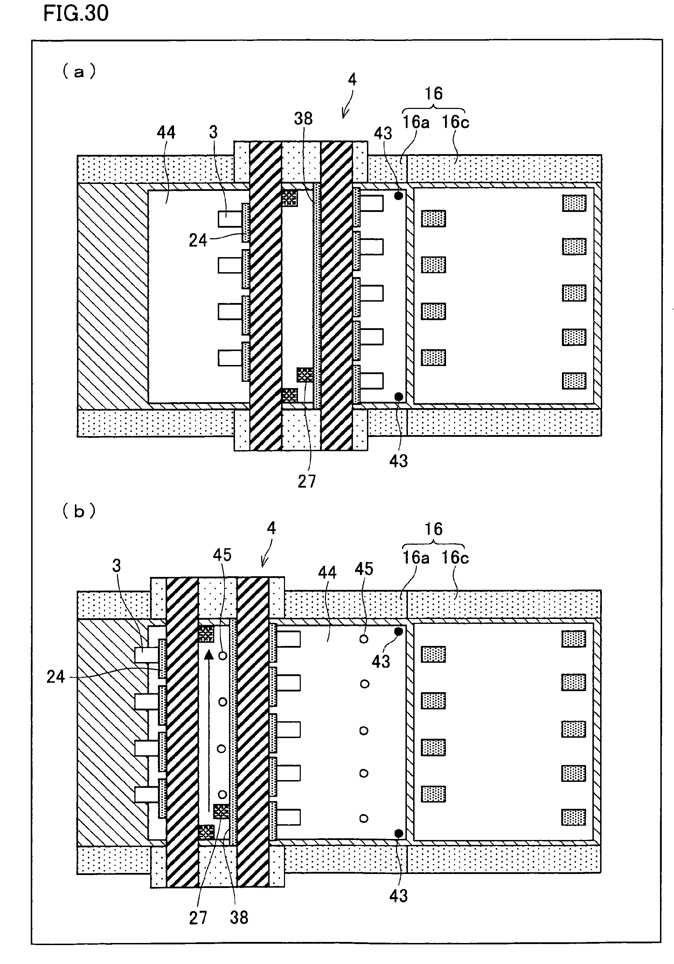

(a) and (b) of Fig. 30 are plan views for explaining an operation in which an observation camera unit of the defect repairing apparatus finds positions with which droplets land. (a) and (b) of Fig. 30 illustrate how the observation camera finds the position as seen from above.

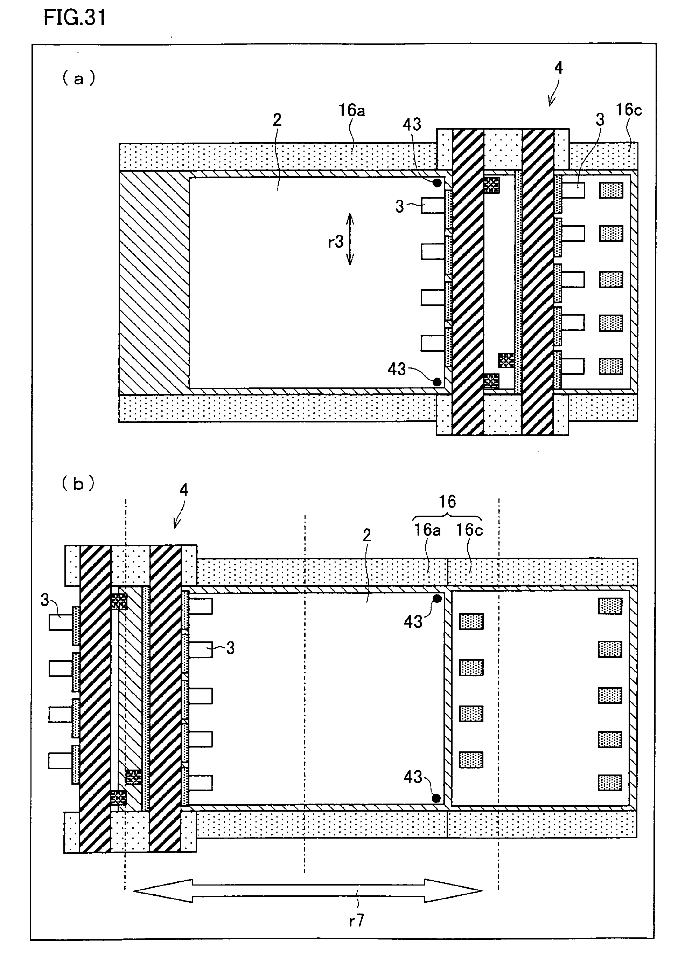

(a) and (b) of Fig. 31 are plan views for explaining a back-and-forth motion of the head gantry unit of the defect repairing apparatus. (a) and (b) of Fig. 31 illustrate the back-and-forth motion as seen from above.

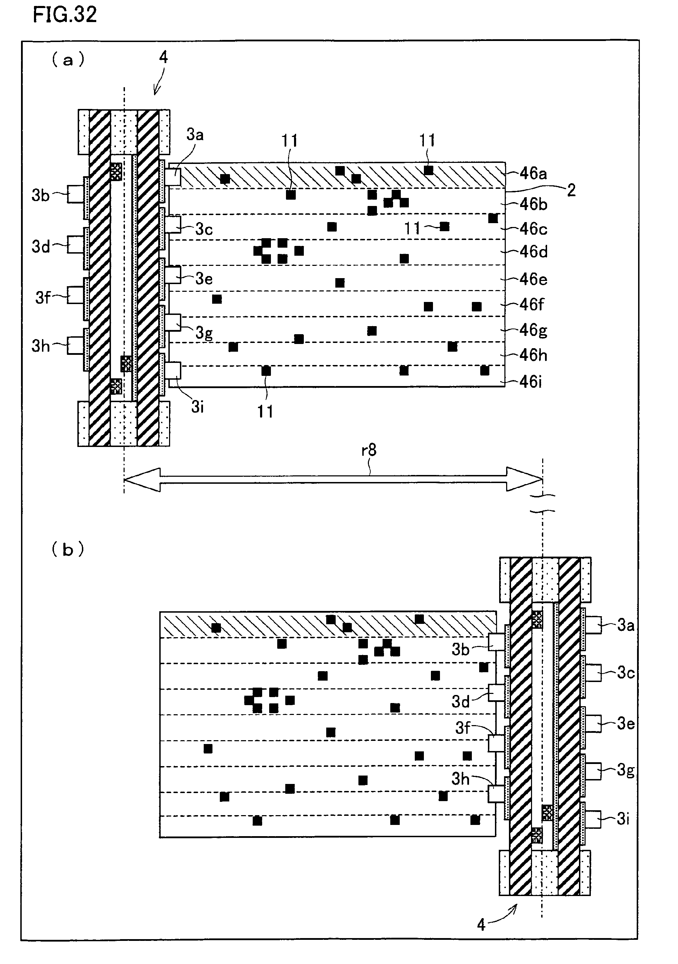

(a) and (b) of Fig. 32 are plan views for explaining an operation of the head gantry unit with respect to a target substrate. (a) and (b) of Fig. 32 illustrate the operation as seen from above.

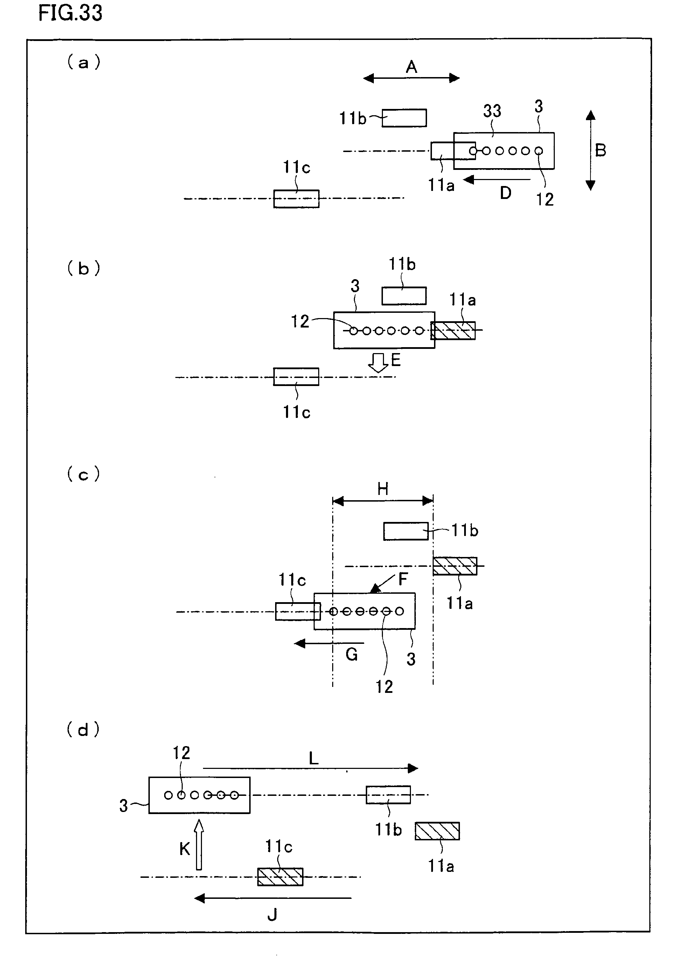

(a) through (d) of Fig. 33 are schematic plan views for explaining an operation of a droplet discharge unit with respect to defective parts. (a) through (d) of Fig. 33 schematically illustrate the discharging operation as seen from above.

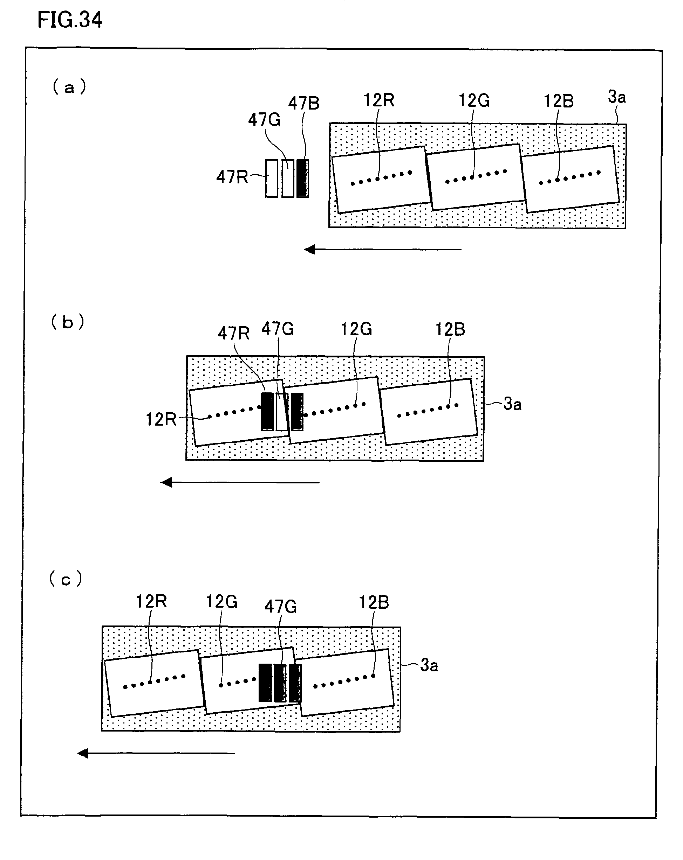

(a) through (c) of Fig. 34 are schematic plan views showing a case where a droplet discharge unit that drops three types of droplet material performs a discharging operation by moving in a direction orthogonal to longer sides of pixels. (a) through (c) of Fig. 34 illustrate the discharging operation as seen from above.

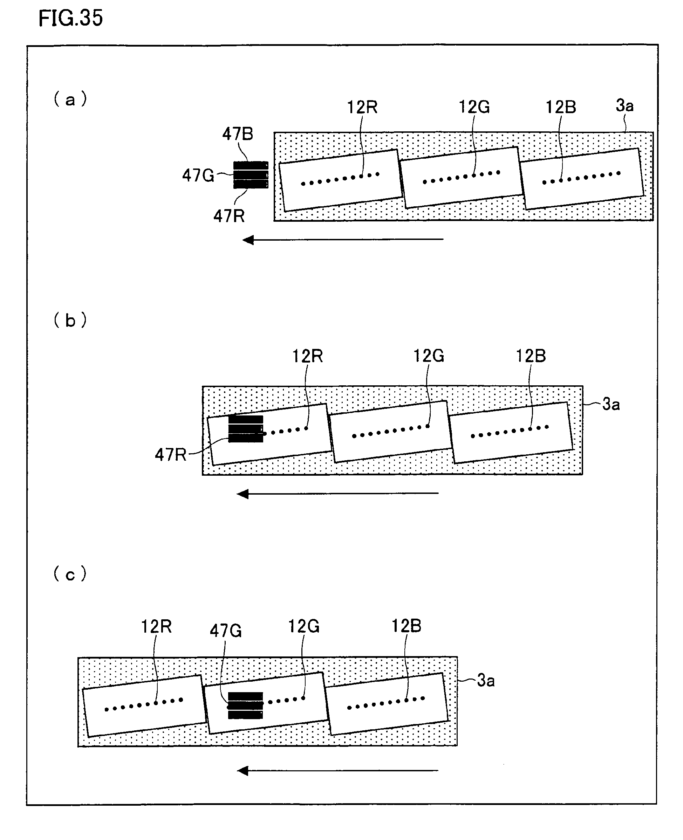

(a) through (c) of Fig. 35 are schematic plan views showing a case where a droplet discharge unit that drops three types of droplet material performs a discharging operation by moving in a direction parallel to longer sides of pixels. (a) through (c) of Fig. 35 illustrate the discharging operation as seen from above.

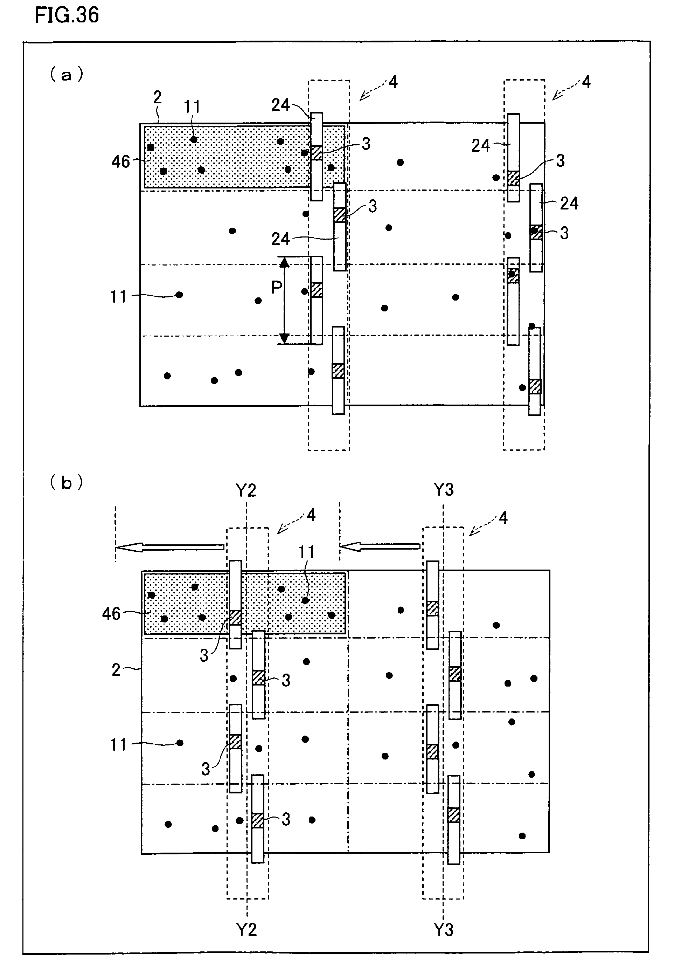

(a) and (b) of Fig. 36 are plan views for explaining a head gantry unit of a defect repairing apparatus according to Embodiment 2. (a) of Fig. 36 illustrates an arrangement thereof as seen from above. (b) of Fig. 36 illustrates the operation thereof.

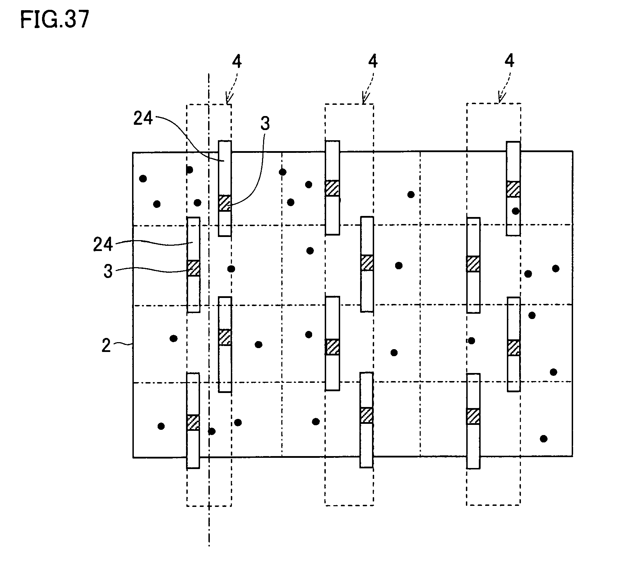

Fig. 37 is a plan view of another arrangement of the head gantry unit of the defect repairing apparatus according to Embodiment 2.

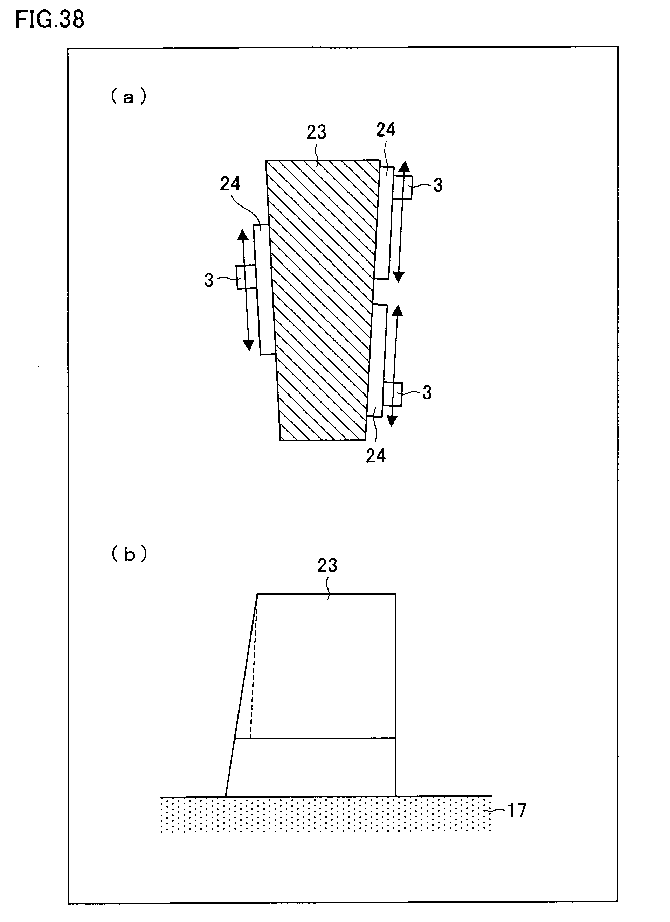

(a) and (b) of Fig. 38 are plan views for explaining still another arrangement of the head gantry unit of the defect repairing apparatus according to Embodiment 2. (a) of Fig. 38 illustrates the arrangement as seen from above. (b) of Fig. 38 is a side view of the arrangement.

[Reference Numerals]

| | |
|---|---|
| 1 | Defect repairing apparatus (droplet discharging and drawing apparatus) |
| 2 | Target substrate (recording target) |
| 3, 3R, 3G, 3B | Droplet discharge unit |
| 2a to 3i | Droplet discharge unit |
| 4 | Head gantry unit (holding means) |
| 5 | Gantry sliding mechanism (moving means) |
| 6 | Movement direction inversion means (movement direction inversion section) |
| 7 | Inversion number determination means (inversion number determination section) |
| 8 | Individual calculation means (Individual calculation section) |
| 9 | Final determination means (final determination section) |
| 10 | Assignment determination means (assignment determination section) |
| 11 | Defect (discharge target) |
| 12 | Nozzle hole |
| 13 | Non-discharge detector |
| 14 | Determination section |
| 15 | Discharge nozzle determination section |
| 16 | Substratum |
| 16a | Main stage |
| 16b, 16c | Sub-stage |
| 17 | Substrate-mounting plate |
| 18 | Maintenance mechanism |
| 19 | Cap member |
| 20a, 20b, 20c | Gantry guide |
| 21 | Linear scale |
| 22 | Floating sliding mechanism |
| 23 | Gantry |
| 24 | Discharge-unit sliding mechanism |
| 25 | Alignment camera |
| 26 | Camera sliding mechanism |
| 27 | Observation camera unit |
| 28 | Housing |
| 29 | Discharge element |
| 30 | Drive control circuit |
| 31 | Cable |
| 32a | Ink tank |
| 32b | Ink tube |
| 33 | Nozzle plate |
| 34 | Linear driving mechanism |

| 35 | LM guide |
|---|---|
| 36 | Gantry linear scale |
| 37 | Linear driving mechanism |
| 38 | Camera sliding mechanism |
| 39 | LM guide |
| 40 | Camera liner scale |
| 41 | Laser-emitting element |
| 42 | Laser-receiving element |
| 43 | Alignment mark |
| 43a | Outer circular ring |
| 43b | Inner circle |
| 44 | Dummy substrate |
| 45 | Droplet landing position |
| 46 | Region |
| 47R, 47G, 47B | Pixel |

BEST MODE FOR CARRYING OUT THE INVENTION

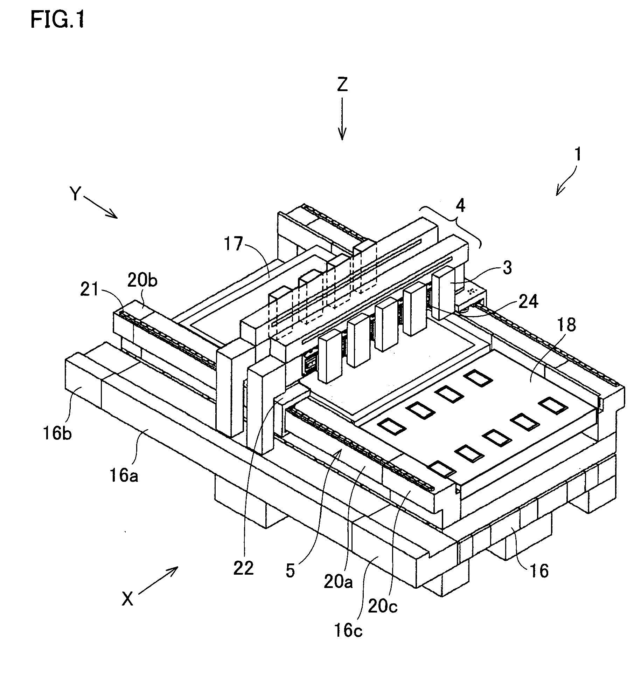

One embodiment of the present invention is described below with reference to Figs. 1 through 38.

(Embodiment 1)

<Description of the Arrangement of an Apparatus as a Whole>

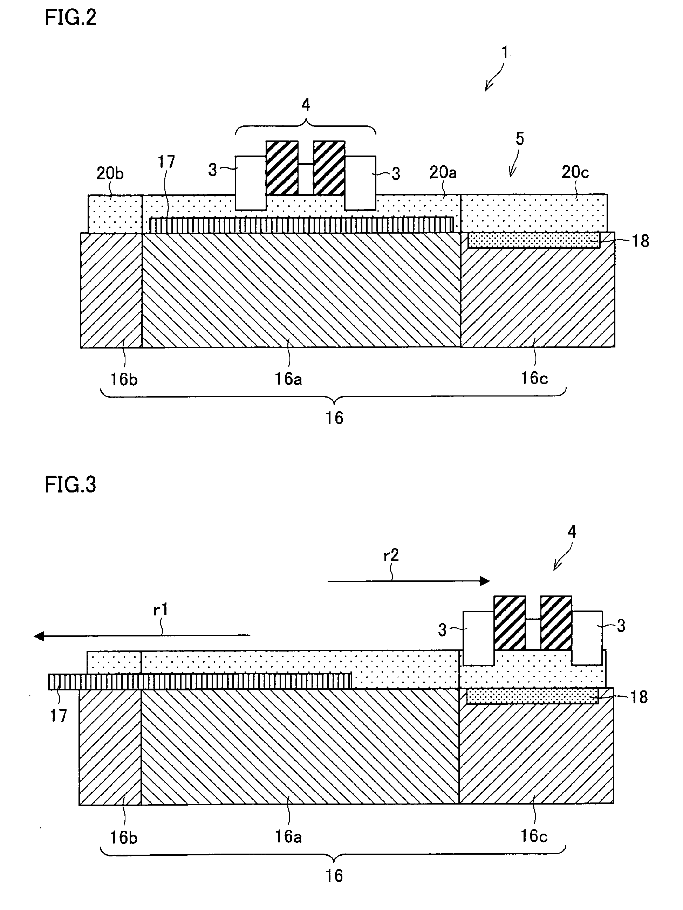

Fig. 1 is a perspective view of the appearance of a defect repairing apparatus (droplet discharging and drawing apparatus) 1 according to Embodiment 1. Fig. 2 is a schematic cross-sectional view of the defect repairing apparatus 1.

The defect repairing 1 includes a substratum 16. The defect repairing 1 is provided with: a substrate-mounting plate 17, mounted on the substratum 16, which moves at the time of carrying in and carrying out a substrate; and a head gantry unit 4 extending transversely above the substrate-mounting plate 17 without making contact with the plate. The head gantry unit 4 is arranged to be capable of moving back and forth in one direction (i.e., in a direction parallel to Direction Y of Fig. 1) by a gantry sliding mechanism 5 linked to the substratum 16.

Mounted on side surfaces of the head gantry unit 4 are a plurality of droplet discharge units 3. The droplet discharge units 3 are respectively mounted on discharge-unit sliding mechanisms 24 capable of moving the droplet discharge units 3 in a direction (i.e., in a direction parallel to Direction X of Fig. 1) different from the direction of movement of the head gantry unit 4 (i.e., from a direction parallel to Direction Y of Fig. 1), respectively. The droplet discharge units 3, mounted on the discharge-unit sliding mechanisms 24, can move in a direction (i.e., in a direction parallel to Direction X of Fig. 1) different from the direction of movement of the head gantry unit 4 within the limits of regions on the discharge-unit sliding mechanisms 24 where the droplet discharge units 3 are allowed to move, respectively.

The number of droplet discharge units 3 mounted on the side surfaces of the head gantry unit 4 is a plural number (nine in Fig. 1), and the droplet discharge units 3 have their respective discharge-unit sliding mechanisms 24. Moreover, the plurality of droplet discharge units 3 move on their respective discharge-unit sliding mechanisms 24 each independently in a direction parallel to Direction X of Fig. 1 in accordance with a control command from the defect repairing apparatus 1.

Further, each of the droplet discharge units 3 has a head discharge surface. The head discharge surface is substantially parallel to the substrate-mounting plate 17, and is formed with holes through which droplets are discharged. In accordance with a control command from the defect repairing apparatus 1, the droplet discharge unit 3 drops droplets from the head discharge surface onto a target substrate mounted on the substrate-mounting plate 17.

Provided on the substratum 16 of the apparatus in addition to the substrate-mounting plate 17 is a maintenance mechanism 18 having a mechanism for capping the discharge surface of the droplet discharge unit 3 when the droplet discharge unit 3 is not being used, a mechanism for detecting a defective discharge outlet in the droplet discharge unit 3, a mechanism for repairing the defective discharge outlet, and the like. At the time of maintenance, the gantry sliding mechanism 5 causes the head gantry unit 4 to move so as to be directly above the maintenance mechanism 18, and the maintenance mechanism 18 performs various maintenance operations on the droplet discharge unit 3.

<Description of the Substratum 16 of the Apparatus>

An arrangement of the substratum 16 of the apparatus will be described below with reference to Fig. 2.

The substratum 16 of the apparatus has a centrally-placed main stage 16a. The main stage 16a is mechanically linked to sub-stages 16c and 16b respectively provided on both sides thereof. The sub-stage 16c has the maintenance mechanism 18.

The main stage 16a is a high-accuracy stage made of granite, and fixes the substrate-mounting plate 17 with accuracy while the droplet discharge units 3 are discharging droplets onto the target substrate mounted on the substrate-mounting plate 17.

The sub-stage 16c is a stage on which the maintenance mechanism 18 is mounted, and as such does not need to be as accurate as the main stage 16a.

The sub-stage 16b is a stage that is used for moving the substrate-mounting plate 17 to an end of the apparatus in carrying in a substrate onto the substrate-mounting plate 17 or in carrying out a substrate from the surface of the substrate-mounting plate 17.

Mounted respectively on the stages 16a, 16b, and 16c are gantry guides 20a, 20b, and 20c. The gantry guides 20a, 20b, and 20c are jointed together with seams formed therebetween, in order that the head gantry unit 4 can freely slide across the different gantry guides 20a, 20b, and 20c.

In Fig. 1, the head gantry unit 4 is always staying up in the air with a floating sliding mechanism 22 floating above the gantry sliding mechanism 5. It is linear motor control between a magnetic linear scale 21 provided on the gantry sliding mechanism 5 and the floating sliding mechanism 22 that enable the head gantry unit 4 to move.

Moreover, the gantry sliding mechanism 5 and the linear scale 21 are continuously arranged so that the head gantry unit 4 can freely slide across the stages 16a, 16b, and 16c. Further, the substratum 16 of the apparatus has a conventional vibration-free mechanism (not shown) provided on a ground surface thereof.

<Description of the Substrate-mounting Plate 17>

The substrate-mounting plate 17 has a plurality of minute holes (not shown) formed on an upper surface thereof, and all of the holes are communicated with a suction/blower mechanism (not shown) that performs suction/blower control so that a target substrate disposed on the substrate-mounting plate 17 is fixed by suction or the substrate is released from the substrate-mounting plate 17.

Fig. 3 is a schematic cross-sectional view for explaining the operation of the head gantry unit 4 and the substrate-mounting plate 17 of the defect repairing apparatus 1. The substrate-mounting plate 17 can move, by means of liner motor control, on slide rails (not shown) provided on the substratum 16 of the apparatus. At the time of carrying in or out a substrate, the substrate-mounting plate 17 moves in the direction of an arrow r1 to an end of the apparatus opposite the maintenance mechanism 18 as shown in Fig. 3.

Furthermore, the substrate-mounting plate 17 contains a theta rolling mechanism (not shown) that enables the substrate-mounting plate 17 to move on the slide rails in one direction by means of linear motor control and enables the mounted substrate to freely rotate in an in-plane direction.

Furthermore, the substrate-mounting plate 17 has a fine-adjustment mechanism that enables the substrate-mounting plate 17 to slightly move in a direction orthogonal to the slide rails. Further, the upper surface of the substrate-mounting plate 17 is made of a stone stationary platen whose upper surface is high in flatness, and is parallel to the discharge surface of the droplet discharge unit 3.

<Description of the Head Gantry Unit 4>

(a) and (b) of Fig. 4 are a plan view and a front view of an arrangement of a main part of the head gantry unit 4 as seen from Directions Z and Y, respectively. The arrangement of the head gantry unit 4 will be described below with reference to (a) and (b) of Fig. 4.

The head gantry unit 4 is constituted by coupling a pair of gantries 23 together via the floating sliding mechanism 16. Provided on an outward side surface of one of the gantries 23 are a plurality of (four in Fig. 1) droplet discharge units 3 and a plurality of (four in Fig. 1) discharge-unit sliding mechanisms 24.

Fixedly installed on a surface opposite the outward surface so as to be positioned between the two gantries 23 are two alignment cameras 25 for use in control of the in-plane rotation of a substrate. Although (a) and (b) of Fig. 4 show only one of the alignment cameras 25, the other alignment camera 25 is at the top of (a) of Fig. 4.

Similarly provided on an outward side surface of the other gantry 23 are a plurality of (five in Fig. 1) droplet discharge units 3 and a plurality of (five in Fig. 1) discharge-unit sliding mechanisms 24. Movably attached via a camera sliding mechanism 26 on a surface opposite the outward surface so as to be positioned between the two gantries 23 is an observation camera unit 27. The camera sliding mechanism 26 enables the observation camera unit 27 to move along a long side of the gantry 23.

<Description of the Gantry Sliding Mechanism 5>

The gantry sliding mechanism 5 causes the floating sliding mechanism 16 to stay up in the air above the gantry sliding mechanism 5, performs liner drive control together with the floating sliding mechanism 16 in accordance with a control signal from the defect repairing apparatus 1 to cause the head gantry unit 4 to move to any position in a direction parallel to Direction Y of Fig. 1.

<Description of the Droplet Discharge Units 3>

Fig. 5 is a side view of an arrangement of a main part of each of the droplet discharge units 3 as seen from Direction Y of Fig. 1. The droplet discharge units 3 are mounted on their respective discharge-unit sliding mechanisms 24 installed on the head gantry unit 4, and can move each independently in the direction of an arrow r3.
Each of the droplet discharge units 3 has a discharge element 29, a drive control circuit 30, an electric connection cable 31, an ink tank 32a, an ink tube 32b, and a housing 28 containing them. The housing 28 moves on the corresponding discharge-unit sliding mechanism 24.
The discharge element 29 has a nozzle plate 33 bonded to a surface thereof parallel to the upper surface of the substrate-mounting plate 17, and the nozzle plate 33 is formed with a plurality of nozzle holes 12. It should be noted that each of the nozzle holes 12 has a diameter of 10 μm to 20 μm.
The discharge element 29 is a conventional one that generates discharging energy by forming, in a piezoelectric substrate, groves that serve as a plurality of ink chambers, forming an electrode in a portion of a side surface of a dividing wall, and then subjecting the dividing wall to shear deformation through application of an electric field between both side surfaces of the dividing wall. The drive control circuit 30 is connected to a drive control system (not shown) via a cable (not shown) to perform discharge control. A preliminary adjustment is made so that the space between a droplet discharge surface, i.e., a lowermost surface of the nozzle plate 33 and an upper surface of a target substrate mounted on the substrate-mounting plate 17 is 0.5 mm to 1 mm.

<Description of the Discharge-unit Sliding Mechanisms 24>

Fig. 6 is a front view of an arrangement of a main part of each of the discharge-unit sliding mechanisms 24 as seen from Direction X of Fig. 1. The arrangement of the discharge-unit sliding mechanism 24 will be described below with reference to Fig. 6.
The discharge-unit sliding mechanism 24 is composed of two LM guides 35 (manufactured by THK Co. Ltd.) and a gantry linear scale 36 installed between the two LM guides 35. Control of drive of a linear driving mechanism 34 attached to the corresponding droplet discharge unit 3 makes it possible to move the droplet discharge unit 3 to a predetermined position in a direction parallel to Direction X of Fig. 1 (i.e., in a direction perpendicular to the surface of Fig. 6). The linear scale 36 is a regular array of permanent magnets whose north and south poles alternate with one another.
The linear driving mechanism 34 can freely generate north and south poles by means of alternating-current control, and the magnetic force of the linear scale 36 and the linear driving mechanism 34 enable position control of the droplet discharge unit 3 on the discharge-unit sliding mechanism 24. The effective stroke of each of the LM guides 35 is 250 mm, and the linear scale 36 is installed within a range of not more than the effective stroke. The movement of the droplet discharge unit 3 by the discharge-unit sliding mechanism 24 is preliminarily adjusted so that the gap between the upper surface of the substrate-mounting plate 17 and the nozzle plate 33, which is a droplet discharge surface of the droplet discharge unit 3, is always constant. The gap is adjusted, for example, to be not less than 0.2 mm to not more than 0.8 mm. Generally, when the gap is set to be not more than 0.2 mm, there is a higher possibility of causing a failure in the apparatus due to contact of the head with the surface of a substrate and there are fears that minute splashes made when droplets lands on the substrate reach the nozzle surface, accumulate on the nozzle surface, and form large droplets. On the other hand, when the gap is set to be not less than 0.8 mm, there is deterioration in landing accuracy due to the influence of wind at the time of flight of droplets. Those discharge-unit sliding mechanisms 24 provided on the side surface of the other gantry 23 will not be described below, because they are identical in arrangement to those described above.

<Description of a Camera Sliding Mechanism 38>

An arrangement of the camera sliding mechanism 38 will be described below with reference to Fig. 6. The function of the gantry sliding mechanism 5 to acquire information in a direction parallel to Direction Y and the function of the camera sliding mechanism 38 to acquire information in a direction parallel to Direction X enables the observation camera unit 27 to output address information on a target substrate with respect to an alignment mark. The observation camera unit 27 mainly observes a landing image of droplets that the droplet discharge unit 3 has landed on the substrate, and can output the discharge condition of each of the droplet discharge units 3 or the address of a landing position based on the alignment mark.

Use of the landing position coordinates obtained by the observation camera unit 27 enables each of the droplet discharge units 3 to land droplets to a desired position on the target substrate by correcting the timing of discharge in Direction Y and correcting the amount of movement of the corresponding discharge-unit sliding mechanism 24 in Direction X.

As with each of the aforementioned discharge-unit sliding mechanisms 24, the camera sliding mechanism 38 is composed of two LM guides 39 (manufactured by THK Co. Ltd.) and a camera linear scale 40 installed between the two LM guides 39. Control of drive of a linear driving mechanism 37 attached to the observation camera unit 27 makes it possible to move the observation camera unit 27 to a predetermined position in Direction X of Fig. 1 (i.e., in a direction perpendicular to the surface of Fig. 6). The effective stroke of each of the LM guides 39 is 2500 mm, and the linear scale 40 is installed within a range of not more than the effective stroke.

<Array of Nozzle Holes>

(a) of Fig. 7 is a bottom view of an arrangement of a main part of each of the droplet discharge units 3, and (b) of Fig. 7 is a bottom view of an arrangement of a main part of another droplet discharge unit 3a. An array of nozzles holes in each of the droplet discharge units will be described below with reference to (a) and (b) of Fig. 7. (a) of Fig. 7 shows an apparatus provided with a plurality of droplet discharge units 3 that discharge one type of liquid. Each of the droplet discharge units 3 is attached to the head gantry unit 4 via the corresponding discharge-unit sliding mechanism 24 so as be able to move in the direction of the arrow X (Fig. 1). Formed in the nozzle plate 33, which is a droplet discharge surface, are the nozzle holes 12 arrayed in a line inclined at several degrees with respect to a direction perpendicular to the arrow B. All the nozzle holes 12 thus arrayed discharge the same droplet material. (b) of Fig. 7 shows an apparatus provided with a plurality of droplet discharge units 3a that discharge three types of liquid. Each of the droplet discharge units 3a is arranged so as to have a line of nozzle holes 12R that discharge a first droplet material, a line of nozzle holes 12G that discharge a second droplet material, and a line of nozzle holes 12B that discharge a third droplet material, the lines of nozzles holes being each inclined at several degrees with respect to a direction perpendicular to Direction B, the lines of nozzle holes being substantially identical in projected area to one another in Direction B. Further, each of the lines of nozzle holes may be capable of slightly moving in Direction B within the droplet discharge unit 3a.

The nozzle pitch Q projected in Direction B is defined as:

$$Q = p \times \sin\theta,$$

where $\theta$ denotes the slope of a line of nozzle holes in relation to Direction A and p denotes the nozzle pitch. This brings about an advantage of increasing the density of the pitch Q in Direction B in comparison with the actual nozzle pitch. An increase in the density of the pitch Q makes it possible to manufacture a single unit through a combination of a plurality of heads while arraying the heads at least within the accuracy of the pitch Q without strictly aligning each of the heads.

It is preferable to use discharge elements, inclined at $\theta = 3$ to $10°$, each of which has 20 to 80 nozzle holes at a pitch of 100 to 200 DPI (i.e., an array of 100 to 200 holes at equal pitches per width of 1 inch). The reason for this is as follows: As the number of holes per discharge unit becomes smaller, the total width of a droplet discharge unit composed of an array of such discharge units becomes smaller, so that a region of incapability can be made smaller. Further, the inclination of the 100 to 200 DPI discharge elements, which are low in manufacturing cost, within the range of $\theta = 3$ to $10°$ makes it possible that the nozzle pitch projected in Direction B is made as high as 5 $\mu$m to 35 $\mu$m in density once control of the timing of discharge is performed by performing a test discharge, without strictly aligning the plurality of discharge elements with one another. This makes it possible to realize an array higher in density than the size of pixels of a color filter, an organic EL display device, or the like.

<Description of an Operation of Carrying in a Substrate>

(a) through (c) of Fig. 8 are schematic cross-sectional views for explaining the operation of the head gantry unit 4 and the substrate-mounting plate 17 which are seen from the Direction X of Fig. 1.

A conventional art is arranged so that dummy ink discharge is performed with respect to a region other than effective pixels of the substrate so as to perform non-discharge detection. On the other hand, the defect repairing apparatus of the present embodiment is arranged so that the maintenance mechanism 18 including a non-discharge detector is provided on the sub stage 16c, i.e., a region other than a region where an application process is performed with respect to the substrate.

(a) of Fig. 8 shows a state in which a target substrate 2 has been processed. After the substrate has been processed, as shown in (b) of Fig. 8, the substrate-mounting plate 17 of the defect repairing apparatus slides in the direction of the arrow r1 toward the left on the drawing (toward the sub stage 16b), and the head gantry unit 4 moves in the direction of the arrow r2 so as to be directly above the maintenance mechanism 18. Then, after the substrate-mounting plate 17 has released the suction of the target substrate 2 thus processed, the substrate-mounting plate 17 transfers the target substrate 2 to a conveyer robot (not shown). After that, the conveyer robot places a next target substrate 2a onto the substrate-mounting plate 17. Then, the target substrate 2a thus placed is immediately air-sucked by the substrate-mounting plate 17, which then returns in the direction of the arrow r4 of (c) of Fig. 18 to its original position (i.e., the position shown in (a) of Fig. 8).

During the carrying out of the target substrate 2 from the substrate-mounting plate 17, the carrying in of the next target substrate 2a, and the return of the substrate-mounting plate 17 to its original position, each of the droplet discharge units 3 is subjected to a routine maintenance operation. In the maintenance operation, the head gantry unit 4 moves so as to be directly above the maintenance mechanism 18, and maintenance work is performed after completion of the movement. Specifically, as shown in (b) of Fig. 8, the nozzle plate surface of the droplet discharge unit 3 is capped with a cap 19 made of rubber. Further, after the capping, the liquid is forcibly drained from the nozzle holes of the nozzle plate by negative-pressure suction through an air vent provided at the bottom of the cap 19, so that dust and the like are removed from the nozzle holes. After that, the nozzle plate surface is wiped with a wiper blade (not shown). Then, the after-mentioned non-discharge detector checks the condition of discharge from the nozzle holes. This series of maintenance actions may be arranged in an order different from the aforementioned order.

The substrate-mounting plate 17 on which the new target substrate 2a has been mounted and the head gantry unit 4 finished with the maintenance operation of the droplet discharge unit 3 moves substantially simultaneously in the directions of arrows r4 and r5 shown in (c) of Fig. 8 and reach the positions shown in (a) of Fig. 8, respectively.

<Description of a Maintenance Operation>

During the carrying out and in of substrates or when an operation of discharging droplets onto a substrate is not performed for a long period of time, each of the droplet discharge units 3 is subjected to a maintenance operation. This maintenance operation includes a non-discharge detecting action, a capping action, an action for sucking and purging the interior of a cap, and a wiping action. In case where the next target substrate is processed immediately after the previous target substrate has been processed, the head gantry unit 4 provided with the droplet discharge units 3 is given a command to move so as to be directly above the maintenance mechanism 18, at the same time as a command to carry out the previous target substrate is given.

(a) and (b) of Fig. 9 are a front view and a bottom view of an arrangement of a non-discharge detector 13 as seen from Directions X and Z of Fig. 1, respectively. The maintenance mechanism 18 has a non-discharge detector 13, installed for each droplet discharge unit 3a, which has a laser-emitting element 41 and a laser-receiving element 42.

Upon receiving a non-discharge detecting command, the laser-emitting element 41 connected to a laser-emitting circuit (not shown) continuously irradiates the laser-receiving element 42 with a laser beam. Connected to the laser-receiving element 42 is a circuit for measuring the amount of light received. Stored in the circuit is the normal amount of light received. As shown in (a) and (b) of Fig. 9, the direction of laser irradiation is substantially parallel to the surface of the substrate and the surface of the nozzle plate 33 (nozzle plates 33R, 33G, 33B), and is substantially parallel to the lines of nozzle holes 12R, 12G, and 12B. The laser beam has a diameter of 1 mm, and a single droplet discharge unit 3a is disposed so that all the nozzle holes 12R, 12G, and 12B discharge droplets that pass through within the axis of the laser beam.

Each of the laser-emitting element 41 and the laser-receiving element 42 has a micromotion mechanism. If droplets do not pass through within the axis of the laser beam, a positional adjustment is made. First, the amount of light from the means for measuring the amount of light received is read while causing the first nozzle holes 12R to discharge droplets for a certain period of time. The amount of light blocked is measured by comparing the read amount of light received with the normal amount of light received. It is judged whether or not the measured value falls within a range of preset values. In case where the measured value falls within the range of preset values, it is deemed to represent a normal discharge; otherwise, it is deemed to represent a defective discharge.

Next, the control of discharge and the measurement of the amount of light blocked are performed in sequence for the second nozzle holes 12G and the third nozzle holes 12B in the same manner, whereby all the nozzle holes 12R, 12G, and 12B of the droplet discharge unit 3a are checked for the existence of a defective discharge. In the absence of a defective discharge, the droplet discharge unit 3a is moved to the capping position, and then capped until right before completion of the operation of carrying in a substrate.

In the presence of a defective discharge, a recovery operation is performed as in the case of a conventional technology. For example, the droplet discharge unit 3a is moved to the capping position, and then capped. Next, the cap is subjected to negative pressure for forcible drainage from the nozzle holes. After that, the cap is released, and then wiping is performed. Once again, non-discharge detection is performed.

The non-discharge detection and the recovery operation are performed within the limits of several times until there is no more defective discharge. In case where no recovery is made from a defective discharge, the apparatus is informed accordingly. In case where there is a change in the condition of discharge as a result of a comparison between a result of the last non-discharge detection immediately before the previous substrate is processed and a result of the first non-discharge detection performed while the previous target substrate is being carried out, the previous substrate can be discarded as having been processed inadequately or can be passed onto a repairing step.

Fig. 10 is a time chart illustrating a timing of non-discharge detection and a timing of carrying in and carrying out of a substrate in a conventional defect repairing apparatus. Fig. 11 is a time chart illustrating a timing of non-discharge detection and a timing of carrying in and carrying out of a substrate in the defect repairing apparatus according to the present embodiment.

The maintenance mechanism 18 including the non-discharge detector is mounted on the sub stage 16c, i.e., a region other than a region where an application process is performed with respect to the substrate as in the defective repairing apparatus according to the present embodiment, so that loading of the substrate and non-discharge detection can be substantially simultaneously performed, thereby shortening the takt time taken to process the substrate. This is described below with reference to time charts of Figs. 10 and 11.

First, as illustrated in Fig. 10, a conventional art is arranged so that the substrate-mounting plate 17 begins to move after a substrate carriage command (P1) is given. At this time, the maintenance mechanism is in a standby state because the maintenance mechanism cannot operate until a next substrate is newly carried in.

Further, after the movement of the substrate-mounting plate 17 is completed, suction of the substrate is released (P3), and then the substrate is carried out (P4). During this period, the maintenance mechanism remains in the standby state.

After the substrate is carried out, a next substrate is newly carried onto the substrate-mounting plate 17 (P5), and then the next substrate is fixed to the substrate-mounting plate 17 by suction (P6). During this period, the maintenance mechanism remains in the standby state.

After the next substrate is fixed to the substrate-mounting plate 17 by suction, the substrate-mounting plate 17 begins to move (P7). During this period, the maintenance mechanism remains in the standby state.

After the substrate-mounting plate 17 moves, the droplet discharge unit performs dummy ink discharge with respect to a region other than effective pixels of the substrate, before coloring a first pixel, so as to perform non-discharge detection (P8). In the conventional art arranged in this manner, the non-discharge detection cannot be performed unless the detection is performed on the substrate. Thus, the maintenance mechanism cannot operate and is thus in the standby state during carrying in and carrying out with no substrate existing on the substrate-mounting plate 17 on the main stage 16a.

After the next substrate moves to the substrate-mounting plate 17, a maintenance time Tm1 of Fig. 10 is added as a takt time, taken to process the substrate, in order to perform a maintenance operation before processing the next substrate.

Next, with reference to Fig. 11, a time chart for processing a substrate according to the present embodiment is described below. After processing the substrate, a substrate carriage command (P1) and a non-discharge command (maintenance command) (P11) are simultaneously given. Further, movement of the substrate-mounting plate 17 (P2) and movement of the head gantry unit 4 to the non-discharge detecting position (P12) are simultaneously started.

As illustrated in (b) of Fig. 8, the substrate-mounting plate 17 of the defect repairing apparatus slides in the direction of the arrow r1 toward the left on the drawing, and the head gantry unit 4 moves in the direction of the arrow r2 so as to be directly above the maintenance mechanism 18. As in the defect repairing apparatus of the present embodiment, the maintenance mechanism 18 including the non-discharge detector is mounted on a region other than a region where a droplet discharge process is performed with respect to the substrate, thereby realizing such parallel movement.

Further, suction of the target substrate having been subjected to the droplet discharge process is released (P3). After that, the target substrate is passed to a carrying robot (not shown) so as to be carried out (P4).

Next, the carrying robot mounts a next target substrate onto the substrate-mounting plate 17 (P5). Then, the subsequent target substrate mounted on the substrate-mounting plate 17 is immediately fixed to the substrate-mounting plate 17 by air suction (P6). After that, the substrate-mounting plate 17 on which the next substrate has been mounted is returned to its original position (position of (a) of Fig. 8).

As in (P3), (P4), (P5), (P6), and (P8) illustrated in Fig. 11, the target substrate is released from the suction condition and carried out from the substrate-mounting plate 17, and another target substrate is newly carried in, and the newly carried substrate is fixed to the substrate-mounting plate 17 by suction. During these processes, the droplet discharge unit 3 is simultaneously subjected to a maintenance operation including ordinary non-discharge detection. Thus, a longer maintenance time (Tm2 of Fig. 11) can be taken than a conventional maintenance time (Tm1 of Fig. 10), so that it is possible to perform sufficient detection.

The head gantry unit 4 moves so as to be above the maintenance mechanism 18 (P12) and performs the maintenance operation including non-discharge detection (P8) after completion of the movement. As illustrated in (a), (b), and (c) of Fig. 8, the maintenance mechanism 18 is positioned on the side opposite the sub stage 16b, where the carrying robot carries in and out the substrate, so that the main stage 16a having a region where the substrate is processed is positioned therebetween. In the non-discharge detection, there are fears that droplets may be scattered due to the dummy discharge, so that the dummy discharge is performed on the sub stage 16c positioned away from the substrate, thereby realizing such effect that contamination of the substrate is prevented.

The maintenance mechanism 18 includes the non-discharge detector having a laser-emitting function and a laser-receiving function. The non-discharge detector is provided per the droplet discharge unit. The non-discharge detection operations of the respective droplet discharge units are performed in parallel by using the non-discharge detectors included in the droplet discharge units respectively. This increases a time taken for the respective droplet discharge units to perform the non-discharge detection operations, so that it is possible to perform non-discharge detection sufficiently.

A next substrate is newly carried in and then is fixed to the substrate-mounting plate 17 by suction (P6). During this time, the maintenance operation (P8) of the droplet discharge unit 3 is completed. Thus, the takt time can be shortened by a maintenance time (Tm1 of Fig. 10) compared with the conventional art.

As indicated by (P7) and (P13) of Fig. 11, the substrate-mounting plate 17 on which the next substrate has been mounted and the head gantry unit 4 having completed the maintenance operation of the droplet discharge unit 3 substantially simultaneously move in the directions of the arrows r4 and r5 of (c) of Fig. 8 respectively and reach the positions shown in (a) of Fig. 8. The maintenance time is adjusted so that the substrate-mounting plate 17 and the head gantry unit 4 return to the positions of (a) of Fig. 8 at the same timing, so that it is possible to most effectively improve the takt and the maintenance time can be made longer.

Fig. 12 is a block diagram illustrating a system arrangement of the defect repairing apparatus 1 according to the present embodiment. The defect repairing apparatus 1 includes a substrate processing command control unit 48, a gantry sliding mechanism control unit 44, a maintenance mechanism control unit 45, a substrate carrying mechanism control unit 46, a substrate carrying-in/carrying-out mechanism control unit 47, and an alignment operation command control unit 49.

The defect repairing apparatus 1 includes a discharge nozzle determination section 15. The discharge nozzle determination section 15 determines a nozzle for discharging droplets to defects scattered about on the target substrate 2, out of nozzles of the droplet discharge unit, in accordance with positional data indicative of positions of the defects on the target substrate 2. The maintenance mechanism control unit 45 includes a determination section 14. The determination section 14 determines whether the substrate has any defects or not in accordance with a non-discharge detection result obtained by the non-discharge detector 13 for checking the nozzle determined by the nozzle determination section 15.

The gantry sliding mechanism control unit 44 includes a movement direction inversion section 6. The movement direction inversion section 6 inverts a direction in which the gantry sliding mechanism 5 moves.

The gantry sliding mechanism control unit 44 includes an inversion number determination section 7. The inversion number determination section 7 determines an inversion number of the movement direction inversion section 6 in accordance with the positional data indicative of positions of the defects. The inversion number determination section 7 includes an individual calculation section 8. The individual calculation section 8 calculates an inversion number of the movement direction inversion section 6 per droplet discharge unit 3 in accordance with the positional data indicative of positions of the defects. The inversion number determination section 7 includes a final determination section 9. The final determination section 9 determines a value equal to or larger than a maximum value, out of inversion numbers having been calculated respectively, as the inversion number of the movement direction inversion section 6.

When the droplet discharging process with respect to the substrate is completed, the substrate processing command control unit 48 gives a substrate processing command to each of (i) a movement command section 44a included in the gantry sliding mechanism control unit 44 and (ii) a movement starting section 46a included in the substrate carrying mechanism control unit 46.

Further, the movement command section 44a moves the gantry sliding mechanism 5 so as to position the gantry sliding mechanism 5 above the maintenance mechanism 18. Next, the maintenance position movement determination section 44b confirms that the gantry sliding mechanism is positioned above the maintenance mechanism 18 and notifies this to a non-discharge detection starting section 45a included in the maintenance mechanism control unit 45a.

After that, the non-discharge detection starting section 45a causes the non-discharge detector 13 to start non-discharge detection with respect to each droplet discharge unit 3. Further, a non-discharge data processing section 45b processes non-discharge data obtained by the non-discharge detector 13 on each droplet discharge unit 3. Next, a recovery operation command section 45c gives a command to carry out a recovery operation with respect to the droplet discharge unit 3 whose non-discharge has been detected by the non-discharge detector 13. After that, a capping command section 45d gives a capping command to cap nozzle holes of the droplet discharge unit 3. Further, a capping time management section 45e manages a capping time, i.e., a time in which the nozzle holes of the droplet discharge unit 3 are capped. Next, a capping release command section 45f gives a command for releasing the capping to the movement command section 44c included in the gantry sliding mechanism control unit 44 when the capping time passes.

After that, the movement command section 44c moves the head gantry unit 4 to the alignment position. Further, an alignment position movement determination section 44d confirms that the head gantry unit 4 reaches the alignment position and notify this to an alignment movement command control unit 49.

A movement starting section 46a of the substrate carrying mechanism control unit 46 having received the substrate processing command from the substrate processing command control unit 48 moves the substrate-mounting plate 17, on which the target substrate has been mounted, toward the sub stage 16b. Further, a stoppage position detection section 46b detects that the substrate-mounting plate 17 on which the target substrate has been mounted reaches a carrying-out position on the side of the sub stage 16b and stops there. Next, a suction releasing section 46c releases the target substrate having been fixed to the substrate-mounting plate 17 by suction and notifies this to a carrying-out command section 47a included in the substrate carrying-in/carrying-out mechanism control unit 47.

The carrying-out command section 47a gives a command to cause a robot to carry out the target substrate from the substrate-mounting plate 17. Further, a carrying-out determination section 47b confirms that the target substrate has been carried out. Next, a carrying-in command section 47c gives a command to cause the robot to carry in a next target substrate so as to position the next target substrate on the substrate-mounting plate 17. After that, a carrying-in determination section 47d confirms that the next target substrate has been carried in and positioned on the substrate-mounting plate 17 and notifies this to a suction command section 46d included in the substrate carrying mechanism control unit 46.

The suction command section 46d gives a command to fix the next target substrate onto the substrate-mounting plate 17 by suction. Further, the movement starting section 46e moves the substrate-mounting plate 17, to which the target substrate has been fixed by suction, toward the main stage 16a. Next, the stoppage position detection section 46f detects a predetermined stoppage position where the substrate-mounting plate 17 is to stop on the main stage 16a and stops the substrate-mounting plate 17. After that, a predetermined stoppage position determination section 46g confirms that the substrate-mounting plate 17 has reached the predetermined position and has stopped there so as to notify this to the alignment operation control unit 49.

In response to the notification from the alignment position movement determination section 44d and the notification from the predetermined position stoppage determination section 46g, the alignment operation command control unit 49 gives an alignment operation command for commanding an alignment operation.

<Procedure of Non-Discharge Detection>

Fig. 13 is a flowchart schematically illustrating a procedure in which non-discharge of the droplet discharge unit is detected. First, a basic concept of detection of non-discharge of the droplet discharge unit is described as follows. The defect repairing apparatus includes: a pre-process non-discharge detector for detecting non-discharge of each droplet discharge unit which has not processed the substrate, i.e., which has not discharged droplets to the substrate; and a post-process non-discharge detector for detecting non-discharge of each droplet discharge unit which has processed the substrate. As in the non-discharge detector 13 of the defect repairing apparatus 1 according to the present embodiment, it is preferable that a single non-discharge detector is used as both the pre-process non-discharge detector and the post-process non-discharge detector.

First, the droplet discharge unit is moved to the pre-process non-discharge detector (Step S21). Further, the pre-process non-discharge detector performs non-discharge detection in each nozzle (Step S22). Next, the droplet discharge unit applies droplets onto defects scattered about on the substrate (Step S23). After that, the droplet discharge unit is moved to the post-process non-discharge detector (Step S24). Further, the post-process non-discharge detector performs non-discharge detection in each nozzle (Step S25).

Next, a non-discharge detection result obtained by the pre-process non-discharge detector having performed non-discharge detection in each nozzle is compared with a non-discharge detection result obtained by the post-process non-discharge detector having performed non-discharge detection in each nozzle (Step S26). In case where both the comparison results are not identical to each other, the corresponding nozzle is determined as being abnormal (Step S28), and the substrate to which droplets have been applied is carried to a repairing step. In case where the comparison results are identical to each other, the corresponding nozzle is determined as being normal (Step S27), and the substrate is carried to a subsequent process.

Fig. 14 is a flowchart detailing the procedure for detecting non-discharge of the droplet discharge unit. Fig. 14 is divided into two parts: The one part (left side of the flowchart) illustrates movement of the substrate-mounting plate 17 and the other part (right side of the flowchart) illustrates movement of the gantry unit 10. At the time when a droplet application process on an N-1 th (N is an integer not less than 2) substrate is completed (Step S51), the N-1 th substrate is carried out, and then a next N th substrate is mounted on the substrate-mounting plate 17 and is moved to a predetermined position (Step S64 to Step S70). Specifically, when a command for carrying out the N-1 th substrate is given (Step S64), the substrate-mounting plate 17 moves toward the sub stage 16b (Step S65), and suction of the substrate is released (Step S66), and the N-1 th substrate is carried out (Step S67). Further, the next N th substrate is carried in so as to be on the substrate-mounting plate 17 (Step S68), and the N th substrate is fixed to the substrate by suction (Step S69), and the substrate-mounting plate 17 moves to a predetermined position on the main stage 16a (Step S70).

While, the gantry unit 4 on which the droplet discharge unit 3 is mounted receives a non-discharge detection command (Step S52) and moves so as to be directly above the maintenance mechanism 18 (Step S53).

Further, the non-discharge detection is performed with respect to the N-1 th substrate (Step S54). How to perform the non-discharge detection is as described above. In the non-discharge detection, whether droplets are discharged or not is observed in all the nozzles, and non-discharge nozzle numbers are stored (Step S55). A non-discharge nozzle determination section 15 (Fig. 12) determines a nozzle number of a nozzle which should discharge droplets in accordance with preset droplet application data and determines a discharge timing for each nozzle number and an amount of droplets to be discharged in the target substrate (N th substrate).

Further, a non-discharge nozzle number and the nozzle number of the nozzle which should discharge droplets are matched with each other so as to determine whether the nozzle which should discharge droplets fails to discharge or not (Step S56). In case where the nozzle which should discharge droplets does not fail to discharge, its nozzle surface is capped (Step S60) and is kept in a standby state (Step S61) until the substrate-mounting plate 17 moves to a predetermined position.

On the other hand, in case where the nozzle which should discharge droplets fails to discharge, second and third candidate nozzle groups are selected in accordance with non-discharge nozzle information in Step S56, and whether it is possible or not to draw a desired pattern in a desired position is determined.

In case where it is determined that it is impossible to draw the desired pattern, a recovery operation command is given (Step S57), and capping and a recovery operation such as suction with negative pressure are performed (Step S58), and then a wiping operation is executed (Step S59).

Further, the non-discharge detection of Step S54 is performed again. In case where it is determined that it is impossible to draw the desired pattern through Steps S54 to S56, operations of Steps S57 to S59 are repeated.

If the determination "impossible" in Step S56 is repeated a certain number of times or more (n times or more), it is determined that the droplet discharge unit has a defect, and an apparatus stoppage command is given, and the apparatus is stopped (Step S62), and replacement of the droplet discharge unit is performed.

Note that, the n times the determination "impossible" is repeated is set within a time period taken to carry out Steps S64 to S70 and is set to be a maximum number of times allowing Steps S54 to S59 to be carried out. This makes it possible to efficiently operate the apparatus.

The gantry unit on which the droplet discharge unit 3 standby for capping is mounted moves to a predetermined alignment position (Step S63) substantially at the same time as movement of the substrate-mounting plate 17 to a predetermined position (Step S70). Further, an alignment operation is performed with respect to the N th substrate (Step S71), and an operation for applying droplets onto the predetermined positions of the N th substrate is carried out (Step S72). Operations of Steps S51 to S72 are repeatedly performed, so that it is possible to sequentially apply droplets onto plural target substrates.

Fig. 15 is a flowchart illustrating a procedure of a maintenance operation and a substrate carrying-in/carrying-out operation in the droplet discharge unit. This flowchart focuses on the non-discharge detection and the non-discharge nozzle information.

As to the sequential processes of plural targets substrates, N-1 th, N th, and N+1 th target substrates are focused. When the process of the N-1 th substrate (Step s31) is completed, first non-discharge detection is carried out (Step S32). Further, in case where the nozzle which should discharge droplets fails to discharge, the recovery operation and the non-discharge detection are repeated not more than n times (Step S33).

In case where it is determined that the nozzle which should discharge droplets does not fail to discharge, non-discharge nozzle information A which is data indicative of whether droplets are discharged or not regarding all the nozzles is stored into storage means (Step S34).

If it is determined the nozzle which should discharge droplets does not fail to discharge in Step S32, non-discharge nozzle information A which is data indicative of whether droplets are discharged or not regarding all the nozzles in Step S32 is stored into storage means.

Further, a droplet application operation is performed with respect to the N th substrate (Step S35). After that, first non-discharge detection is performed with respect to the N th substrate (Step S36). The data indicative of whether droplets are discharged or not regarding all the nozzles which has been obtained in Step S36 is stored into the storage means as non-discharge nozzle information B (Step S37). The non-discharge nozzle information A and the non-discharge nozzle information B are matched and compared with each other (Step S38).

In case where there is no difference or little difference between the non-discharge nozzle information A and the non-discharge nozzle information B in this comparison, it is determined that the N th substrate has been processed in a favorable manner.

On the other hand, in case where there is a great difference between the non-discharge nozzle information A and the non-discharge nozzle information B, it is determined that the N th substrate has been processed in an unfavorable manner.

Note that, whether the N th substrate has been processed in a favorable manner or in an unfavorable manner is determined in accordance with the difference between the non-discharge nozzle information A and the non-discharge nozzle information B, but the determination varies depending on a drawn pattern. Both the non-discharge nozzle information A and the non-discharge nozzle information B have to be completely identical to each other (in case where a small number of nozzles are used to draw a minute pattern or a similar case) or the non-discharge nozzle information A and the non-discharge nozzle information B have only to be substantially identical to each other.

Further, in case where the nozzle which should discharge droplets fails to discharge in Step S36, the recovery operation and the non-discharge detection are repeated not more than N times (Step S39). In case where it is determined that the nozzle which should discharge droplets does not fail to discharge, non-discharge nozzle information C which is data indicative of whether droplets are discharged or not regarding all the nozzles is stored into the storage means (Step S40).

Note that, when it is determined that the nozzle which should discharge droplets does not fail to discharge, non-discharge nozzle information C which is data indicative of whether droplets are discharged or not regarding all the nozzles in Step S39 is stored into the storage means.

In an ink-jet type production apparatus, when sequentially processing substrates, the number of non-discharge nozzles hardly increases, and the number of non-discharge nozzles is substantially the same in Steps S32 and S33 and in Steps S36 and S39. In this case, the non-discharge nozzle information B and the non-discharge nozzle information C are the same as each other.

Further, a droplet application operation is performed with respect to the N+1 th substrate (Step S41). After that, first non-discharge detection is performed with respect to the N+1 th substrate (Step S42). The data indicative of whether droplets are discharged or not regarding all the nozzles which has been obtained in Step S42 is stored into the storage means as non-discharge nozzle information D (Step S43). The non-discharge nozzle information C and the non-discharge nozzle information D are matched and compared with each other (Step S44). In case where there is no difference or little difference between the non-discharge nozzle information C and the non-discharge nozzle information D in this comparison, it is determined that the N th substrate has been processed in a favorable manner.

As described above, whether the N th substrate has been processed in a favorable manner or in an unfavorable manner is determined in accordance with the difference between the non-discharge nozzle information C and the non-discharge nozzle information D, but the determination varies depending on the drawn pattern. Specific example thereof is described as follows by explaining, as an example, repair of a color filter substrate used in a liquid crystal display device.

If any defect (a part which inevitably does not display any color due to dust and the like) is found in a single pixel of the color filter substrate, the defective pixel region in a rectangular form is removed by YAG laser or the like, and then droplets are dropped into the defective region by an ink-jet technique, and the dropped droplets are solidified. An arrangement of the pixel region varies depending on resolution of the liquid crystal display device and a panel size, but an example thereof is such that a single color pixel size is 300 x 100 $\mu$m and a thickness is 2 $\mu$m. The following describes repair of such a color filter substrate.

When a droplet material whose solid content is 10% is used, it is necessary to apply droplets whose amount is about ten times and then cure the applied droplets in order to form a solid film whose thickness is 2 $\mu$m. Thus, in order to repair the color filter substrate whose size is 300 x 100 $\mu$m and thickness is 2 $\mu$m, it is necessary to drop about 600 pl of droplets. It is necessary to drop 150 droplets by using a droplet discharge unit which can discharge each droplet of 4 pl. Note that, "1pl" means "pico litter" (= $10^{-12}$).

Note that, an acceptable thickness value of the color filter substrate is set generally in view of color reproducibility. If the acceptable thickness value is set to $2 \pm 0.2$ $\mu$m, an acceptable value of the number of droplets is substantially $150 \pm 15$ droplets. In case of using a single nozzle to drop the droplets in this manner, when this nozzle is determined as failing to discharge the droplets, also the substrate is determined as being no good (NG).

On the other hand, in case of using 15 nozzles to drop the droplets, when the number of nozzles in one side is equal to the number of nozzles in another side, the single nozzle discharge 10 droplets, i.e., one-fifteenth of 150 droplets. Thus, in this case, if a nozzle out of the 15 nozzles used is determined as failing to discharge after processing the substrate, the processed substrate may be determined as being good.

Adversely, if a nozzle is determined as failing to discharge out of nozzles having been determined as being good before being used, the substrate may be determined as being no good (NG) adversely, and the determination depends on a desired form of the processed substrate.

Further, in case where three nozzles are used so that a nozzle A discharges 100 droplets and a nozzle B discharges 40 droplets and a nozzle C discharges 10 droplets, when the nozzle C fails to discharge droplets, the resultant substrate is determined as being good (because total droplets of the nozzle A and the nozzle B is 140 droplets which exceeds 135 droplets, i.e., the bare minimum number of droplets).

Further, it may be so arranged that: in case of using droplets which are highly likely to cause a nozzle to fail to discharge, the target number of droplets is set to be large so as to increase the acceptable number of non-discharge nozzles. For example, in case of using 15 nozzles to cover defects corresponding to 150 droplets, it is so arranged that each nozzle discharges 11 droplets and a target value is set to 150 droplets and the limit number of non-discharge nozzles is 2 (the limit number is 1 without any change of setting).

Fig. 16 is a block diagram for illustrating the droplet discharge control unit 50 of the defect repairing apparatus 1. The droplet discharge control unit 50 of the present embodiment includes an information input section 50a, a circulating defect repairing sequence processing section 50b, a data input section 50c, a determination section 50d, an order determination section 50e, and an assignment determination section 10.

In the defect repairing apparatus 1 of the present embodiment, the droplet discharge unit 3 is movable relative to the target substrate 2 ((a), (b), and (c) of Fig. 8). In other words, the defect repairing apparatus of the present embodiment may be arranged (1) so that the droplet discharge unit 3 is moved by a moving member relative to the target substrate (medium) fixed by a fixing member, or (2) so that the target substrate is by a moving member moved relative to the droplet discharge unit 3 fixed by a fixing member, or (3) so that a moving member allows both the droplet discharge unit 3 and the target substrate to move. Note that, specific arrangements of the fixing member and the moving member are not particularly limited, and it is possible to suitably adopt publicly known arrangements of the technical fields to which the present invention pertains.

The movement of the droplet discharge unit 3 relative to the target substrate is controlled by an ink discharge control section 50f. For example, a manner in which the droplet discharge unit 3 is moved by the moving member is controlled in case of the foregoing arrangement (1), and a manner in which the target substrate is moved by the moving member is controlled in case of the foregoing arrangement (2), and a manner in which both the droplet discharge unit 3 and the target substrate are moved by the moving member is controlled in case of the foregoing arrangement (3). In case of the arrangement (1), the gantry sliding mechanism control unit 44 of Fig. 12 corresponds to the ink discharge control section 50f. Note that, specific movement control and control for determining a position of the droplet discharge unit 3 relative to the target substrate are described later taking the arrangement (1) as an example.

In the defect repairing apparatus of the present embodiment, information etc. concerning an ink discharge target (defect) is inputted via the information input section 50a. The information input section 50a allows information etc. concerning plural ink discharge targets scattered about to be inputted to the data input section 50c. Any information may be inputted as the foregoing information as long as the information can be used to determine an order in which ink is discharged to the plural ink discharge targets scattered about on the medium. An example of the information is positional information indicative of positions of the ink discharge targets on a CF panel. Further, a publicly known arrangement may be adopted as the information input section 50a and an arrangement of the information input section 50a is not particularly limited. For example, it may be so arranged that an image recognition device equipped with a camera recognizes the ink discharge targets and obtains positional information indicative of positions of the ink discharge targets so as to input the positional information to the data input section 50c.

The data input section 50c receives the information from the information input section 50a. The received information is inputted to the determination section 50d. An arrangement of the data input section 50c is not particularly limited, and a publicly known arrangement can be suitably adopted.

The assignment determination section 10 determines how the plural ink discharge targets (discharge targets) are to be assigned to the droplet discharge units 3 in accordance with the information inputted to the information input section 50a.

The determination section 50d determines an ink discharge target, to which the droplet discharge unit 3 discharges ink first, in accordance with the information inputted from the data input section 50c, and regards the determined ink discharge target as a start point. How to select the start point is not particularly limited. For example, it may be so arranged that an ink-jet discharge target whose Y coordinate value is the largest is selected out of the plural ink discharge targets scattered about on the medium, or it may be so arranged that an ink-jet discharge target whose Y coordinate value is the smallest is selected out of the plural ink discharge targets scattered about on the medium. Alternatively, it may be so arranged that an ink discharge target positioned closest to the droplet discharge unit 3 is selected as the start point.

Further, in case of determining an ink discharge target as a first ink discharge target in accordance with the information inputted from the data input section 50c, the determination section 50d calculates a main scanning direction movement time (Yt) indicative of a time taken for the droplet discharge unit 3 to move from the first ink discharge target to another ink discharge target in a main scanning direction and a sub scanning direction movement time (Xt) indicative of a time taken for the droplet discharge unit 3 to move from the first ink discharge target to another ink discharge target in a sub scanning direction, so as to determine, as one of next ink discharge target candidates, an ink discharge target whose sub scanning direction movement time (Xt) is equal to or less than the main scanning direction movement time (Yt).

Further, in case of determining an ink discharge target as a first ink discharge target in accordance with the information inputted from the data input section 50c, the determination section 50d calculates a main scanning direction movement time (Yt) indicative of a time taken for the droplet discharge unit 3 to move from the first ink discharge target to another ink discharge target in a main scanning direction and a sub scanning direction movement time (Xt) indicative of a time taken for the droplet discharge unit 3 to move from the first ink discharge target to another ink discharge target in a sub scanning direction so that the calculation is more preferentially performed with respect to ink discharge targets positioned closer to the first ink discharge target, and determines whether the sub scanning direction movement time (Xt) is not more than the main scanning direction movement time (Yt) or not, so as to determine, as one of next ink discharge target candidates, an ink discharge target which satisfies such condition that $Xt \leq Yt$.

The order determination section 50e determines, as a next ink discharge target, an ink discharge target which can be reached from the first ink discharge target in the shortest time, out of the next ink discharge target candidates. Note that, in case where the determination section 50d sequentially carries out the determination more preferentially with respect to ink discharge targets positioned closer to the first ink discharge target, the order determination section 50e determines, as a next ink discharge target candidate, an ink discharge target having been first determined as a next ink discharge target candidate. Thus, in this case, the order determination section 50e may be omitted.

The ink discharge control section 50f can move the droplet discharge unit 3 relative to the ink discharge target in accordance with the order in which ink is discharged to ink discharge targets and can inclines the droplet discharge unit 3 in the main scanning direction or in the sub scanning direction with the droplet discharge unit 3 being opposite the ink discharge target. Further, the ink discharge control section 50f can move the droplet discharge unit 3 and can move the substrate including the ink discharge targets. In this manner, the moving operation of the ink discharge control section 50f is not particularly limited.

The droplet discharge unit 3 discharges ink to the ink discharge target. An arrangement of the droplet discharge unit 3 is not particularly limited, and a publicly known arrangement can be suitably adopted.

Fig. 17 is a flowchart illustrating operations of the droplet discharge control unit 50.

(Regarding Step S81)

First, the information input section 50a obtains information for determining an order in which ink is to be discharged to plural ink discharge targets scattered about on the medium (Step S81). First, regarding the ink discharge targets scattered about on the substrate, (i) X and Y coordinate values of each ink discharge target on the substrate, (ii) the ink discharge target's lengths in an X coordinate axis direction and in a Y coordinate axis direction in case where the ink discharge target has a rectangular shape, and (iii) the droplet discharge unit 3's moving velocities in the X coordinate axis direction and in the Y coordinate axis direction are regarded as the input information. Further, in discharging ink to the ink discharge target, not only a distance at which the droplet discharge unit 3 moves in the Y coordinate axis direction (the ink discharge target's length in the Y coordinate axis direction), (I) a time taken to stop when the droplet discharge unit 3 reaches the X coordinate value of the ink discharge position, (II) a distance at which the droplet discharge unit 3 moves in the Y coordinate axis direction in the time taken to stop, and (III) increase / decrease of a velocity in moving in the X coordinate axis direction are taken into consideration.

A set of ink discharge targets whose ink discharge order has not been determined is regarded as a set R1, and an element thereof is indicated as P(i) where "i" is 1 to n (n is the number of ink discharge targets). Further, a set of ink discharge targets whose ink discharge order has been determined as targets to which ink can be discharged while the droplet discharge unit 3 moves in the Y coordinate axis direction is regarded as a set R2, and an element thereof is indicated as PP(j)(k) where "j" is 1 to s and "k" is 1 to m. Note that, in case where movement of the droplet discharge unit 3 after starting to move in the Y coordinate axis direction and until its direction subsequently changes into another direction is defined as "movement in a single main scanning direction", the "j" indicates the number of times the droplet discharge unit 3 moves while ink is discharged to PP(j)(k), and s is the total number of movement. Further, "k" indicates an order in which ink is discharged to ink discharge targets during the movement defined by "j", and "m" indicates the number of ink discharge targets to which ink is discharged during the movement defined by "j". Note that, each of initial values of "j" and "k" is 1.

(Regarding Step S82)

Subsequently, the determination section 50d determines a start point in accordance with the inputted information (Step S82). In determining the start point, respective ink discharge targets are rearranged in accordance with each ink discharge target's Y coordinate value on the substrate for example. At this time, the ink discharge targets can be rearranged in accordance with an ascending order of Y coordinate value or in accordance with a descending order of Y coordinate value for example. At this time, the ink discharge targets are rearranged in accordance with the descending order of Y coordinate value in case where a negative direction of the Y coordinate axis is a main scanning direction, and the ink discharge targets are rearranged in accordance with the ascending order of Y coordinate value in case where a positive direction of the Y coordinate axis is a main scanning direction. Further, in rearranging the ink discharge targets, it is possible to adopt such rearrangement that ink discharge targets positioned linearly closer to the droplet discharge unit 3 are more preferentially disposed. Note that, there are various criterion in rearranging the ink discharge targets and there is no particular limitation therein.

If a set including the entire rearranged ink discharge targets is regarded as a set R1, the ink discharge targets are rearranged so that an element of the set R1 is regarded as P(i) where i is 1 to n (n is the number of ink discharge targets). Further, a first element P(1) is selected and removed from the set R1 and is incorporated into a set R2. At this time, an element of the set R1 is p(i) where i is 2 to n, and an element of the set R2 is PP(j)(k)=P(1). Further, the PP(j)(k) is regarded as a start point.

(Regarding Step S83)

Subsequently, the determination section 50d calculates Xt and Yt to select an ink discharge target candidate (Step S83). Specifically, there are calculated (i) a time taken for the droplet discharge unit to move from PP(j)(k) in the X coordinate axis direction to reach each ink discharge target which is an element of the set R1, i.e., to reach P(i) where i is 2 to n and (ii) a time taken for the droplet discharge unit to move from PP(j)(k) in the Y coordinate axis direction to reach each ink discharge target which is an element of the set R1, i.e., to reach P(i) where i is 2 to n. Further, such an element of the set R1 that the time taken to move in the X coordinate axis direction is equal to or less than the time taken to move in the Y coordinate axis direction is determined as an ink discharge target candidate.

Note that, an order in which ink discharge targets, i.e., elements of the set R1 are determined is not particularly limited. It may be so arranged that ink discharge targets closer to the start point are more preferentially determined. In this case, it is not necessary to determine all the ink discharge targets in view of whether $Xt \leq Yt$ is satisfied or not. An ink discharge target which first satisfies $Xt \leq Yt$ is determined as next ink discharge target candidate.

The following explains how to calculate (i) the time taken for the droplet discharge unit to move in the X coordinate axis direction to reach each element of the set R1 and (ii) the time taken for the droplet discharge unit to move in the Y coordinate axis direction to reach each element of the set R1.

First, how to calculate the time taken for the droplet discharge unit to move in the Y coordinate axis direction is described as follows. Herein, the time taken to move in the Y coordinate axis direction is Yt (second), and a distance at which the droplet discharge unit moves in the Y coordinate axis direction is $Y_1$ (mm), and a constant movement velocity in the Y coordinate axis direction is a (mm/second), and Yt is represented by the following expression (1).

$$Yt = Y_1/a \qquad \text{Expression (1)}$$

Next, how to calculate the time taken for the droplet discharge unit to move in the X coordinate axis direction is described as follows. The movement in the X coordinate axis direction includes four actions, i.e., acceleration, constant velocity movement, deceleration, and stoppage. When the time taken to move in the X coordinate axis direction is Xt, Xt is a total time taken to perform the four actions, i.e., acceleration, constant velocity movement, deceleration, and stoppage. The time taken to perform each action is explained as follows. Note that, what the "stoppage" means is a condition under which the ink discharge section 16 having finished the deceleration stands still in the X coordinate axis direction.

First, the time taken to perform the acceleration is $d_1$ (second), and the time taken to perform the deceleration is $d_2$ (second), and the time taken to perform the stoppage is c (second), and a distance at which the droplet discharge unit moves in the X coordinate axis direction both at the time of the acceleration and at the time of the deceleration is $X_2$ (mm). When the distance at which the droplet discharge unit moves in the X coordinate axis direction is $X_1$, a distance $X_3$ at which the droplet discharge unit moves at a constant velocity is represented by Expression (2).

$$X_3 = X_1 - 2 \times X_2 \qquad \text{Expression (2)}$$

When a velocity at the time of the constant velocity movement is b (mm/second), a time $d_3$ of the constant velocity movement is represented by Expression (3).

$$d_3 = (X_1 - 2 \times X_2) / b \qquad \text{Expression (3)}$$

Herein, Xt is a total time taken to perform the acceleration, the constant velocity movement, the deceleration, and the stoppage, and Xt is represented by Expression (4).

$$Xt = d_3 + d_1 + d_2 + c = (X_1 - 2 \times X_2) / b + (d_1 + d_2) + c$$

$$\text{Expression (4)}$$

Thus, such an ink discharge target that Yt and Xt of Expressions (1) and (4) satisfy a condition of Expression (5) is selected as an ink discharge target candidate.

$$Xt \leq Yt \qquad \text{Expression (5)}$$

Note that, the time $d_1$ taken for the velocity in the X coordinate axis direction reaches the constant movement velocity b (mm/second) is represented by Expression (6) where the acceleration in the X coordinate axis direction is $K_1$ (mm/second$^2$).

$$d_1 = b / K_1 \qquad \text{Expression (6)}$$

Likewise, the time $d_2$ taken to perform the deceleration is represented by Expression (7) where the deceleration in the X coordinate axis direction is $K_2$ (mm/second$^2$).

$$d_2 = b / K_2 \qquad \text{Expression (7)}$$

Further, the time c taken to perform the stoppage can be calculated by actually operating the ink discharge apparatus of the present invention and experimentally measuring the value.

Note that, the time taken to move in the X coordinate axis direction and the time taken to move in the Y coordinate axis direction are calculated in accordance with Expressions (1) to (7) by using the aforementioned parameters, but how to calculate these values is not limited to this. For example, the time taken to move in the X coordinate axis direction and the time taken to move in the Y coordinate axis direction can be calculated in consideration also for other parameters. Alternatively, an extremely small value out of $d_1$, $d_2$, and C may be omitted.

(Regarding Step S84)

Subsequently, the order determination section 50e determines, out of the ink discharge target candidates, an ink discharge target which can be reached from the start point in the shortest time, as a next start point (Step S84). Note that, in case where ink discharge targets closer to the start point are more preferentially determined in Step S83, an ink discharge target that first satisfies a condition of $Xt \leq Yt$ is determined as a next ink discharge target. In this case, it may be so arranged that the determination section 50d determines the next ink discharge target.

(Regarding Step S85)

In case where a selectable element exists in the set R1 in Step S84, an element P(j) ($2 \leq j \leq n$) of the selected ink discharge target is removed from the set R1 and is added to the set R2 (PP(j)(k) where k is k + 1). Further, the element is regarded as a new start point, and then the process proceeds to Step S85.

In case where no selectable element exists in the set R1 in Step S85, there is no ink discharge target to which ink cannot be discharged during single movement in the main scanning direction, so that the process proceeds to Step S86. In case where a selectable element exists in the set R1, the process returns to Step S83.

(Regarding Step S86)

In case where all the ink discharge targets are selected as elements of the set R2, an order in which all the ink discharge targets scattered about are processed is determined, so that the processes from Step S81 to Step S85 are ended and proceed to Step S87. On the other hand, in case where there is an ink discharge target which is not selected as an element of the set R2, the process returns to Step S82. After returning to Step S82 and determining a new start point, the droplet discharge unit 3 selects an ink discharge target to which ink can be discharged in a direction opposite to the previous direction with respect to the main scanning direction. At this time, a value indicative of the number of times the droplet discharge unit 3 moves in the main scanning direction is added so that j = j + 1. Further, "k" indicative of an order for discharging ink is reset to be an initial value so that k = 1 (Step S86).

As described above, the processes from Step 82 to Step S86 are performed by the order determination section 50e. In sequentially discharging ink to all the ink discharge targets scattered about, the order determination section 50e determines an order in which ink is discharged to the ink discharge targets scattered about so as to minimize the processing time.

(Regarding Step S87)

The ink discharge control section 50f and the droplet discharge unit 3 cause ink to be discharged to the ink discharge targets, based on an order of elements included in the set R2 determined in Step S81 to Step S86, so as to correspond to the number of times the droplet discharge unit 3 moves in the main scanning direction (Step S87). As a result, in case where plural defects 11 (ink discharge targets) are scattered about on the target substrate 2 as illustrated in Fig. 18 for example, ink is discharged in an order indicated by arrows of Fig. 18.

Fig. 18 is a schematic illustrating an ink discharge route according to the droplet discharge unit and the ink discharge control method of the present embodiment. On the target substrate 2, there are plural defects 11 (pixel print targets). The droplet discharge unit discharges ink to the defects 11 while passing through the route indicated by the arrows of Fig. 18. In case where the droplet discharge unit moves between two defects 22 (ink discharge targets), the droplet discharge unit ends its movement in the sub scanning direction X before ending its movement in the main scanning direction Y. Thus, according to the droplet discharge unit and the ink discharge control method of the present embodiment, the droplet discharge unit moves at a constant velocity in the main scanning direction Y when discharging ink. Thus, it is possible to exactly discharge ink to the defects 11 (pixel print targets).

Fig. 19 illustrates a state in which the droplet discharge units apply droplets to the defective parts. Fig. 20 illustrates another state in which droplets are applied to the defective parts. The droplet discharge units 3R, 3G, and 3R constitute the ink discharge section 58. In the droplet discharge unit 3R, a plurality of nozzle holes 12R for discharging red droplets are provided at predetermined intervals. In the droplet discharge unit 3G, a plurality of nozzle holes 12G for discharging red droplets are provided at predetermined intervals. In the droplet discharge unit 3B, a plurality of nozzle holes 12B for discharging red droplets are provided at predetermined intervals. In the target substrate 2, a red defective pixel 47R, a green defective pixel 47G, and a blue defective pixel 47B which are adjacent to one another are provided. In Fig. 19, a leftmost nozzle 12R discharges droplets to the pixel 47R. A second nozzle hole 12G which is the second hole from the left side discharges droplets to the pixel 47G. A third nozzle hole 12B which is the third hole from the left side discharges droplets to the pixel 47B.

At this time, as illustrated in Fig. 20, the ink discharge control section 50f (Fig. 16) allows the ink discharge section 58 to be inclined in the main scanning direction or the sub scanning direction with the ink discharge section 58 opposite the ink discharge targets. This makes it possible to reduce a distance between the nozzles in the sub scanning direction. As a result, a plurality of nozzles can be used in discharging ink to a single ink discharge target. The distance between the nozzles in the sub scanning direction can be determined in accordance with an angle at which the ink discharge section 58 is inclined. Note that, the angle at which the ink discharge section 58 is inclined is not particularly limited and is selectable. For example, the angle at which the ink discharge section 58 is inclined can be set in accordance with a size of the ink discharge target, particularly, the ink discharge target's length in the X coordinate axis direction and a size of an ink droplet.

For example, as illustrated in Fig. 20, according to the droplet discharge unit and the ink discharge control method of the present embodiment, the ink discharge section 58 can be inclined in the main scanning direction or the sub scanning direction with the ink discharge section 58 opposite the ink discharge targets. The following explains an arrangement of the nozzles before and after inclining the ink discharge section 58 in the main scanning direction or the sub scanning direction.

As illustrated in Fig. 19, the ink discharge section 58 includes the nozzle holes 12R, 12G, and 12B, and is disposed opposite the target substrate 2. Note that, the ink discharge section 58 discharges ink while moving in a direction indicated by an arrow A3. Further, the target substrate 2 has the pixels 47R, 47G, and 47B disposed adjacent to one another. Among them, red (R) ink is discharged to the pixel 47R, green (G) ink is discharged to the pixel 47G, blue (B) ink is discharged to the pixel 47B. The ink discharge section 58 includes: plural nozzles 12R for discharging red (R) ink; plural nozzles 12G for discharging red (G) ink; and plural nozzles 12B for discharging red (B) ink. Among the foregoing nozzles, nozzles for discharging ink to the pixels 47R, 47G, and 47B respectively are indicated by black dots. That is, as illustrated in Fig. 19, a single nozzle 12R discharges ink to the pixel 47R, and a single nozzle 12G discharges ink to the pixel 47G, and a single nozzle 12B discharges ink to the pixel 47B.

Further, as illustrated in Fig. 20, the ink discharge section 58 can be inclined in the main scanning direction or the sub scanning direction with the ink discharge section 58 opposite the target substrate 2. As illustrated in Fig. 20, the ink discharge section 58 is inclined, so that two nozzles 12R can discharge ink to the pixel 47R, two nozzles 12G can discharge ink to the pixel 47G, and two nozzles 12B can discharge ink to the pixel 47B.

On the other hand, in case where the angle of the ink discharge section 58 is fixed to 80° for example, intervals of ink droplets adjacent to one another is constant, so that the number of droplets to be discharged by each nozzle is adjusted, thereby determining an amount of ink droplets with which the defective pixel is to be covered. Also, the ink discharge section 58 of the ink droplet discharge apparatus having a noise interval of about 150 dpi is inclined at about 80°, so that a distance between the nozzles in the sub scanning direction is about 30 $\mu$m. As illustrated in (a) of Fig. 21, when a pixel width is 100 $\mu$m, it is possible to print in the single pixel by discharging ink from at least two nozzles. It is possible to control the number of droplets discharged from the two nozzles, thereby securing a total droplet amount required in covering the defective pixel.

Further, as illustrated in (b) of Fig. 21, in the foregoing case, when the pixel width is 300 $\mu$m, nine nozzles are positioned within the pixel width. In this case, even when a nozzle out of the nine nozzles is in an unfavorable state for example, it is possible to discharge a desired amount of ink droplets by using other eight nozzles. Note that, in (b) of Fig. 21, the ink discharge section 58 scans in a direction of an arrow A3.

Further, as illustrated in Fig. 22 and Fig. 23, if the ink discharge apparatus of the present embodiment is used, in repairing a defective pixel, it is possible not only to repair a single-color defective pixel such as a white spot out of RGB pixels for example but also to simultaneously repair two adjacent defective pixels such as RG, GB, BR, and the like caused by color leak between pixels due to foreign substances such as dust as illustrated in Fig. 22 or simultaneously repair three adjacent defective pixels such as RGB, GBR, and BRG as illustrated in Fig. 23.

Thus, the droplet discharge units 12R, 12G, and 12B of the ink discharge section 58 are positioned close to one another, and nozzle positions of the droplet discharge units 12R, 12G, and 12B are made overlap one another at least in the main scanning direction, and the ink discharge section 58 is inclined as described above, so that it is possible to virtually narrow the ink discharge intervals in the sub scanning direction. The nozzle position of the ink discharge section 58 is minutely adjusted corresponding to the adjacent pixel position so that the adjacent defective pixel is repaired by using different color inks, and the defective pixel can be repaired during single scanning by using plural inks which are different from each other.

For example, as illustrated in Fig. 22, according to the droplet discharge units and the ink discharge control method of the present embodiment, the two adjacent pixels 47R and 47G can be repaired during single scanning. In this case, the adjacent pixels 47R and 47G can be repaired by using the nozzles 12R and 12G respectively. Further, as illustrated in Fig. 23, according to the droplet discharge units and the ink discharge control method of the present embodiment, the adjacent three pixels 47R, 47G, and 47B can be repaired during single scanning. In this case, the ink discharge section 58 is inclined, so that the adjacent pixels 47R, 47G, and 47B can be repaired by using the nozzles 12R, 12G, and 12B.

(a) of Fig. 24 is a schematic plan view illustrating an inversion operation of the droplet discharge units mounted on the head gantry unit. (b) of Fig. 24 is a graph illustrating the inversion operation of the droplet discharge units mounted on the head gantry unit.

In (a) of Fig. 24, three droplet discharge units 3a, 3b, and 3c are mounted on the head gantry unit 4 serving as a holder of the defect repairing apparatus. The droplet discharge unit 3a circulates while sequentially passing by defective parts positioned within a target region 46a of the substrate so as to discharge droplets. The droplet discharge unit 3b circulates while sequentially passing by defective parts positioned within a target region 46b of the substrate so as to discharge droplets. The droplet discharge unit 3c circulates while sequentially passing by defective parts positioned within a target region 46c of the substrate so as to discharge droplets. Thus, the number of defective parts remaining unrepaired on the substrate decreases every time the head gantry unit 4 inverts and scans over the substrate.

In case of repairing all the defective parts on the substrate by inverting and scanning plural times, the number of defective parts remaining unrepaired decreases at the latter half of the plural inverting and scanning operations, so that it is not necessary to scan the entire regions from one end to the other end of the substrate.

For example, in the present apparatus arranged so that the plurality of droplet discharge units 3a, 3b, and 3c are mounted on a single droplet discharge unit 4, the droplet discharge units 3a, 3b, and 3c are different from one another in (i) the number of defective parts assigned to each unit and (ii) an arrangement of the defective parts, and the number of defective parts to be repaired in each scanning and positions of the defective parts vary in accordance with each droplet discharge unit.

A necessary scanning width of the head gantry unit 4 varies in accordance with distribution of defective parts on the substrate. In (a) of Fig. 24, the scanning direction of the head gantry unit 4 corresponds to an up-and-down direction of the paper, and the head gantry unit 4 scans within such a range that the droplet discharge unit can reach the uppermost defective part and the lowermost defective part.

Note that, a region which the droplet discharge unit has to scan varies between respective scanning operations, so that a total width including regions each of which each of plural droplet discharge units has to scan is determined as the scanning width of the head gantry unit 4 (if there are two scanning widths for example, not only an overlapping region thereof but also a region other than the overlapping region is determined as a region which should be scanned).

In the present embodiment, defective part information of each substrate is obtained in advance before carrying out the droplet discharge operation by the droplet discharge unit, and defective parts which should be repaired by each droplet discharge unit are determined in accordance with the defective part information, and a required inversion number and scanning region in the scanning direction of the head gantry unit 4 are determined for each droplet discharge unit.

Further, according to the algorithm for the circulation described in the embodiment, it is often that defective parts in the vicinity of an end of the substrate are repaired at the initial scanning stage.

This is based on the following reason. According to the circulation algorithm of the embodiment, defective parts in the vicinity of the inversion operation position of the head gantry unit 4 are preferentially treated, so that defective parts positioned in the vicinity of the end of the substrate, i.e., in the vicinity of the inversion operation position of the head gantry unit 4 are preferentially repaired, and only centered defective parts on the substrate are likely to remain as the gantry inversion operation is repeated.

In (b) of Fig. 24, a horizontal axis indicates a time taken to perform a repairing operation (a time taken for the head gantry unit 4 to repeatedly invert and scan over the substrate). A vertical axis indicates a scanning position (increase in the upward direction of (a) of Fig. 24) of the head gantry unit 4. A period T1 indicates a first scanning period (a period in which the head gantry unit 4 scans from the downward side to the upward side of (a) of Fig. 24). A period T2 indicates a second scanning period (a period in which the head gantry unit 4 scans from the upward side to the downward side of (a) of Fig. 24). A period T3 indicates a third scanning period (a period in which the head gantry unit 4 scans from the downward side to the upward side of (a) of Fig. 24). A period T4 indicates a fourth scanning period (a period in which the head gantry unit 4 scans from the upward side to the downward side of (a) of Fig. 24). The head gantry unit 4 less moves during single scanning in the latter scanning periods T3 and T4 than in the former scanning periods T1 and T2. During each scanning operation, the head gantry unit 4 less moves as the period transits as T1, T2, T3, and T4, i.e., the inversion number of the head gantry unit 4 increases.

A total scanning distance at which the head gantry unit 4 inverts and scans over the substrate corresponds to a time taken to repair each substrate. Thus, by limiting the scanning region of the head gantry unit 4 in the foregoing manner, it is possible to reduce the total scanning distance, thereby shortening the takt time.

The scanning region of the head gantry unit 4 is limited in the foregoing manner as the inversion number increases, so that its effect varies depending on a size of the substrate, the number of times the substrate is repaired, and the like, but the inventors of the present invention confirmed that the tack time can be shortened up to 40%.

The present embodiment described as an example such repairing algorithm that: first, the head gantry unit 4 is moved from one end to the other end of the substrate entirely, and then the repairing operation is gradually focused on defective parts in the vicinity of the center, but the present invention is not limited to this. Also other pattern allows for reduction of the takt time. Examples of the other pattern include: (1) A movement method in which defective parts are repaired so that an amount of the movement of the head gantry unit 4 before inversion of the head gantry unit 4 is gradually increased; (2) a method in which the head gantry unit 4 is inverted intensively in a part where there are a large number of defective parts to be repaired; (3) a method in which the amount of movement in the inversion is made constant and a movement range of the head gantry unit 4 is gradually shifted; and a similar method.

As to the movement pattern in repairing defective parts, an optimal repairing pattern varies depending on a part where there are defective parts (defective parts to be repaired). That is, in case where defective parts to be repaired are evenly scattered about (defective parts are not concentrated), it is preferable to repair the defective parts in accordance with the repairing algorithm described in the present embodiment. In case where there is a great difference between substrates in the arrangement of defective parts, the repairing algorithm may be changed in repairing the defective parts in accordance with the repairing pattern data.

<Array of the Droplet Discharge Units 3>

(a) and (b) of Fig. 25 are plan views each illustrating an alignment operation of the defect repairing apparatus 1. Each of (a) and (b) of Fig. 25 illustrates the defect repairing apparatus 1 as seen from above. Nine droplet discharge units 3 in total are mounted on the head gantry unit 4.

The discharge unit sliding mechanisms 24 respectively mounted on the droplet discharge units 3 are respectively provided on both sides of the head gantry unit 4 which face both outsides. Four pairs of the droplet discharge units 3 and the discharge unit sliding mechanisms 24 are provided on the left side of the head gantry unit 4 shown in the paper so that the four pairs are positioned at constant intervals. Five pairs of the droplet discharge units 3 and the discharge unit sliding mechanisms 24 are provided on the right side of the head gantry unit 4 shown in the paper so that the five pairs are positioned at constant intervals. Further, the discharge unit sliding mechanisms 24 are disposed in a zigzag manner with respect to a top face of the substrate-mounting plate 17. That is, two discharge unit sliding mechanisms 24 adjacent to each other in a direction perpendicular to an arrow r3, i.e., the gantry moving direction, partially overlap each other in their ends of slidable regions thereof in the arrow r3, i.e., a slidable direction of the discharge unit sliding mechanisms 24. Note that, it is more preferable that the overlapping slidable region is larger. Also, it is preferable that one-third or more of the discharge unit sliding mechanisms 24 in a long side direction overlap each other.

<Description of a Substrate Alignment Operation>

An operation of aligning a target substrate will be described below with reference to (a) and (b) of Fig. 25 and (a) and (b) of Fig. 26. (a) and (b) of Fig. 26 are plan views of an arrangement of a main part of each of the alignment cameras 25 of the head gantry unit 4. Provided near corners of a target substrate 2 fixed on the substrate-mounting plate 17 by suction are two alignment marks 43 for correcting the direction of in-plane rotation of the target substrate 2.

The two alignment cameras 25 fixed to the head gantry unit 4 move integrally with the head gantry unit 4 from their respective positions shown in (a) of Fig. 25 to the respective positions shown in (b) of Fig. 25. Moreover, a displacement in the direction of in-plane rotation of the target substrate 2 is calculated based on image information from the alignment cameras 25, and the aforementioned theta rolling mechanism and the aforementioned micromotion mechanism for slight movement in the direction of the arrow r3, both of which mechanisms are provided to the substrate-mounting plate 17, are used to correct the posture of the target substrate 2 in the direction of a turning arrow r6 shown in (b) of Fig. 25.

The target substrate 2 is provided in advance with the two high-accuracy alignment marks 43, and the position of application of droplets onto the target substrate 2 is predetermined with reference to these alignment marks 43. These alignment marks 43 are concentric marks, and the displacement in pitch of the two alignment marks 43 on the target substrate 2 is not more than 2 $\mu$m. The two alignment cameras 25 are installed on the head gantry unit 4 at the same pitch as the two alignment marks 43. Further, each of the alignment cameras 25 has a plurality of mode sections, namely a wide-field mode section 25a and a small-field mode section 25b. The wide-field mode section 25a makes alignment through the theta rolling mechanism and the micromotion mechanism, and then the small-field mode section 25b performs a similar alignment operation once again.

(a) and (b) of Fig. 27 are plan views of main parts for explaining the alignment operation of the defect repairing apparatus. (a) and (b) of Fig. 28 are enlarged plan views of the main parts. (a) and (b) of Fig. 28 schematically show images taken by the alignment cameras 25 in a wide-field mode. (a) of Fig. 27 is an image taken by one of the pair of alignment cameras 25, and (b) of Fig. 27 is an image taken by the other alignment camera 25.

The wide-field mode of each of the alignment cameras 25 is designed so as to have a field of view that is not less than the accuracy with which the conveyor robot disposes a substrate onto the substrate-mounting plate 17. In this wide-field mode, first, the posture of the target substrate 2 is controlled by measuring a displacement of each alignment mark 43 from its reference position with use of an outer circular ring 43a having the same center as the alignment mark 43 and by adjusting the substrate-mounting plate 17 through the theta rolling mechanism and the fine-adjustment mechanism so that the alignment mark 43 corresponds to the reference position. The outer circular ring 43a has an inside diameter, for example, of 2 mm, and an inner circle 43b has an inside diameter, for example, of 0.2 mm.

Next, as shown in (a) and (b) of Fig. 28, each of the alignment cameras 25 is switched to a small-field mode in which the posture of the target substrate 2 is controlled by measuring a displacement of each alignment mark 43 from its reference position with use of an inner circle 43b having the same center as the alignment mark 43 and by adjusting the substrate-mounting plate 17 through the theta rolling mechanism and the fine-adjustment mechanism so that the alignment mark 43 corresponds to the reference position. Further, the positions of observation by the pair of alignment cameras 25 and the positions of discharge of droplets by the droplet discharge units 3 are measured in advance in an adjustment step after installation of the droplet discharge units 3.

Fig. 29 is a flow chart showing the alignment operation of the defect repairing apparatus 1. First, when a control unit of the defect repairing apparatus 1 issues a directive to start alignment (Step S1), a target substrate 2 is carried in onto the substrate-mounting 17, which have moved to the sub-stage 16b (Step S2). Then, the substrate-mounting plate 17, on which the target substrate 35 has been mounted, moves to a fixed position on the main stage 16a (Step S3).

Then, as shown in (a) of Fig. 25, the head gantry unit 4, which has been above the maintenance mechanism 18, moves to the alignment position shown in (b) of Fig. 25 (Step S4). Then, the wide-field mode sections 25a the alignment cameras 25 are moved to the reference positions on the alignment marks 43, respectively (Step S5).

Next, the wide-field mode sections 25a the alignment cameras 25 take images of the outer circular rings 43a of the alignment marks 43, respectively (Step S6), and then the amount of alignment is calculated (Step S7). After that, a coarse alignment operation of coarsely adjusting the position of the substrate-mounting plate 17 is performed in accordance with the amount of alignment thus calculated (Step S9).

Then, the small-field mode sections 25b of the alignment cameras 25 are moved to the reference positions on the alignment marks 43, respectively (Step S8). After that, the small-field mode sections 25b of the alignment cameras 25 take images of the inner circles 43b of the alignment marks 43, respectively (Step S10), and then the amount of alignment is calculated (Step S11). After that, a main alignment operation of precisely adjusting the position of the substrate-mounting plate 17 is performed in accordance with the amount of alignment thus calculated (Step S12).

After that, the small-field mode sections 25b of the alignment cameras 25 again take images of the inner circles 43b of the alignment marks 43, respectively (Step S13), and then the accuracy of position of the substrate-mounting plate 17 is confirmed (Step S 14). Then, the alignment operation is completed (Step S15).

<Measurement of Positions of Landing of Droplets by the Observation Camera Unit 27>

(a) and (b) of Fig. 30 are plan views for explaining an operation in which the observation camera unit 27 of the defect repairing apparatus 1 finds positions of landing of droplets. The observation camera unit 27 is used in acquiring information for correcting a landing position after replacement of the droplet discharge element 29 (Fig. 5) of a droplet discharge unit 3 or in reconfirming a landing position during use. The observation camera unit 27 can take an image of any position on an upper surface of the defect repairing apparatus 1 through the gantry sliding mechanism 5 and the camera sliding mechanism 38, and can also determine any position on the upper surface of the defect repairing apparatus 1. Information on an image-taking position of the observation camera unit 27 can be outputted through scales respectively incorporated in the gantry sliding mechanism 5 and the camera sliding mechanism 38.

In the case of observation of the positions of landing of droplets, a dummy substrate 44 marked with the same predetermined alignment marks 43 as a normal target substrate 2 is carried into the defect repairing apparatus 1, and the posture of the substrate is performed as normal. Next, the observation camera unit 27 takes images of the two alignment marks 43 on the dummy substrate 44, respectively, and then acquires position information thereon.

As shown in (a) of Fig. 30, the head gantry unit 4 moves to any position on the dummy substrate 44. Then, the droplet discharge units 3 discharge droplets toward the dummy substrate 44 through the nozzle holes. In so doing, the droplet discharge units 3 may discharge droplets through all the nozzle holes. Further, the droplet discharge units 3 recognize virtual landing positions (ideal landing positions) in accordance with the scale incorporated in the gantry sliding mechanism 5 and scales incorporated in the discharge-unit sliding mechanisms 24, respectively.

Next, as shown in (b) of Fig. 30, the observation camera unit 27 takes images of droplet landing positions 45 in sequence while being moved by the gantry sliding mechanism 5 and the camera sliding mechanism 38, and then determines actual landing position with respect to the alignment marks 43. Then, differences between the virtual landing positions and the actual landing position are stored as data for correcting the droplet discharge units 3, respectively. Each of the displacements (differences) is decomposed into an X-direction displacement and a Y-direction displacement. The Y-direction displacement can be corrected by adjusting the timing of discharge, because the head gantry unit 7 discharges droplet while moving in Direction Y. The X-direction displacement is corrected by offsetting the amount of movement of each of the discharge-unit sliding mechanisms 24. This operation of the observation camera unit 27 also makes it possible to detect the absence of discharge for each nozzle and detect a displacement in landing for each nozzle.

<Back-and-forth Motion of the Head Gantry Unit 4/Moving Operation of the Droplet Discharge Units 3>

(a) and (b) of Fig. 31 are plan views for explaining a back-and-forth motion of the head gantry unit 4. The following shows how to discharge droplets to desired positions with reference to alignment marks 43 of a target substrate 2 whose posture has been controlled.
(a) of Fig. 31 shows a state in which the head gantry unit 4 has moved to its rightmost position in a work operation of dropping droplets onto the target substrate 2. Meanwhile, (b) of Fig. 31 shows a state in which the head gantry unit 4 has moved to its leftmost position. The head gantry unit 4 moves back and forth once or more than once within a range shown by an arrow r7. The plurality of droplet discharge units 3 mounted on the head gantry unit 4 can be move each independently in a direction shown by an arrow r3 of (a) of Fig. 31. The head gantry unit 4 itself moves above the target substrate 2 in the directions from side to side on (b) of Fig. 31 (in the directions of the arrow r7). Before performing a droplet-discharging operation, each of the droplet discharge units 3 moves to a desired address in the direction of the arrow r3 and stops there. Then, the droplet discharge unit 3 discharges droplet at a point of time where the directions of the arrow r7 and the direction of the arrow r3 coincide in address of the desired position to each other while the head gantry unit 4 is moving back and forth in the directions of the arrow r7. The respective operations of the plurality of droplet discharge units 3 are controlled each independently.

In (b) of Fig. 31, the range of movement of the head gantry unit 4 as shown by the arrow r7 is wider than that width of the substrate which extends in a direction orthogonal to the direction of movement of the droplet discharge unit 3. The range of movement of the head gantry unit 4 is centered substantially on a center line of the width of the substrate.
Since each of the droplet discharge units 3 can thus move across a range wider than the width of the substrate, the droplet discharge unit 3 becomes able to drop droplets to a desired position (strip-shaped region) on the substrate within the range of movement strokes of the head gantry unit 4.

<Specific Example of a Discharging Operation>

(a) and (b) of Fig. 32 are plan views for explaining an operation of the head gantry unit 4 with respect to a target substrate 2. The head gantry unit 4 is provided with nine droplet discharge units 3a, 3b, 3c, 3d, 3e, 3f, 3g, 3g, 3h, and 3i each independently movable in Direction X, and the droplet discharge units 3a to 3i are set to be responsible for regions 46a, 46b, 46c, 46d, 46e, 46f, 46g, 46g, 46h, and 46i located on the target substrate 2, respectively.

Having dimensions of approximately 2.2 m x 2.8 m, the target substrate 2 has approximately 30 to 300 discharging places (defects) scattered about thereon. In cases where there are not less than 30 defects, an arrangement in which a plurality of droplet discharge units move individually in a direction different from the direction of conveyance brings about a greater takt-time shortening effect in comparison with the case of a single droplet discharge unit, albeit depending on the size of the substrate. Meanwhile, in cases where there are not more than 300 defects, color unevenness due to repaired portions of a repaired color filter substrate or organic EL display substrate becomes nonproblematic for actual use, so that the substrate can be obtained with high quality.
The droplet discharge units 3a to 3i are assigned to their respective regions 46a to 46i shaped into stripes extending in a transverse direction on the drawings. The droplet discharge unit 3a is responsible for the region 46a. The droplet discharge unit 3b is responsible for the region 46b. The droplet discharge units 3a to 3i perform droplet-discharging operations on discharging places (defects) 11 scattered about on the regions 46a to 46i, respectively.
In the process of moving the head gantry unit 4 back and forth in the directions from side to side on the drawings, the droplet discharge units 3a to 3i move individually in Direction X, stops at places of coincidence in address in Direction X, and wait until coincidence in address in Direction Y along with the movement of the head gantry unit 4, in order to move so as to be directly above discharging places 11 for which the droplet discharge units 3a to 3i are responsible, respectively. Then, at such timing that the desired positions on the target substrate 2 are directly below the droplet discharge units 3a to 3i, the droplet discharge units 3a to 3i are driven to discharge droplets to the desired positions on the target substrate 2 through the discharge outlets, respectively.

As shown in (a) and (b) of Fig. 32, when the nine droplet discharge units 3a to 3i are arrayed in two rows in a zigzag pattern, the target substrate 35 is divided into the nine regions 46a to 46i, so that the droplet discharge units 3a to 3i can be determined to be responsible for their respective regions.

(a) through (d) of Fig. 33 are schematic plan view for explaining a discharging operation of each droplet discharge unit 3 with respect to defective parts. The following describes a step at which the droplet discharge unit 3 discharges droplets to a plurality of rectangular depressed portions while the head gantry unit 4 is moving back and forth. An example of such a step corresponds to a case where a partially defective color filter substrate is repaired with use of the defect repairing apparatus. By way of example, the defect repairing apparatus will be described below with reference to a case where a color filter substrate suffers from a deficiency of a pixel of one color.

The "defective parts" here mean portions obtained by correcting faulty portions by a laser or the like so that the faulty portions are shaped into depressions of a given shape. Examples of the faulty portions include portions commingled with dust in a manufacturing step and portions formed with blank depressions. Assuming that all droplet discharge units 3 discharges the same type of droplet material, the following shows a method for repairing a deficiency of one type of pixel (red, blue, or yellow). Therefore, defective parts of all the colors can by repaired by either providing three defect repairing apparatuses according the present embodiment for separate color materials or, as exemplified in Embodiment 2, arranging a droplet discharge unit to be able to discharge droplets of a plurality of colors.

(a) through (d) of Fig. 33 focus attention on a single one of the plurality of droplet discharge units 3 mounted on the head gantry unit 4, and show, in chronological order, an operation in which the single droplet discharge unit 3 discharges droplets to a plurality of discharging places through a droplet discharge surface provided thereon.
(a) of Fig. 33 shows that each of the defective parts (defects) 11a, 11b, and 11c on the processed substrate is a depressed portion, having a width of approximately 2 $\mu$m, whose opening has a rectangular shape, dimensions of approximately 200 $\mu$m $\times$ 70 $\mu$m, whose longer sides are parallel to the directions of movement of the head gantry unit 4. (a) through (d) of Fig. 33 are drawn as if the longer sides of each of the defective parts (defects) 11a, 11b, and 11c were parallel to the directions A of movement of the head gantry unit 4. In reality, however, the longer sides of each of the defective parts (defects) 11a, 11b, and 11c are inclined at several degrees as shown in (a) and (b) of Fig. 7. The nozzle discharge surface of the droplet discharge unit 3 faces in parallel with a surface of the conveying stage, and the nozzle plate 33 has a plurality of nozzle holes 12 formed therein. The plurality of nozzle holes 12 are arrayed in parallel with the directions from side to side on the drawings, i.e., in parallel with the directions of movement of the head gantry unit 4. Each of the nozzle holes 12 has an ink-compressing chamber and compression control means (both not shown) provided on a back surface thereof so as to make it possible to control discharge of droplets. Further, the nozzle holes 12 arrayed in a row can discharge the same droplet material.

The head gantry unit 4 moves back and forth at a substantially uniform velocity (100 mm/sec to 500 mm/sec) in the directions from side to side on the drawings, regardless of the movement or discharging operation of the droplet discharge unit 3. In order to repair the defective part 11a by discharging droplets to the defective part 11a, the droplet discharge unit 3 is moved at a high speed with use of a discharge-unit sliding mechanism 24, and then stopped so that the nozzle holes 12 are aligned with a central line on the defective part 11a. It should be noted that the duration of movement of the droplet discharge unit 3 requires consideration of a period of time containing, in addition to a period of time during which the droplet discharge unit 3 actually moves, a period of stilling time during residual vibration from the discharge-unit sliding mechanism 24 after the stoppage is reduced to such a level as not to exert a bad influence on the discharge of droplets.

From the side toward which the substrate-mounting plate 17 relatively moves, the droplet discharge unit 3, which has been moved so as to be above the center line of the defective part 11a, relatively moves in the direction of an arrow D through the uniform motion of the head gantry unit 4, and then discharges droplets through nozzle holes 12 located above the defective part 11a. Since it is possible here to use a plurality of nozzle holes 12 located directly above the defective part 11a, it is possible to increase the speed of uniform motion of the head gantry unit 4, in comparison with the case of use of a single nozzle hole. This makes it possible to improve the speed of processing of the whole substrate.

Next, as shown in (b) of Fig. 33, the droplet discharge unit 3, which has discharged droplets onto the defective parts 11a, moves in the direction of an arrow E by driving the discharge-unit sliding mechanism 24, and then stops at such a place that the nozzle holes 12 are aligned with a center line of the defective part 11c, in order to repair the defective part 11c. Since the head gantry unit 4 is now moving to the left on the drawing at a constant speed, the droplet discharge unit 3 relatively moves in the direction of an arrow F of (c) of Fig. 33, and then stops. Then, the movement of the head gantry unit 4 causes the droplet discharge unit 3 to relatively move in the direction of an arrow G. Meanwhile, the droplet discharge unit 3 repairs the defective part 11c by discharging droplets through nozzle holes 12 located directly above the defective part 11c.

Then, after finishing moving in one direction, the head gantry unit 4 starts to move in the other direction. As shown in (d) of Fig. 33, the droplet discharge unit 3 moves in the direction of an arrow K with use of the discharge-unit sliding mechanism 24, and then stops with the nozzle holes 12 aligned with a center line of the defective part 11b, in order to repair the defective part 11b. Then, the movement of the head gantry unit causes the droplet discharge unit 3 to relatively move in the direction of an arrow L, and the droplet discharge unit 3 discharges droplets through the nozzle holes 12 located directly above the defective part 11b.

Thus, the three defective parts 11a, 11c, and 11b are repaired with use of the back-and-forth motion of the head gantry unit 4 in the order named, and this is the optimum use of a constitutional advantage of the present defect repairing apparatus. That is, as shown in (c) of Fig. 33, in discharging droplets onto the defective part 11a through the plurality of nozzle holes 12, the droplet discharge unit 3 cannot be moved until the actually discharging nozzle hole 12 on the extreme right on the drawing is no longer directly above the defective part 11a. At least in a region corresponding to the distance between both ends of the row of nozzle holes 12 being used, the droplet discharge unit 3 cannot move up and down on the drawing to be ready to repair the next defective part.

This range of incapability H contains, in addition to a strip-shaped range starting from an end of the defective part that has just been processed and corresponding to the distance between both ends of the row of nozzle holes 12 being used, a region obtained by multiplying the speed of movement of the conveying stage by the sum of the amount of time required to move in the direction of the arrow E ((b) of Fig. 33) and the amount of time required to still residual vibration after the movement.

As shown in (c) of Fig. 33, the defective part 11b is located in a range of incapability H with respect to the defective part 11a. Therefore, the defective part 11b is not processed immediately after the defective part 11a has been repaired. Instead, the defective part 11c is repaired because it does not belong to the range of incapability H. Then, along with the back-and-forth motion of the head gantry unit 4, the defective part 11b is repaired after the defective part 11c has been repaired, because the defective part 11b does not belong to a range of incapability H with respect to the defective part 11c.

The foregoing has described the moving operation of a single droplet discharge unit 3. However, the defect repairing apparatus has a plurality of droplet discharge units 3 each of which operates independently. The defect repairing apparatus according to the present embodiment is not limited to an apparatus for repairing defects in a color filter substrate, and can discharge droplets onto desired places scattered about on a substrate.

(a) through (c) of Fig. 34 are schematic plan views showing a case where a droplet discharge unit 3a that drops three types of droplet material performs a discharging operation by moving in a direction orthogonal to longer sides of pixels 47R, 47G, and 47B. (a) through (c) of Fig. 35 are schematic plan views showing a case where a droplet discharge unit 3a that drops three types of droplet material performs a discharging operation by moving in a direction parallel to longer sides of pixels 47R, 47G, and 47B. In case where there occurs a color mixture of R and G pixels in course of manufacture due to dust or the like and the R and G pixels become unable to show their respective desired colors, those portions are removed by a laser so as to be rectangular in shape and the defect repairing apparatus according to the present embodiment is used to drop droplets onto the rectangular parts.

(a) through (c) of Fig. 34 and (a) through (c) of Fig. 35 show a droplet discharge unit 11 and pixels 47R, 47G, and 47B to be repaired by the droplet discharge unit 11, and assumes that because the pixels 47R and 47G leaked to form a color mixture, the places of color mixture have been removed in advance by a laser so as to form into depressions.

(a) of Fig. 34 shows a pre-repair state where the droplet discharge unit 3 is moving toward the pixels 47R, 47G, and 47B in the direction of an arrow of the drawing. (b) of Fig. 35 shows the immediate aftermath of the dropping of droplets onto the pixel 47R. Next, as shown in (c) of Fig. 35, droplets are dropped onto the pixel 47G.

Also in cases where the longer sides of the pixels 47R, 47G, and 47B are parallel to the directions of movement of the head gantry unit (droplet discharge unit 3a), (a) of Fig. 35 shows a pre-repair state, and the pixels 47R and 47G are repaired in the order of (a) through (c) of Fig. 35.

(Embodiment 2)

(a) of Fig. 36 is a plan view of an arrangement of a head gantry unit of a defect repairing apparatus according to Embodiment 2, and (b) of Fig. 36 is a plan view for explaining the operation thereof.

The defect repairing apparatus according to Embodiment 2 has two head gantry units 4 provided in parallel with each other with a predetermined distance therebetween. Each of the head gantry units 4 is provided with four droplet discharge units 3. Therefore, the droplet application apparatus is provided with a total of eight droplet discharge units 3.

The four droplet discharge units 3 of the first head gantry unit 4 are slid by discharge-unit sliding mechanisms 24 that overlap in movable region with one another. For this reason, any one of the four droplet discharge units 3 can move to any position on the substrate. The second head gantry unit 4 is similarly provided with four droplet discharge units 3.

Each of the droplet discharge units 3 can move only within a moving range P of its corresponding discharge-unit sliding mechanism 24, and the respective moving ranges of the discharge-unit sliding mechanisms 24 adjacent to one another in a zigzag pattern are partially overlapped along the directions of movement of the droplet discharge units 3. For this reason, any one of the four droplet discharge units 3 on a single gantry unit can move without fail to a position along the longer sides of the head gantry unit 4. The present embodiment has two unit rows each of which is a group of droplet discharge units 3 capable of complementing one another in moving to all positions along a direction orthogonal to the directions of movement of the head gantry unit 4. Each of the unit rows is constituted by four droplet discharge units 3.

The target substrate 2 has a plurality of defective parts 11 scattered about thereon, and the plurality of defective parts 11 are represented by black dots in the drawings. The target substrate 2 is equally divided into regions arranged in columns corresponding in number to unit columns and rows corresponding in number to droplet discharge units of each of the unit columns. Specifically, the target substrate 2 is divided into regions arranged in four rows and two columns for which the droplet discharge units 3 is respectively responsible. For example, the upper left droplet discharge unit 3 provided on the left head gantry unit 4 repairs only those defective parts 11 scattered about in the region 46 shaded in the drawings. According to the unit array mentioned above in (a) and (b) of Fig. 32, the target substrate 2 is divided into regions arranged in nine rows and one column as shown in (a) and (b) of Fig. 32, because the number of unit columns is 1.

(b) of Fig. 36 shows a state where the head gantry units 4 have moved forth halfway across the target substrate 2, and the head gantry units 4 finish their forward movements after reaching the positions pointed by the white arrows in the drawing, respectively. After that, the head gantry units 4 shift to backward movements to return to the positions shown in (a) of Fig. 36, respectively. Such a combination of forward and backward movements is defined as a single back-and-forth movement. The defective parts 11 scattered about entirely on the target substrate 2 are repaired by repeating one or more back-and-forth movements in accordance with the number of defective parts 11 scattered about. Due to the difference in the number of defective parts 11 among the regions for which the total of eight droplet discharge units 3 are respectively responsible, there occurs a difference in completion or incompletion among the droplet discharge units 3. However, the head gantry units 4 repeat back-and-froth movements until all the droplet discharge units 3 finish repairing the defective parts 11.

As shown in (b) of Fig. 36, each of the aforementioned unit columns is a group of four droplet discharge units 3 mounted on a single head gantry unit 4, and these unit columns has center lines Y2-Y2 and Y3-Y3, respectively. In the present embodiment, the distance between the respective center lines Y2-Y2 and Y3-Y3 of these two unit columns (head gantry units 4) is substantially 1/2 of the length of the target substrate 35 along the direction of conveyance. Moreover, as shown in (b) of Fig. 36, the two head gantry units 4 are disposed so that the distance between the center lines Y2-Y2 and Y3-Y3 is substantially half of the width of the target substrate 2, and each of the head gantry units 4 makes movements from side to side by the amount of movement substantially half of the width of the substrate while being centered on its location.

By thus dividing a substrate widthways according to the number of unit columns and causing the unit columns to perform scanning within their respective regions into which the substrate has been divided, it becomes possible to efficiently perform a repairing operation. In case where the number of unit columns is 1 as shown in (a) and (b) of Fig. 32, the unit column makes movements from one side to another of the substrate while being centered on an intermediate line of the substrate.

Fig. 37 is a plan view of another arrangement of the head gantry unit of the defect repairing apparatus according to Embodiment 2. Fig. 37 shows an example of an arrangement having three unit columns (head gantry units 4). In this case, a total of three units columns are formed with four droplet discharge units 3 mounted for each unit. Therefore, the target substrate 2 is divided into regions arranged in four rows and three columns.

For a defect repairing apparatus having n unit columns (where n is an integer), it is only necessary to divide a target substrate into n regions and cause the unit columns to perform scanning more than once by making movements from side to side by the amount of movement 1/n of the width of the substrate while being centered on intermediate lines of the n regions, respectively. This makes it possible to minimize the total distance over which each of the head gantry units 4 makes back-and-forth movements and thereby minimize the amount of time required to process the substrate.

This ratio does not need to strictly applied. Within a margin of error of approximately ±20%, there will be a great effect of shortening the amount of time.

The amount of time required to process the substrate can be shorten within a margin of:

$$0.8d \leq D/n \leq 1.2d,$$

where D denotes the width of the target substrate 2 in the direction of movement of head gantry units 4, d denotes the width across which each unit column performs scanning, and n denotes the number of unit columns.

A processed substrate finished with repair is taken out by a conveyor robot (not shown). In the case of a color filter substrate, the substrate is completed by placing the substrate into a calcining furnace and then solidifying droplet material. Embodiment 2 has described a defect repairing apparatus having two unit columns and a defect repairing apparatus having three unit columns. This shows that in the case of n unit columns, it is only necessary to divide the substrate into n regions with respect to the width D of the substrate in the direction of introduction of the substrate and cause the unit columns to make movements from side to side with amplitude of D/2n of the substrate while being centered on intermediate lines of the regions, respectively. Further, by making d substantially identical to D/n, it becomes possible to make an attempt to minimize the size of the apparatus. However, in the case of a difference of approximately ±10%, it is possible to reduce the occupied area of the apparatus without causing a great increase in size of the apparatus. Further, although it is preferable that d and D/n be identical. However, in the case of a difference of approximately ±20%, it is possible to shorten takt time without causing a great increase in the amount of time required for each substrate.

(a) and (b) of Fig. 38 are plan views of still another arrangement of the head gantry unit of the defect repairing apparatus according to Embodiment 2. Provided on a first side surface of the gantry 23 is a discharge-unit sliding mechanism 24 on which a droplet discharge unit 3 has been mounted. Provided on a second side surface of the gantry 23 are discharge-unit sliding mechanisms 25 on which droplet discharge units 3 has been respectively mounted. The first side surface of the gantry 23 is perpendicular to the substrate-mounting plate 17, and the second side surface of the gantry 23 is inclined with respect to the substrate-mounting plate 17.

The droplet discharge unit 3 of the first side surface of the gantry 23 slides in a direction inclined from a direction perpendicular to the direction in which the head gantry unit slides (i.e., to a direction parallel to Direction Y of Fig. 1), and the droplet discharge units 3 of the second side surface of the gantry 23 also slide in a direction inclined from a direction perpendicular to the direction in which the head gantry unit slides (i.e., to a direction parallel to Direction Y of Fig. 1). The present invention can be applied even in such a case where the direction in which a droplet discharge unit slides is not perpendicular to the direction of conveyance of a substrate. Further, even when a plurality of sliding mechanisms slide in different directions with respect to the direction of conveyance, it is possible to grasp the trajectory of each of the sliding mechanisms in advance and correct the timing of discharge of a droplet discharge unit in accordance with the sliding position coordinates.

Although Embodiments 1 and 2 above have described examples of defective pixels having occurred in CF panels, the present invention is not limited to these. The present invention can be applied to manufacture of an electroluminescence (EL) display device having a plurality of discharged parts arranged in a matrix manner or in a stripe manner. Further, the present invention can be applied to manufacture of a back substrate of a plasma display device. Furthermore, the present invention can be applied to manufacture of an image display device including an electron-releasing element and manufacture of a wire.

According to the present invention, the movement at a substantially constant velocity in the direction of conveyance encompasses a gently accelerated movement and a gently decelerated movement.

Further, the foregoing descriptions explained the example where the non-discharge detector is provided on a region other than the main stage, but the present invention is not limited to this. It may be so arranged that the non-discharge detector is provided below the main stage and the non-discharge detector rises to the droplet discharge unit in carrying in/out the substrate so as to perform the non-discharge detection.

The present invention is not limited to the description of the embodiments above, but may be altered by a skilled person within the scope of the claims. An embodiment based on a proper combination of technical means disclosed in different embodiments is encompassed in the technical scope of the present invention.

INDUSTRIAL APPLICABILITY

The present invention can be applied to a droplet discharging and drawing apparatus which causes a droplet discharge units held by a holding member moving relative to a recorded material to discharge droplets.

**Claims**

1. A droplet discharging and drawing apparatus, comprising:

   one or more droplet discharge units for discharging droplets to a recording target;
   a holding means for holding the droplet discharge units;
   a moving means for relatively moving the holding means and the recording target; and
   a movement direction inversion means for inverting a movement direction of the moving means.

2. The droplet discharging and drawing apparatus as set forth in claim 1, wherein:

   the droplet discharge unit discharges droplets to a plurality of discharge targets scattered about on the recording target, and
   the moving means relatively moves the holding means in a main scanning direction with respect to the recording target at a constant velocity, and
   the droplet discharge unit is movable in a sub scanning direction intersecting with the main scanning direction, and
   the droplet discharge unit discharges droplets to the discharge targets in an order determined in accordance with (i) a time taken for the holding means to move in the main scanning direction and (ii) a time taken for the droplet discharge unit to move in the sub scanning direction while the droplet discharge unit moves from a first discharge target to a second discharge target out of the plurality of discharge targets.

3. The droplet discharging and drawing apparatus as set forth in claim 2, further comprising an inversion number determination means for determining an inversion number of the movement direction inversion means in accordance with positional data of the discharge targets.

4. The droplet discharging and drawing apparatus as set forth in claim 2, wherein
   the droplet discharge units are provided in plurality on the holding means so as to be in the sub scanning direction, said droplet discharging and drawing apparatus further comprising an assignment determination means for assigning the plurality of discharge targets to the droplet discharge units, wherein
   the inversion number determination means includes:

   an individual calculation means for calculating the inversion number for each droplet discharge unit in accordance with positional data of the discharge targets; and
   a final determination means for determining, as the inversion number, a value equal to or larger than a maximum value out of inversion numbers calculated for the droplet discharge units respectively.

5. The droplet discharging and drawing apparatus as set forth in claim 1, wherein a movement amount of the moving means partially varies every time the inversion operation is performed.

6. The droplet discharging and drawing apparatus as set forth in claim 5, wherein the movement amount of the moving means decreases every time the inversion operation is performed.

7. A droplet discharging and drawing apparatus, comprising:

   N (N is an integer) number of droplet discharge units which are respectively movable; and
   a moving means for relatively moving the N number of droplet discharge units and a substrate, wherein
   a movement direction of the moving means is inverted so that the N number of droplet discharge units discharge droplets to (N+1) or larger number of defects on the substrate.

8. A droplet discharging and drawing apparatus, comprising:

   a droplet discharge unit for discharging droplets to a plurality of discharge targets on a medium;
   a holding means for holding the droplet discharge units; and
   a moving means for relatively moving the holding means in a main scanning direction with respect to the medium, wherein
   the droplet discharge unit is movable in a sub scanning direction intersecting with the main scanning direction, and
   the droplet discharge unit discharges droplets to the discharge targets while the movement in the sub scanning direction stops.

FIG.1

FIG.2

FIG.3

FIG.4

(a)

(b)

FIG.5

FIG.6

FIG.7

(a)

23

24

3

12

B

33

(b)

23

24

3a

12R

12G

12B

B

B

A

FIG.8

( a )

( b )

( c )

FIG.9

（a）

3a

33

41

13

42

（b）

13

41

33R    33G    3a    33B

12R    12G    12B

42

# FIG.10

| COMMAND TO CARRY OUT SUBSTRATE (P1) | SUBSTRATE-MOUNTING PLATE IS MOVED (P2) | SUCTION OF SUBSTRATE IS RELEASED (P3) | SUBSTRATE IS CARRIED OUT (P4) | NEXT SUBSTRATE IS CARRIED IN (P5) | NEXT SUBSTRATE IS FIXED BY SUCTION (P6) | SUBSTRATE-MOUNTING PLATE ON WHICH NEXT SUBSTRATE HAS BEEN MOUNTED IS MOVED (P7) | MAINTENANCE (NON-DISCHARGE DETECTION) (P8) | NEXT SUBSTRATE IS PROCESSED (P9) | COMMAND TO CARRY OUT NEXT SUBSTRATE (P10) |
|---|---|---|---|---|---|---|---|---|---|

Tm1

TIME

FIG.11

| COMMAND TO CARRY OUT SUBSTRATE (P1) | SUBSTRATE-MOUNTING PLATE IS MOVED (P2) | SUCTION OF SUBSTRATE IS RELEASED (P3) | SUBSTRATE IS CARRIED OUT (P4) | NEXT SUBSTRATE IS CARRIED IN (P5) | NEXT SUBSTRATE IS FIXED BY SUCTION (P6) | SUBSTRATE-MOUNTING PLATE ON WHICH NEXT SUBSTRATE HAS BEEN MOUNTED IS MOVED (P7) | NEXT SUBSTRATE IS PROCESSED (P9) | COMMAND TO CARRY OUT NEXT SUBSTRATE (P10) |
|---|---|---|---|---|---|---|---|---|
| MAINTENANCE COMMAND (P11) | POSITION WHERE NON-DISCHARGE DETECTION IS PERFORMED IN HEAD GANTRY UNIT IS MOVED (P12) | MAINTENANCE (NON-DISCHARGE DETECTION) (P8) | | | | POSITION WHERE ALIGNMENT IS PERFORMED IN HEAD GANTRY UNIT IS MOVED (P13) | | MAINTENANCE COMMAND (P11) |

Tm2

TIME

EP 2 022 570 A1

FIG.12

DISCHARGE NOZZLE
DETERMINATION
SECTION ---15

SUBSTRATE
PROCESSING
COMMAND CONTROL
UNIT ~48

1

44a
MOVEMENT
COMMAND SECTION

44b
MAINTENANCE
POSITION MOVEMENT
DETERMINATION
SECTION

6
MOVEMENT
DIRECTION
INVERSION SECTION

7
INVERSION NUMBER
DETERMINATION
SECTION

8
INDIVIDUAL
CALCULATION
SECTION

9
FINAL
DETERMINATION
SECTION

44c
MOVEMENT
COMMAND SECTION

44d
ALIGNMENT POSITION
MOVEMENT
DETERMINATION
SECTION

GANTRY SLIDING
MECHANISM
CONTROL UNIT

44

45a
NON-DISCHARGE
DETECTION
STARTING SECTION

45b
NON-DISCHARGE
DATA PROCESSING
SECTION

45c
RECOVERY
OPERATION
COMMAND SECTION

45d
CAPPING COMMAND
SECTION

45e
CAPPING TIME
MANAGEMENT
SECTION

45f
CAPPING RELEASE
COMMAND SECTION

14
DETERMINATION
SECTION

MAINTENANCE
MECHANISM
CONTROL UNIT

45

46a
MOVEMENT
STARTING SECTION

46b
STOPPAGE POSITION
DETECTION SECTION

46c
SUCTION RELEASE
SECTION

46d
SUCTION COMMAND
SECTION

46e
MOVEMENT
STARTING SECTION

46f
STOPPAGE POSITION
DETECTION SECTION

46g
PREDETERMINED
POSITION STOPPAGE
DETERMINATION SECTION

SUBSTRATE
CARRYING
MECHANISM
CONTROL UNIT

46

47a
CARRYING-OUT
COMMAND SECTION

47b
CARRYING-OUT
DETERMINATION
SECTION

47c
CARRYING-IN
COMMAND SECTION

47d
CARRYING-IN
DETERMINATION
SECTION

SUBSTRATE
CARRYING-
IN/CARRYING-OUT
MECHANISM
CONTROL UNIT

47

ALIGNMENT
OPERATION
COMMAND CONTROL
UNIT ~49

# FIG.13

MOVE DROPLET DISCHARGE UNIT TO PRE-PROCESS NON-DISCHARGE DETECTOR — S21

PRE-PROCESS NON-DISCHARGE DETECTOR PERFORMS NON-DISCHARGE DETECTION WITH RESPECT TO HEAD NOZZLE — S22

DROPLET APPLICATION DEVICE IS USED TO PERFORM APPLICATION PROCESS WITH RESPECT TO SUBSTRATE — S23

MOVE DROPLET DISCHARGE UNIT TO POST-PROCESS NON-DISCHARGE DETECTOR — S24

POST-PROCESS NON-DISCHARGE DETECTOR PERFORMS NON-DISCHARGE DETECTION WITH RESPECT TO HEAD NOZZLE — S25

S26
PRE-PROCESS NON-DISCHARGE DETECTION RESULT AND POST-PROCESS NON-DISCHARGE DETECTION RESULT ARE COMPARED WITH EACH OTHER

NOT IDENTICAL

IDENTICAL

S27
DETERMINED AS BEING NORMAL

S28
DETERMINED AS BEING ABNORMAL

TO SUBSEQUENT STEP

TO SUBSTRATE REPAIRING STEP

## FIG.14

PROCESS OF (N-1) th SUBSTRATE IS COMPLETED — S51

COMMAND TO CARRY OUT (N-1) th SUBSTRATE — S64

NON-DISCHARGE DETECTION COMMAND — S52

SUBSTRATE-MOUNTING PLATE IS MOVED — S65

GANTRY UNIT IS MOVED TO NON-DISCHARGE DETECTION POSITION — S53

SUCTION OF SUBSTRATE IS RELEASED — S66

NON-DISCHARGE DETECTION WITH RESPECT TO (N-1) th SUBSTRATE IS PERFORMED — S54

(N-1) th SUBSTRATE IS CARRIED OUT — S67

NON-DISCHARGE NOZZLE INFORMATION IS OBTAINED — S55

NG n times

N th SUBSTRATE IS MOUNTED ON SUBSTRATE-MOUNTING PLATE — S68

DISCHARGE NOZZLE IS DETERMINED — S56

OK

NG — S57

N th SUBSTRATE IS FIXED BY SUCTION — S69

CAPPING COMMAND — S60

RECOVERY OPERATION COMMAND

S58 — RECOVERY OPERATION

S61 — STAND-BY FOR CAPPING

S59 — WIPING

APPARATUS STOPPAGE COMMAND — S62

SUBSTRATE-MOUNTING PLATE IS MOVED TO PREDETERMINED POSITION — S70

GANTRY UNIT IS MOVED TO ALIGNMENT POSITION — S63

ALIGNMENT OPERATION IS PERFORMED WITH RESPECT TO N th SUBSTRATE — S71

N th SUBSTRATE IS PROCESSED — S72

N = N + 1

## FIG.15

```
              ⋮
                              ┌─S31
┌─────────────────────────────────┐
│ (N-1) th SUBSTRATE IS PROCESSED │
└─────────────────────────────────┘
              │
              ▼               ┌─S32
┌─────────────────────────────────┐
│ FIRST NON-DISCHARGE DETECTION PERFORMED │
│ WITH RESPECT TO (N-1) th SUBSTRATE      │
└─────────────────────────────────┘
              │
              ▼               ┌─S33                                    ┌─S34
┌─────────────────────────────────┐        ┌──────────────────────────────────┐
│ LAST NON-DISCHARGE DETECTION PERFORMED │──▶│ NON-DISCHARGE NOZZLE INFORMATION A IS │
│ WITH RESPECT TO (N-1) th SUBSTRATE     │   │ STORED                                │
└─────────────────────────────────┘        └──────────────────────────────────┘
              │                                              ▲
              ▼               ┌─S35           ┌──────────────────┐  ┌──────────────┐
┌─────────────────────────────────┐           │ WHETHER N th     │  │ COMPARISON   │─S38
│ N th SUBSTRATE IS PROCESSED     │           │ SUBSTARTE IS GOOD OR │  └──────────────┘
└─────────────────────────────────┘           │ NOT IS DETERMINED │
              │                                └──────────────────┘
              ▼               ┌─S36                                    ┌─S37
┌─────────────────────────────────┐        ┌──────────────────────────────────┐
│ FIRST NON-DISCHARGE DETECTION PERFORMED │─▶│ NON-DISCHARGE NOZZLE INFORMATION B IS │
│ WITH RESPECT TO N th SUBSTRATE          │   │ STORED                                │
└─────────────────────────────────┘        └──────────────────────────────────┘
              │
              ▼               ┌─S39                                    ┌─S40
┌─────────────────────────────────┐        ┌──────────────────────────────────┐
│ LAST NON-DISCHARGE DETECTION PERFORMED │──▶│ NON-DISCHARGE NOZZLE INFORMATION C IS │
│ WITH RESPECT TO N th SUBSTRATE         │   │ STORED                                │
└─────────────────────────────────┘        └──────────────────────────────────┘
              │                                              ▲
              ▼               ┌─S41           ┌──────────────────┐  ┌──────────────┐
┌─────────────────────────────────┐           │ WHETHER N+1 th   │  │ COMPARISON   │─S44
│ (N+1) th SUBSTRATE IS PROCESSED │           │ SUBSTARTE IS GOOD OR │  └──────────────┘
└─────────────────────────────────┘           │ NOT IS DETERMINED │
              │                                └──────────────────┘
              ▼               ┌─S42                                    ┌─S43
┌─────────────────────────────────┐        ┌──────────────────────────────────┐
│ FIRST NON-DISCHARGE DETECTION PERFORMED │─▶│ NON-DISCHARGE NOZZLE INFORMATION D IS │
│ WITH RESPECT TO (N+1) th SUBSTRATE      │   │ STORED                                │
└─────────────────────────────────┘        └──────────────────────────────────┘
              ⋮
```

FIG.16

DROPLET DISCHARGE CONTROL UNIT ----50

INFORMATION INPUT
SECTION ⌐50a

CIRCULATING DEFECT REPAIRING
SEQUENCE PROCESSING SECTION ⌐50b

DATA INPUT SECTION ⌐50c

DETERMINATION
SECTION ⌐50d

ASSIGNMENT
DETERMINATION
SECTION ⌐10

ORDER DETERMINATION
SECTION ⌐50e

INK DISCHARGE
CONTROL SECTION ⌐50f

DROPLET DISCHARGE
UNIT ⌐3

46

# FIG.17

```
                    ┌──────────────┐
                    │    START     │
                    └──────┬───────┘
                           │
              ┌────────────────────────────┐
              │  INFORMATION IS OBTAINED    │── S81
              └────────────┬───────────────┘
                           │
                           ↓
              ┌────────────────────────────┐
         ┌───→│    DETERMINE START POINT    │── S82
         │    └────────────┬───────────────┘
         │                 │
         │                 ↓ ←──────────────────────┐
         │    ┌────────────────────────────┐        │
         │    │  Xt AND Yt ARE DETERMINED   │── S83  │
         │    └────────────┬───────────────┘        │
         │                 │                         │
         │    ┌────────────────────────────┐        │
         │    │  INK DISCHARGE TARGET IS    │── S84  │
         │    │       DETERMINED            │        │
         │    └────────────┬───────────────┘        │
         │                 │        S85             │
         │               ╱───╲                      │
         │             ╱       ╲      YES            │
         │           ╱ WHETHER OR ╲─────────────────┘
         │          ╱  NOT IT IS    ╲
         │          ╲ POSSIBLE TO DETERMINED ╱
         │           ╲ INK DISCHARGE TARGET ╱
         │             ╲       ╱
         │               ╲───╱
         │                 │ NO
         │                 │        S86
         │               ╱───╲
         │      NO     ╱       ╲
         └───────────╱ WHETHER OR ╲
                    ╱  NOT INK      ╲
                    ╲ CAN BE DISCHARGED TO ALL ╱
                     ╲ INK DISCHARGE TARGETS IS ╱
                      ╲   DETERMINED   ╱
                       ╲      ╱
                        ╲───╱
                          │ YES
              ┌────────────────────────────┐
              │     INK IS DISCHARGED       │── S87
              └────────────┬───────────────┘
                           │
                    ┌──────────────┐
                    │     END      │
                    └──────────────┘
```

47

FIG.18

FIG.19

EP 2 022 570 A1

FIG.20

FIG.21

(a)

47R 47G 47B

A3

100μm

(b)

47B
47G
47R

A3

300μm

EP 2 022 570 A1

FIG.22

FIG.23

12B   12G   12R

2

3B
58  3G
3R

47R   47G   47B

A3

EP 2 022 570 A1

53

## FIG.24

(a)

46a    46b    46c

4

3a    3b    3c

(b)

GANTRY
SCANNING
POSITION

T1    T2  T3  T4

REPAIRING TIME

FIG.25

(a)

(b)

FIG.26

(a)

25

23  25

(b)

25

23

25b  25a

FIG.27

(a)

RIGHT FILED
OF VIEW L

43a    43

43b    0.2mm

(b)

43

LEFT FILED
OF VIEW L

FIG.28

( a )

RIGHT FILED
OF VIEW H

43a

43

43b

( b )

LEFT FILED
OF VIEW H

43b

43

43a

# FIG.29

| SUBSTRATE-MOUNTING PLATE 17 | ALIGNMENT CAMERA 25 | HEAD GANTRY UNIT 4 |
|---|---|---|

COMMAND TO START ALIGNMENT —S1

CARRY IN SUBSTRATE —S2

MOVE TO PREDETERMINED POSITION —S3

MOVE TO ALIGNMENT POSITION ⌐S4

MOVE WIDE-FIELD SECTION 25a OF ALIGNMENT CAMERA 25 TO REFERENCE POSITION S5

TAKE IMAGE OF OUTER CIRCULAR RING 43a OF MARK ⌐S6

ROUGH ALIGNMENT ⌐S9

CALCULATE AMOUNT OF ALIGNMENT S7

MOVE SMALL-FIELD SECTION 25b OF ALIGNMENT CAMERA 25 TO REFERENCE POSITION S8

TAKE IMAGE OF INNER CIRCLE 43b OF MARK —S10

MAIN ALIGNMENT ⌐S12

CALCULATE AMOUNT OF ALIGNMENT —S11

TAKE IMAGE OF INNER CIRCLE 43b OF MARK —S13

CONFIRM ACCURACY —S14

FINISH ALIGNMENT —S15

FIG.30

(a)

(b)

FIG.31

(a)

(b)

FIG.32

FIG.33

# FIG.34

(a)

(b)

(c)

FIG.35

(a)

(b)

(c)

FIG.36

(a)

(b)

FIG.37

FIG.38

(a)

(b)

## INTERNATIONAL SEARCH REPORT

| | International application No. |
|---|---|
| | PCT/JP2007/059569 |

A. CLASSIFICATION OF SUBJECT MATTER
*B05C5/00*(2006.01)i, *G02B5/20*(2006.01)i

According to International Patent Classification (IPC) or to both national classification and IPC

B. FIELDS SEARCHED

Minimum documentation searched (classification system followed by classification symbols)
B05C5/00, B41J2/01-2/21, G02B5/20

Documentation searched other than minimum documentation to the extent that such documents are included in the fields searched
Jitsuyo Shinan Koho          1922-1996    Jitsuyo Shinan Toroku Koho   1996-2007
Kokai Jitsuyo Shinan Koho    1971-2007    Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-35173 A  (Sharp Corp.),<br>09 February, 2006 (09.02.06),<br>Par. Nos. [0059] to [0083]; Fig. 7<br>(Family: none) | 1,5<br>2,3,6<br>4 |
| Y<br>A | JP 3-217270 A  (Yamagata Casio Co., Ltd.),<br>25 September, 1991 (25.09.91),<br>Page 3, upper right column, line 16 to page 8,<br>upper right column, line 18; Fig. 6<br>(Family: none) | 2,3,6<br>4 |

☐  Further documents are listed in the continuation of Box C.          ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 August, 2007 (01.08.07) | Date of mailing of the international search report<br>14 August, 2007 (14.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/059569 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:
    The invention of claim 1 is the invention described in JP 2006-35173 A and makes no contribution over the prior art.
    This application includes the following inventions:
    Invention 1 (claims 2-4): the liquid-drop discharging and drawing device for discharging liquid drops according to a sequence determined based on a movement time period between discharge targets.
    Invention 2 (claims 5 and 6): the liquid-drop discharging and drawing device having a different movement amount for each direction reversal.
    (continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-6

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2007/059569 |

Continuation of Box No.III of continuation of first sheet(2)

Invention 3 (claim 7): the liquid-drop discharging and drawing device for discharging liquid drops by N number of liquid-drop discharging units to not less than (N + 1) number of portions to be repaired.

Invention 4 (claim 8): the liquid-drop discharging and drawing device for discharging liquid drops with the movement of the liquid-drop discharging unit along the sub-scan direction stopped.

Form PCT/ISA/210 (extra sheet) (April 2005)

**REFERENCES CITED IN THE DESCRIPTION**

**Patent documents cited in the description**

- JP 2003191462 A

- JP 2003066218 A